# EUROPEAN PATENT APPLICATION

(11) **EP 4 535 715 A1**
(43) Date of publication of application: **09.04.2025**
(21) Application number: 23870677.4
(22) Date of filing: 25.09.2023
(51) Int. Cl.: H04L 9/00, H04W 4/029

(54) **DEVICE DISCOVERY METHOD, AND RELATED APPARATUS AND SYSTEM**

(30) Priority: 30.09.2022 CN 202211214630
(71) Applicant: Huawei Technologies Co., Ltd., Shenzhen, Guangdong 518129 (CN)
(72) Inventor: PAN, Shiran, Shenzhen, Guangdong 518129 (CN); JIN, Yanhong, Shenzhen, Guangdong 518129 (CN); LIAO, Jianjun, Shenzhen, Guangdong 518129 (CN); ZHANG, Wenzhi, Shenzhen, Guangdong 518129 (CN)
(74) Representative: Goddar, Heinz J.
(86) International application number: PCT/CN2023/120947
(87) International publication number: WO 2024/067446

(57) **Abstract**

This application discloses a device discovery method, a related apparatus, and a system. An electronic device broadcasts a device identifier encrypted by using a privacy parameter. Among devices that receive broadcast content, only a device that establishes a privacy binding relationship with the electronic device learns of the privacy parameter and can decrypt the broadcast content, to obtain the device identifier of the electronic device. According to the method, a pseudonymized device identifier is broadcast, so that a malicious device cannot collect the device identifier from listened information, and listen and track a movement track of a user, thereby protecting privacy security of the device and the user.

## Description

This application claims priority to Chinese Patent Application No. 202211214630.X, filed with the China National Intellectual Property Administration on September 30, 2022 and entitled "DEVICE DISCOVERY METHOD, RELATED APPARATUS, AND SYSTEM", which is incorporated herein by reference in its entirety.

### TECHNICAL FIELD

This application relates to the field of terminal and communication technologies, and in particular, to a device discovery method, a related apparatus, and a system.

### BACKGROUND

To ensure connection security of a distributed system and implement secure transfer of user data between devices in a distributed scenario, after a trust relationship is established between devices, the trust relationship can be verified and then a secure connection channel is established.

During the establishment of the trust relationship, the devices exchange and record device identifiers of each other and information used to verify the trust relationship. When the trust relationship is used, user equipment first enters a communication range, and discovers a trusted device by transferring a device identifier of the user equipment and receiving a device identifier of another device. Then, the trust relationship is further verified, and the secure connection channel is established.

However, in a trust relationship discovery phase, any device entering the communication range may obtain the device identifier of the user equipment, and cases such as malicious listening and collection of the device identifier, and continuous listening and tracking may exist, causing a privacy risk. For example, a malicious device collects a device identifier of a user in public places such as a subway and a shopping mall, and connects these locations to form a movement track, to learn of a track of the user to achieve a tracking objective.

### SUMMARY

This application provides a device discovery method, a related apparatus, and a system, to prevent a malicious device from collecting a device identifier from listened information, and listening and tracking a movement track of a user, thereby protecting privacy security of a device and the user.

According to a first aspect, a device discovery method is provided, and is applied to a communication system. The communication system includes a first device, a second device, and a fifth device. The method may include: The first device broadcasts only a first identifier encrypted by using a privacy parameter, where the first identifier is a device identifier of the first device. The second device receives the encrypted first identifier broadcast by the first device, displays a first user interface, and displays the first identifier on the first user interface. The fifth device receives the encrypted first identifier broadcast by the first device, and displays the first user interface, where the displayed first user interface does not include the first identifier.

According to the method provided in the first aspect, the first device broadcasts only the first identifier encrypted by using the privacy parameter. This is equivalent to pseudonymizing the device identifier. Only a device that learns of the privacy parameter can discover the first device, and another device that does not learn of the privacy parameter cannot discover the first device. In this way, a malicious device cannot collect a device identifier of a user from listened information, and listen and track a movement track of the user, to protect privacy security of the device and the user, and avoid a privacy risk.

With reference to the first aspect, in some implementations, before broadcasting the first identifier encrypted by using the privacy parameter, the first device may send the privacy parameter to one or more devices, where the one or more devices include the second device but do not include the fifth device. Correspondingly, before displaying the first identifier on the first user interface, the second device decrypts the encrypted first identifier by using the privacy parameter, to obtain the first identifier. In this way, only a device that receives the privacy parameter sent by the first device (namely, a device that establishes a privacy binding relationship with the first device) can decrypt a pseudonymized device identifier to obtain a real device identifier, to discover the first device.

According to a second aspect, a device discovery method is provided, and is applied to a first device. The method may include: The first device encrypts a first identifier by using a privacy parameter, where the first identifier is a device identifier of the first device. The first device broadcasts only the encrypted first identifier.

For a technical effect of the method provided in the second aspect, refer to the technical effect of the first aspect.

With reference to the second aspect, in some implementations, before broadcasting the encrypted first identifier, the first device may send the privacy parameter to one or more devices, where the one or more devices include a second device but do not include a fifth device. In this way, only a device that receives the privacy parameter sent by the first device (namely, a device that establishes a privacy binding relationship with the first device) can decrypt a pseudonymized device identifier to obtain a real device identifier, to discover the first device.

With reference to the first aspect or the second aspect, in some implementations, the privacy parameter may be preset in the first device, or the privacy parameter may be generated by the first device based on one or more of the first identifier, a logged-in account, a digital certificate, or a pairing key.

With reference to a first implementation of the first aspect or a first implementation of the second aspect, in some implementations, the user may trigger, via a user interface provided by the first device, the first device to send the privacy parameter to the second device. Specifically, before the first device sends the privacy parameter to the one or more devices, the first device may display a second user interface, where device identifiers of the one or more devices discovered by the first device are displayed on the second user interface, and the device identifiers of the one or more devices include a device identifier of the second device; the first device receives a user operation performed on the device identifier of the second device, and displays a third user interface, where prompt information and a first control are displayed on the third user interface, and the prompt information prompts a user to perform privacy binding on the first device and the second device; and the first device receives a first operation performed on the first control.

With reference to the foregoing implementation, the privacy parameter sent by the first device to the second device may be carried in a privacy binding request sent by the first device to the second device after the first device receives the first operation. Alternatively, after the first device receives the first operation, the method further includes: The first device sends a privacy binding request to the second device, and the second device sends, to the first device, a feedback message used to agree with the privacy binding request, where the feedback message is used to trigger the first device to send the privacy parameter to the second device.

With reference to the first aspect or the second aspect, in some implementations, the first device may broadcast the encrypted first identifier only after enabling a first function. Specifically, before the first device broadcasts the encrypted first identifier, the first device detects a second operation for enabling the first function; and the first device enables the first function in response to the second operation, where the first function is used by the first device to broadcast the encrypted first identifier. In this way, the first device provides an entry for enabling the first function, so that the user can flexibly determine whether to enable the first function and in which case the first function is enabled.

With reference to the foregoing implementation, before detecting the first operation for enabling the first function, the first device may display a fourth user interface, where a second control is displayed on the fourth user interface, and the second operation includes a user operation performed on the second control.

With reference to the first aspect or the second aspect, in some implementations, the first device may alternatively enable the first function by default, or enable the first function in some specific conditions.

With reference to the first aspect or the second aspect, in some implementations, the first device may broadcast the first identifier before enabling the first function. In this way, before the first function is enabled, the first device may be discovered by all devices that listen to the broadcast, and after the first function is enabled, the first device can be discovered only by a device that learns of the privacy parameter of the first device and that is of the devices that listen to the broadcast.

With reference to the first aspect or the second aspect, in some implementations, after establishing a communication connection to the second device that discovers the first device, the first device may further interact with another device. Specifically, the following cases may be included.
1. After the first device is connected to the second device, another privacy binding device of the first device may preempt the second device.
   Specifically, after the first device broadcasts the encrypted first identifier, the method in the first aspect may further include: The first device establishes a communication connection to the second device; the first device receives a first verification request sent by the second device, where the first verification request indicates that the second device receives a connection request initiated by a fourth device; and when it is verified that the fourth device stores the privacy parameter of the first device, the first device sends a second message to the second device, where the second message indicates that the second device rejects the connection request.
2. After the first device is connected to the second device, if a non-privacy binding device of the first device attempts to connect to the second device, the connection is rejected.
   Specifically, after the first device broadcasts the encrypted first identifier, the method in the first aspect may further include: The first device establishes a communication connection to the second device; the first device receives a second verification request sent by the second device, where the second verification request indicates that the second device receives a connection request initiated by a fifth device; and when it is verified that the fifth device does not store the privacy parameter of the first device, the first device sends a second message to the second device, where the second message indicates that the second device rejects the connection request.
3. After the first device is connected to the second device, another device attempts to connect to the second device. After the user agrees, the another device may connect to the second device.
   Specifically, after the first device broadcasts the encrypted first identifier, the method in the first aspect may further include: The first device establishes a communication connection to the second device; the first device receives a third verification request sent by the second device, where the third verification request indicates that the second device receives a connection request initiated by a sixth device; the first device receives a user operation for agreeing with the connection request; and the first device sends a first message to the second device, where the first message indicates that the second device agrees with the connection request.
4. After the first device is connected to the second device, another device attempts to connect to the second device. After a plurality of attempts, the another device may connect to the second device.
   Specifically, after the first device broadcasts the encrypted first identifier, the method in the first aspect may further include: The first device establishes a communication connection to the second device; the first device receives a fourth verification request that is sent by the second device more than a preset quantity of times, where the fourth verification request indicates that the second device receives a connection request initiated by a sixth device; and the first device sends a first message to the second device, where the first message indicates that the second device agrees with the connection request.
5. After the first device is connected to the second device, the first device discovers another device, and may actively switch to connect the second device to the another device.

Specifically, after the first device broadcasts the encrypted first identifier, the method in the first aspect may further include: The first device establishes a communication connection to the second device; the first device discovers a sixth device; and the first device sends a switching instruction to the second device, where the switching instruction instructs the second device to disconnect the communication connection to the first device and establish a communication connection to the sixth device.

According to a third aspect, a device discovery method is provided, and is applied to a second device. The method includes: The second device receives a first identifier that is broadcast by a first device and that is encrypted by using a privacy parameter, where the first identifier is a device identifier of the first device; and the second device displays a first user interface, and displays the first identifier on the first user interface.

For a technical effect of the method provided in the third aspect, refer to the technical effect of the first aspect.

With reference to the third aspect, in some implementations, before receiving the first identifier that is broadcast by the first device and that is encrypted by using the privacy parameter, the second device may receive the privacy parameter sent by the first device. Before displaying the first identifier on the first user interface, the second device may decrypt the encrypted first identifier by using the privacy parameter, to obtain the first identifier.

With reference to the first aspect or the third aspect, in some implementations, after displaying the first user interface, the second device may establish a communication connection to the first device based on the first identifier.

With reference to the first aspect, the second aspect, or the third aspect, in some implementations, when the first device broadcasts the first identifier encrypted by using the privacy parameter, and the second device receives the first identifier that is encrypted by using the privacy parameter and broadcast by the first device, a used communication technology may include any one or more of the following: Wi-Fi P2P, Wi-Fi softAP, Wi-Fi LAN, BT, NFC, IR, ZigBee, UWB, or a cellular network. It can be learned that the first device may broadcast the pseudonymized device identifier to a nearby device, or may broadcast the pseudonymized device identifier to a remote device and a cloud device, so that the first device can be discovered by the nearby device, the remote device, or the cloud device.

According to a fourth aspect, a device discovery method is provided, and is applied to a communication system. The communication system includes a first device, a third device, and an eighth device. The method may include: The first device broadcasts only a first identifier encrypted by using a privacy parameter and a first strategy, where the first identifier is a device identifier of the first device. The third device receives the encrypted first identifier broadcast by the first device, displays a first user interface, and displays the first identifier on the first user interface. The eighth device receives the encrypted first identifier broadcast by the first device, and displays the first user interface, where the displayed first user interface does not include the first identifier.

According to the method provided in the fourth aspect, the first device broadcasts only the first identifier encrypted by using the privacy parameter and the first strategy. This is equivalent to pseudonymizing the device identifier. Only a device that learns of the privacy parameter and the first strategy can discover the first device, and another device that does not learn of the privacy parameter or does not learn of the first strategy cannot discover the first device. In this way, a malicious device cannot collect a device identifier of a user from listened information, and listen and track a movement track of the user, to protect privacy security of the device and the user, and avoid a privacy risk.

With reference to the fourth aspect, in some implementations, before the first device broadcasts the first identifier encrypted by using the privacy parameter and the first strategy, the method may further include: The first device sends the privacy parameter only to one or more second devices; and the first device sends the first strategy to only one or more devices, where the one or more devices include the third device but do not include the eighth device, the third device includes a device that meets a condition indicated by the first strategy and that is in the one or more second devices, and the eighth device includes a device other than the third device in the one or more second devices and a device other than the second device. Before the third device displays the first identifier on the first user interface, the method further includes: The third device decrypts the encrypted first identifier by using the privacy parameter and the first strategy, to obtain the first identifier.

In the foregoing implementation, only a device that complies with the first strategy in devices that receive the privacy parameter sent by the first device (namely, devices that establish a privacy binding relationship with the first device) can decrypt a pseudonymized device identifier to obtain a real device identifier, to discover the first device.

According to a fifth aspect, a device discovery method is provided, and is applied to a first device. The method may include: The first device encrypts a first identifier by using a privacy parameter and a first strategy, where the first identifier is a device identifier of the first device. The first device broadcasts only the encrypted first identifier.

For a technical effect of the method provided in the fifth aspect, refer to the technical effect of the fourth aspect.

With reference to the fifth aspect, in some implementations, before the first device broadcasts the encrypted first identifier, the method may further include: The first device sends the privacy parameter to only one or more second devices; and the first device sends the first strategy to only one or more devices, where the one or more devices include a third device but do not include an eighth device, the third device includes a device that meets a condition indicated by the first strategy and that is in the one or more second devices, and the eighth device includes a device other than the third device in the one or more second devices and a device other than the second device. In this way, only the third device that receives the privacy parameter and the first strategy that are sent by the first device can decrypt a pseudonymized device identifier to obtain a real device identifier, to discover the first device.

With reference to the fourth aspect or the fifth aspect, in some implementations, the privacy parameter may be preset in the first device, or the privacy parameter may be generated by the first device based on one or more of the first identifier, a logged-in account, a digital certificate, or a pairing key.

With reference to the fourth aspect or the fifth aspect, in some implementations, the first strategy indicates any one or more of the following: an account type, an account, a network type, a network, a location, a device type, a device, or a group.

With reference to the fourth aspect or the fifth aspect, in some implementations, the first strategy is preset by the first device, or is set by a user. When the user sets the first strategy, the user can flexibly control a visible range of an electronic device in each device, and select an exposure range of the electronic device, to protect privacy security of the electronic device and the user.

With reference to the fourth aspect or the fifth aspect, in some implementations, the first strategy corresponds to a first enabling condition, and the first enabling condition is met when the first device broadcasts the encrypted first identifier.

With reference to the foregoing implementation, the first enabling condition may be set by the user. The first enabling condition may include any one or more of the following: enabling time, an enabling location, and an accessed network.

With reference to the fourth aspect or the fifth aspect, in some implementations, the third device may be specifically any one of the following:
a device that meets a condition indicated by the first strategy in a part of scenarios;
a device that historically meets a condition indicated by the first strategy;
a device that meets a condition indicated by the first strategy when the first device is connected most recently; or
a device that currently meets a condition indicated by the first strategy.

With reference to a first implementation of the fourth aspect or a first implementation of the fifth aspect, in some implementations, the user may trigger, via a user interface provided by the first device, the first device to send the privacy parameter to the second device. For details, refer to related descriptions in the first aspect that the user may trigger, via a user interface provided by the first device, the first device to send the privacy parameter to the second device.

With reference to the fourth aspect or the fifth aspect, in some implementations, the first device may broadcast the encrypted first identifier only after enabling a first function. For a manner of enabling the first function by the first device, refer to the related descriptions in the first aspect.

With reference to the fourth aspect or the fifth aspect, in some implementations, the first device may broadcast the first identifier before enabling the first function. In this way, before the first function is enabled, the first device may be discovered by all devices that listen to the broadcast, and after the first function is enabled, the first device can be discovered only by a device that learns of the privacy parameter of the first device and the first strategy and that is of the devices that listen to the broadcast.

With reference to the fourth aspect or the fifth aspect, in some implementations, after establishing a communication connection to the third device that discovers the first device, the first device may further interact with another device. Specifically, the following cases may be included.
1. After the first device is connected to the third device, another privacy binding device that is of the first device and that complies with the first strategy may preempt the third device.
   Specifically, after the first device broadcasts the encrypted first identifier, the method in the first aspect may further include: The first device establishes a communication connection to the third device; the first device receives a fifth verification request sent by the third device, where the fifth verification request indicates that the third device receives a connection request initiated by a seventh device; and when it is verified that the seventh device stores the privacy parameter of the first device and the first strategy, the first device sends a second message to the third device, where the second message indicates that the third device rejects the connection request.
2. After the first device is connected to the third device, if a device that does not comply with the first strategy and/or a non-privacy binding device attempt/attempts to connect to the third device, the connection is rejected.
   Specifically, after the first device broadcasts the encrypted first identifier, the method in the first aspect may further include: The first device establishes a communication connection to the third device; the first device receives a sixth verification request sent by the third device, where the sixth verification request indicates that the third device receives a connection request initiated by an eighth device; and when it is verified that the eighth device does not store the privacy parameter of the first device and the first strategy, the first device sends a second message to the third device, where the second message indicates that the third device rejects the connection request.
3. After the first device is connected to the third device, another device attempts to connect to the third device. After the user agrees, the another device may connect to the third device.
   Specifically, after the first device broadcasts the encrypted first identifier, the method in the first aspect may further include: The first device establishes a communication connection to the third device; the first device receives a seventh verification request sent by the third device, where the seventh verification request indicates that the third device receives a connection request initiated by a ninth device; the first device receives a user operation for agreeing with the connection request; and the first device sends a first message to the third device, where the first message indicates that the third device agrees with the connection request.
4. After the first device is connected to the third device, another device attempts to connect to the third device. After a plurality of attempts, the another device may connect to the third device.
   Specifically, after the first device broadcasts the encrypted first identifier, the method in the first aspect may further include: The first device establishes a communication connection to the third device; the first device receives an eighth verification request that is sent by the third device more than a preset quantity of times, where the eighth verification request indicates that the third device receives a connection request initiated by a ninth device; and the first device sends a first message to the third device, where the first message indicates that the third device agrees with the connection request.
5. After the first device is connected to the third device, the first device discovers another device, and may actively switch to connect the third device to the another device.

Specifically, after the first device broadcasts the encrypted first identifier, the method in the first aspect may further include: The first device establishes a communication connection to the third device; the first device discovers a ninth device; and the first device sends a switching instruction to the third device, where the switching instruction instructs the third device to disconnect the communication connection to the first device and establish a communication connection to the ninth device.

According to a sixth aspect, a device discovery method is provided, and is applied to a third device. The method may include: The third device receives a first identifier that is broadcast by a first device and that is encrypted by using a privacy parameter and an enabled first strategy, where the first identifier is a device identifier of the first device; and the third device displays a first user interface, and displays the first identifier on the first user interface.

For a technical effect of the method provided in the sixth aspect, refer to the technical effect of the fourth aspect.

With reference to the fourth aspect, in some implementations, before receiving the first identifier that is broadcast by the first device and that is encrypted by using the privacy parameter and the enabled first strategy, the third device may receive the privacy parameter and the first strategy that are sent by the first device. Before displaying the first identifier on the first user interface, the third device may decrypt the encrypted first identifier by using the privacy parameter and the first strategy, to obtain the first identifier.

With reference to the fourth aspect or the sixth aspect, in some implementations, after displaying the first user interface, the third device may establish a communication connection to the first device based on the first identifier.

With reference to the fourth aspect, the fifth aspect, or the sixth aspect, in some implementations, when the first device broadcasts the first identifier encrypted by using the privacy parameter and the first strategy, and the second device receives the first identifier that is encrypted by using the privacy parameter and the first strategy and broadcast by the first device, a used communication technology may include any one or more of the following: Wi-Fi P2P, Wi-Fi softAP, Wi-Fi LAN, BT, NFC, IR, ZigBee, UWB, or a cellular network. It can be learned that the first device may broadcast a pseudonymized device identifier to a nearby device, or may broadcast the pseudonymized device identifier to a remote device and a cloud device, so that the first device can be discovered by the nearby device, the remote device, or the cloud device.

According to a seventh aspect, an electronic device is provided, including a memory and one or more processors. The memory is coupled to the one or more processors, the memory is configured to store computer program code, the computer program code includes computer instructions, and the one or more processors invoke the computer instructions, so that the electronic device is enabled to perform the method according to any one of the implementations of the second aspect or the fifth aspect.

According to an eighth aspect, an electronic device is provided, including a memory and one or more processors. The memory is coupled to the one or more processors, the memory is configured to store computer program code, the computer program code includes computer instructions, and the one or more processors invoke the computer instructions, so that the electronic device is enabled to perform the method according to any one of the implementations of the third aspect or the sixth aspect.

According to a ninth aspect, a communication system is provided, including a first device and a second device, where the first device is configured to perform the method according to any one of the second aspect or the implementations of the second aspect, and the second device is configured to perform the method according to any one of the fifth aspect or the implementations of the fifth aspect.

According to a tenth aspect, a communication system is provided, including a first device and a third device, where the first device is configured to perform the method according to any one of the third aspect or the implementations of the third aspect, and the second device is configured to perform the method according to any one of the sixth aspect or the implementations of the sixth aspect.

According to an eleventh aspect, a computer-readable storage medium is provided, including instructions. When the instructions are run on an electronic device, the electronic device is enabled to perform the method according to any one of the second aspect or the implementations of the second aspect, any one of the third aspect or the implementations of the third aspect, any one of the fifth aspect or the implementations of the fifth aspect, or any one of the sixth aspect or the implementations of the sixth aspect.

According to a twelfth aspect, a computer program product is provided. When the computer program product runs on a computer, the computer is enabled to perform the method according to any one of the second aspect or the implementations of the second aspect, any one of the third aspect or the implementations of the third aspect, any one of the fifth aspect or the implementations of the fifth aspect, or any one of the sixth aspect or the implementations of the sixth aspect.

According to a thirteenth aspect, a chip system is provided. The chip system includes at least one processor, to implement the method according to any one of the second aspect or the implementations of the second aspect, any one of the third aspect or the implementations of the third aspect, any one of the fifth aspect or the implementations of the fifth aspect, or any one of the sixth aspect or the implementations of the sixth aspect.

According to the technical solutions provided in this application, a pseudonymized device identifier is broadcast, so that a malicious device cannot collect a device identifier from listened information, and listen and track a movement track of a user, to protect privacy security of a device and the user.

### BRIEF DESCRIPTION OF DRAWINGS

FIG. 1 is a diagram of a structure of a communication system 10 according to an embodiment of this application;
FIG. 2A is a block diagram of a hardware structure of an electronic device according to an embodiment of this application;
FIG. 2B and FIG. 2C show software architectures of an electronic device according to an embodiment of this application;
FIG. 3A to FIG. 3G show a group of user interfaces related when a mobile phone 100 establishes a privacy binding relationship with a PC 102;
FIG. 3H to FIG. 3W show a group of user interfaces related when a mobile phone 100 enables a "privacy discovery" function and configures a privacy discovery strategy;
FIG. 4A to FIG. 4D show an example of a group of user interfaces related when a mobile phone 100 upgrades a common binding relationship with a smart speaker 109 to a privacy binding relationship;
FIG. 5A and FIG. 5B show an example of another group of user interfaces related when a mobile phone 100 enables a "privacy discovery" function and configures a privacy discovery strategy;
FIG. 5C and FIG. 5D show an example of a group of user interfaces related when a mobile phone 100 enables a "privacy discovery" function and configures a privacy discovery strategy for a Bluetooth headset 106;
FIG. 6A to FIG. 6E show an example of a group of user interfaces related when a mobile phone 100 broadcasts a pseudonymized device identifier after enabling a "privacy discovery" function;
FIG. 7A to FIG. 7C show an example of a scenario and user interfaces related when a Bluetooth headset 106 broadcasts a pseudonymized device identifier after enabling a "privacy discovery" function;
FIG. 8A and FIG. 8B show an example of user interfaces related when a privacy parameter and a privacy discovery strategy are shared;
FIG. 8C to FIG. 8E show an example of user interfaces related when a mobile phone 103 is connected to a privacy binding device of a mobile phone 100;
FIG. 9A and FIG. 9B are a flowchart of a device discovery method according to an embodiment of this application; and
FIG. 10A and FIG. 10B show examples of device discovery scenarios.

### DESCRIPTION OF EMBODIMENTS

The following clearly and completely describes the technical solutions in embodiments of this application with reference to accompanying drawings. In descriptions of embodiments of this application, "/" means "or" unless otherwise specified. For example, A/B may represent A or B. In this specification, "and/or" describes only an association relationship between associated objects and represents that three relationships may exist. For example, A and/or B may represent the following three cases: Only A exists, both A and B exist, and only B exists. In addition, in descriptions of embodiments of this application, "a plurality of" means two or more.

The terms "first" and "second" mentioned below are merely intended for description, and shall not be understood as an indication or implication of relative importance or implicit indication of a quantity of indicated technical features. Therefore, a feature limited by "first" or "second" may explicitly or implicitly include one or more features. In the descriptions of embodiments of this application, unless otherwise specified, "a plurality of" means two or more.

A term "user interface (user interface, UI)" in the following embodiments of this application is a medium interface for interaction and information exchange between an application or an operating system and a user, and implements conversion between an internal form of information and a form acceptable to the user. The user interface is source code written in a specific computer language like Java or an extensible markup language (extensible markup language, XML). Interface source code is parsed and rendered on an electronic device, and is finally presented as content that can be recognized by the user. A common representation form of the user interface is a graphical user interface (graphical user interface, GUI), which is a user interface that is displayed in a graphical manner and that is related to a computer operation. The user interface may be a visual interface element like a text, an icon, a button, a menu, a tab, a text box, a dialog box, a status bar, a navigation bar, or a Widget that is displayed on a display of the electronic device.

The following embodiments of this application provide a device discovery method, a related apparatus, and a system. In the method, a trusted device of an electronic device may store a privacy parameter of the electronic device, to establish a privacy binding relationship with the electronic device. The electronic device may encrypt a device identifier by using the privacy parameter, and then broadcast an encrypted device identifier. After other devices receive the encrypted device identifier, only a device that establishes a privacy binding relationship with the electronic device can obtain the corresponding device identifier through decryption by using the same privacy parameter, to discover the electronic device.

According to the method, the electronic device pseudonymizes the device identifier, and only the device that establishes the privacy binding relationship with the electronic device can discover the electronic device, and then can establish a connection to and communicate with the electronic device. According to the method, the device identifier that can be originally tracked is pseudonymized, and the pseudonymized device identifier can be tracked by only a part of devices. Therefore, a malicious device cannot collect a device identifier of a user from listened information, and listen and track a movement track of the user, to avoid a privacy risk.

In some implementations, the electronic device may establish privacy binding relationships with a plurality of devices. The user may configure and enable a privacy discovery strategy. The privacy discovery strategy indicates which devices in devices that establish the privacy binding relationships with the electronic device can discover the electronic device. Then, the electronic device may encrypt the device identifier based on the privacy discovery strategy enabled by the user and the privacy parameter, and then broadcast the encrypted device identifier. In this way, only a device that establishes a privacy binding relationship with the electronic device and learns of the privacy discovery strategy enabled by the electronic device can discover the electronic device.

According to the privacy discovery strategy, a part of devices may be selected from privacy binding devices to discover the electronic device, and an exposure range of the electronic device can be controlled. In addition, the user can flexibly configure the privacy discovery strategy, so that the user can control a visible range of the electronic device in each device, and select an exposure range of the electronic device, to protect privacy security of the electronic device and the user.

In embodiments of this application, the encrypted device identifier may also be referred to as a pseudonymized device identifier.

In the following embodiments of this application, a device associated with an electronic device may include the following two types: a trusted device and a privacy binding device.

A trusted device of an electronic device is a device that is bound to the electronic device and that establishes a binding relationship with the electronic device. The binding relationship may also be referred to as a common binding relationship. The trusted device may also be referred to as a common binding device. If an electronic device stores a device identifier and a trust credential of another electronic device, and the another electronic device also stores a device identifier and a trust credential of the electronic device, the two electronic devices are trusted devices of each other. The trust credential may be information that proves an identity of the electronic device, such as a digital certificate, a public key, or a symmetric key.

A privacy binding device of an electronic device is an electronic device that is bound to the electronic device and that stores a privacy parameter of the electronic device, to establish a privacy binding relationship. In other words, a privacy binding device of an electronic device is a trusted device that stores a privacy parameter of the electronic device. It is equivalent to that a trusted device of an electronic device may be a privacy binding device, or may not be a privacy binding device but a common binding device; and a privacy binding device of an electronic device is definitely a trusted device. The privacy parameter may be a key.

The following first describes a communication system provided in embodiments of this application.

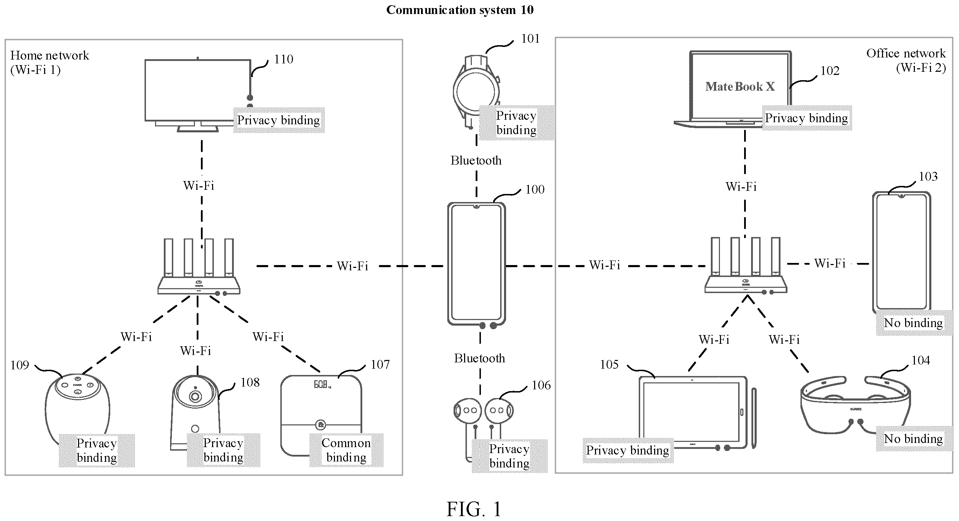

FIG. 1 is a diagram of a structure of a communication system 10 according to an embodiment of this application.

As shown in FIG. 1, the communication system 10 includes a plurality of electronic devices.

The plurality of electronic devices in the communication system 10 may be of various types. This is not limited in embodiments of this application. The plurality of electronic devices may include intelligent devices such as a mobile phone, a tablet computer, a desktop computer, a laptop computer, a handheld computer, a notebook computer, a smart screen, a wearable device (for example, a smartwatch), a headset, an augmented reality (augmented reality, AR) device, a virtual reality (virtual reality, VR) device, an artificial intelligence (artificial intelligence, AI) device, a head unit, a smart headset, a game console, and a digital camera, may further include Internet of things (Internet of things, IoT) devices or smart home devices such as a smart speaker, a smart lamp, a smart air conditioner, a water heater, a kettle, an oven, a coffee maker, a camera, a doorbell, and a millimeter wave sensor, and may further include office devices such as a printer, a scanner, a fax machine, a copier, and a projector. This is not limited thereto. The plurality of electronic devices in the communication system 10 may further include non-portable terminal devices such as a laptop (laptop) computer having a touch-sensitive surface or a touch panel, and a desktop computer having a touch-sensitive surface or a touch panel.

The communication system 10 may include movable electronic devices such as a mobile phone, a tablet computer, and a smart band, or may include immovable devices such as a smart screen, a smart lamp, and a smart air conditioner.

The communication system 10 may include electronic devices produced by a same manufacturer, or may include electronic devices produced by different manufacturers. This is not limited in embodiments of this application.

In embodiments of this application, communication systems in different scenarios may include different devices. For example, the scenario may include a smart home scenario, a sports and health scenario, an audio and video entertainment scenario, a smart office scenario, or a smart travel scenario. For example, as shown in FIG. 1, the smart home scenario may include a smart screen 110, a wireless router, a smart speaker 109, a camera 108, and a body fat scale 107. The smart office scenario may include a personal computer (personal computer, PC) 102, a wireless router, a tablet computer 105, VR glasses 104, and a mobile phone 103. A mobile phone 100, the PC 102, the tablet computer 105, the VR glasses 104, the mobile phone 103, a smartwatch 101, a Bluetooth headset 106, and the like may join the smart home scenario or the smart office scenario as a user moves.

The plurality of electronic devices in the communication system 10 may include intelligent devices configured with a software operating system (operating system, OS), such as a mobile phone, a smart screen, and a computer, or may include non-intelligent devices not configured with an OS, such as a water heater, a kettle, and a body fat scale. Different electronic devices may be configured with different OSs, including but not limited to Harmony OS^{®}, Android^{®}, iOS^{®}, Windows^{®}, Linux^{®}, and the like. All electronic devices may alternatively be configured with a same software operating system, for example, all may be configured with Harmony OS^{®}.

An electronic device in the communication system 10 may be configured to: send a trust credential of the electronic device to a part of or all other electronic devices in the communication system 10, and receive a trust credential of another electronic device, to establish a binding relationship with the another electronic device. The another electronic device that establishes the binding relationship with the electronic device is a trusted device of the electronic device.

An electronic device in the communication system 10 may be configured to send a trust credential and a privacy parameter of the electronic device to a part of or all other electronic devices in the communication system 10, to establish a privacy binding relationship with another electronic device. The another electronic device that establishes the privacy binding relationship with the electronic device is a privacy binding device of the electronic device.

For example, as shown in FIG. 1, the mobile phone 100 is used as an example. Devices that establish a common binding relationship rather than a privacy binding relationship with the mobile phone 100 include the body fat scale 107 and the VR glasses 104, and devices that establish a privacy binding relationship with the mobile phone 100 include the smart screen 110, the smart speaker 109, the camera 108, the PC 102, the tablet computer 105, the smartwatch 101, and the Bluetooth headset 106. There is no binding relationship between the mobile phone 100 and the mobile phone 103.

An electronic device in the communication system 10 may be configured to: encrypt a device identifier by using a privacy parameter, and then broadcast the encrypted device identifier. In this way, after other devices receive the encrypted device identifier, only a device that establishes a privacy binding relationship with the electronic device can obtain the corresponding device identifier through decryption by using the same privacy parameter, to discover the electronic device.

For example, after the mobile phone 100 enters coverage of a wireless network named Wi-Fi 1, the smart screen 110, the smart speaker 109, and the camera 108 in the network can discover the mobile phone 100, but the body fat scale cannot discover the mobile phone 100. For another example, after the mobile phone 100 enters coverage of a wireless network named Wi-Fi 2, the PC 102 and the tablet computer 105 in the network can discover the mobile phone 100, but the mobile phone 103 and the VR glasses 104 cannot discover the mobile phone 100.

In some implementations, the electronic device in the communication system 10 may be further configured to: receive a privacy discovery strategy configured by the user, synchronize the enabled privacy discovery strategy to another device that complies with the strategy, encrypt the device identifier based on the enabled privacy discovery strategy and the foregoing privacy parameter, and then broadcast the encrypted device identifier. In this way, only a device that establishes a privacy binding relationship with the electronic device and learns of the privacy discovery strategy enabled by the electronic device can discover the electronic device.

After the electronic device is discovered by another device, the another device may establish a connection to and communicate with the electronic device.

A communication technology used when the electronic device in the communication system 10 and another electronic device discover each other, and the electronic device establishes a connection to and communicates with another device that can discover the electronic device may include any one or more of the following: a wireless local area network (wireless local area network, WLAN), a wireless fidelity direct (Wi-Fi direct)/wireless fidelity peer-to-peer (Wi-Fi peer-to-peer, Wi-Fi P2P), Bluetooth (Bluetooth, BT), near field communication (near field communication, NFC), infrared (infrared, IR), ZigBee (ZigBee), ultra wideband (ultra wideband, UWB), a hotspot, a Wi-Fi softAP, a cellular network, a wired technology, a remote connection technology, or the like. The Bluetooth may be classic Bluetooth or Bluetooth low energy (Bluetooth low energy, BLE).

For example, the electronic device may broadcast the device identifier of the electronic device to another device in a same wireless local area network by using the wireless local area network (WLAN). For another example, the electronic device may broadcast the device identifier of the electronic device by using a short-range communication technology like BT or NFC. For another example, the electronic device may broadcast the device identifier of the electronic device by using a cellular network or a wide area network technology.

In embodiments of this application, a plurality of different communication manners may exist in a communication system. For example, as shown in FIG. 1, the mobile phone 100 may communicate with the smartwatch and the Bluetooth headset 106 by using Bluetooth, and may communicate with the smart screen 110 by using Wi-Fi. Devices in the smart home scenario may communicate with each other by using a wireless network named Wi-Fi 1, and devices in the smart office scenario may communicate with each other by using a wireless network named Wi-Fi 2.

It can be learned that electronic devices in the communication system 10 may discover another nearby electronic device, or may discover another remote electronic device. The electronic devices may perform short-range communication or long-range communication. In other words, the electronic devices in the communication system 10 may be located in a same physical space, or may be located in different physical spaces.

The communication system 10 shown in FIG. 1 may also be referred to as a distributed system.

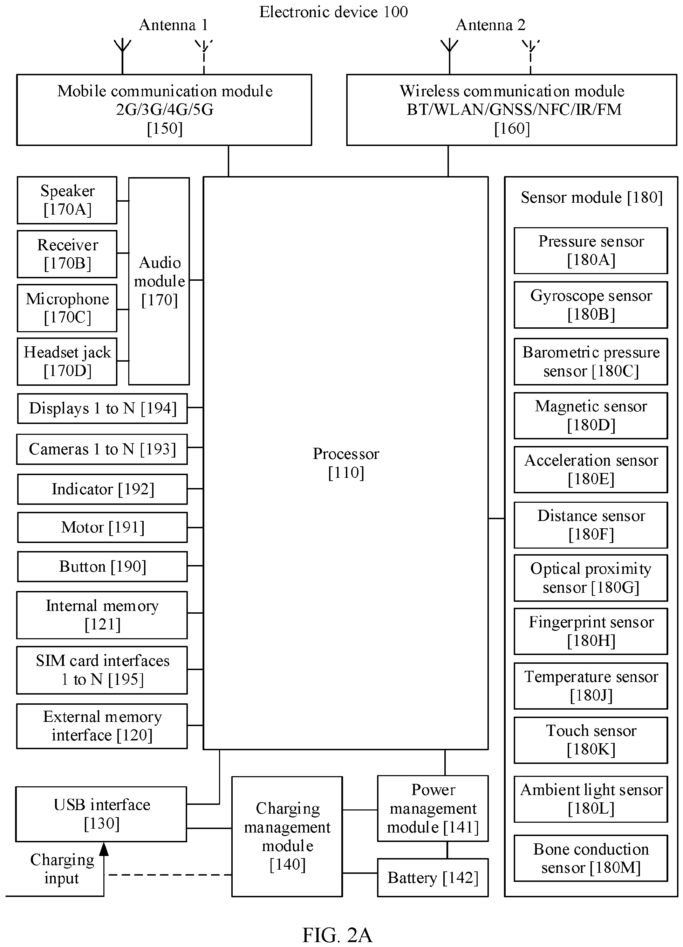

FIG. 2A is a diagram of a structure of the electronic device 100. The electronic device 100 may be any electronic device in the communication system 10.

As shown in FIG. 2A, the electronic device 100 may include a processor 110, an external memory interface 120, an internal memory 121, a universal serial bus (universal serial bus, USB) interface 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a button 190, a motor 191, an indicator 192, a camera 193, a display 194, a subscriber identification module (subscriber identification module, SIM) card interface 195, and the like. The sensor module 180 may include a pressure sensor 180A, a gyroscope sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, a bone conduction sensor 180M, and the like.

It may be understood that the structure shown in embodiments of this application does not constitute a specific limitation on the electronic device 100. In some other implementations of this application, the electronic device 100 may include more or fewer components than those shown in the figure, or combine some components, or split some components, or have different component arrangements. The components shown in the figure may be implemented by using hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a video codec, a digital signal processor (digital signal processor, DSP), a baseband processor, a neural-network processing unit (neural-network processing unit, NPU), and/or the like. Different processing units may be independent components, or may be integrated into one or more processors.

The controller may generate an operation control signal based on an instruction operation code and a time sequence signal, to complete control of instruction reading and instruction execution.

A memory may be further disposed in the processor 110, and is configured to store instructions and data. In some implementations, the memory in the processor 110 is a cache memory. The memory may store instructions or data just used or cyclically used by the processor 110. If the processor 110 needs to use the instructions or the data again, the processor 110 may directly invoke the instructions or the data from the memory. This avoids repeated access, reduces waiting time of the processor 110, and improves system efficiency.

A wireless communication function of the electronic device 100 may be implemented through the antenna 1, the antenna 2, the mobile communication module 150, the wireless communication module 160, the modem processor, the baseband processor, and the like.

The antenna 1 and the antenna 2 are configured to transmit and receive an electromagnetic wave signal. Each antenna in the electronic device 100 may be configured to cover one or more communication frequency bands. Different antennas may be further multiplexed, to improve antenna utilization. For example, the antenna 1 may be multiplexed as a diversity antenna of a wireless local area network. In some other implementations, the antenna may be used in combination with a tuning switch.

The mobile communication module 150 may provide a wireless communication solution that is applied to the electronic device 100 and that includes 2G/3G/4G/5G or the like. The mobile communication module 150 may include at least one filter, a switch, a power amplifier, a low noise amplifier (low noise amplifier, LNA), and the like. The mobile communication module 150 may receive an electromagnetic wave through the antenna 1, perform processing such as filtering or amplification on the received electromagnetic wave, and transmit the electromagnetic wave to the modem processor for demodulation. The mobile communication module 150 may further amplify a signal modulated by the modem processor, and convert the signal into an electromagnetic wave for radiation through the antenna 1. In some implementations, at least some functional modules of the mobile communication module 150 may be disposed in the processor 110. In some implementations, at least some functional modules of the mobile communication module 150 may be disposed in a same device as at least some modules of the processor 110.

The modem processor may include a modulator and a demodulator. The modulator is configured to modulate a to-be-sent low-frequency baseband signal into a medium-high frequency signal. The demodulator is configured to demodulate a received electromagnetic wave signal into a low-frequency baseband signal. Then, the demodulator transmits the low-frequency baseband signal obtained through demodulation to the baseband processor for processing. The low-frequency baseband signal is processed by the baseband processor and then transmitted to the application processor. The application processor outputs a sound signal through an audio device (which is not limited to the speaker 170A, the receiver 170B, or the like), or displays an image or a video through the display 194. In some implementations, the modem processor may be an independent component. In some other implementations, the modem processor may be independent of the processor 110, and is disposed in a same device as the mobile communication module 150 or another functional module.

The wireless communication module 160 may provide a wireless communication solution that is applied to the electronic device 100, and that includes a wireless local area network (wireless local area network, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), a near field communication (near field communication, NFC) technology, an infrared (infrared, IR) technology, or the like. The wireless communication module 160 may be one or more components integrating at least one communication processing module. The wireless communication module 160 receives an electromagnetic wave through the antenna 2, performs demodulation and filtering processing on an electromagnetic wave signal, and sends a processed signal to the processor 110. The wireless communication module 160 may further receive a to-be-sent signal from the processor 110, perform frequency modulation and amplification on the signal, and convert the signal into an electromagnetic wave for radiation through the antenna 2.

In some implementations, in the electronic device 100, the antenna 1 and the mobile communication module 150 are coupled, and the antenna 2 and the wireless communication module 160 are coupled, so that the electronic device 100 can communicate with a network and another device by using a wireless communication technology. The wireless communication technology may include a global system for mobile communications (global system for mobile communications, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-SCDMA), long term evolution (long term evolution, LTE), BT, a GNSS, a WLAN, NFC, FM, an IR technology, and/or the like. The GNSS may include a global positioning system (global positioning system, GPS), a global navigation satellite system (global navigation satellite system, GLONASS), a BeiDou navigation satellite system (BeiDou navigation satellite system, BDS), a quasi-zenith satellite system (quasi-zenith satellite system, QZSS), and/or a satellite based augmentation system (satellite based augmentation system, SBAS).

The electronic device 100 implements a display function through the GPU, the display 194, the application processor, and the like. The GPU is a microprocessor for image processing, and is connected to the display 194 and the application processor. The GPU is configured to: perform mathematical and geometric calculation, and render an image. The processor 110 may include one or more GPUs that execute program instructions to generate or change display information.

The display 194 is configured to display an image, a video, and the like. The display 194 includes a display panel. The display panel may be a liquid crystal display (liquid crystal display, LCD). The display panel may be an organic light-emitting diode (organic light-emitting diode, OLED), an active-matrix organic light emitting diode (active-matrix organic light emitting diode, AMOLED), a flexible light-emitting diode (flexible light-emitting diode, FLED), a mini-LED, a micro-LED, a micro-OLED, a quantum dot light emitting diode (quantum dot light emitting diode, QLED), or the like. In some implementations, the electronic device may include one or N displays 194, where N is a positive integer greater than 1.

The electronic device 100 may implement an image shooting function through the ISP, the camera 193, the video codec, the GPU, the display 194, the application processor, and the like.

The internal memory 121 may include one or more random access memories (random access memories, RAMs) and one or more nonvolatile memories (nonvolatile memories, NVMs).

The external memory interface 120 may be configured to connect to an external nonvolatile memory, to expand a storage capability of the electronic device 100. The external nonvolatile memory communicates with the processor 110 through the external memory interface 120, to implement a data storage function. For example, files such as music and a video are stored in the external nonvolatile memory.

The touch sensor 180K is also referred to as a "touch component". The touch sensor 180K may be disposed on the display 194. A touchscreen formed by the touch sensor 180K and the display 194 is also referred to as a "touch screen". The touch sensor 180K is configured to detect a touch operation performed on or near the touch sensor 180K. The touch sensor may transfer the detected touch operation to the application processor to determine a type of the touch event. A visual output related to the touch operation may be provided through the display 194. In some other implementations, the touch sensor 180K may alternatively be disposed on a surface of the electronic device 100, at a position different from that of the display 194.

The button 190 includes a power button, a volume button, and the like. The button 190 may be a mechanical button, or may be a touch button. The electronic device 100 may receive a button input, and generate a button signal input related to a user setting and function control of the electronic device 100.

The motor 191 may generate a vibration prompt. The motor 191 may be configured to provide an incoming call vibration prompt and a touch vibration feedback. For example, touch operations performed on different applications (for example, photographing and audio playing) may correspond to different vibration feedback effects. The motor 191 may also correspond to different vibration feedback effects for touch operations performed on different areas of the display 194. Different application scenarios (for example, a time reminder, information receiving, an alarm clock, and a game) may also correspond to different vibration feedback effects. A touch vibration feedback effect may be further customized.

The indicator 192 may be an indicator light, and may be configured to indicate a charging status and a power change, or may be configured to indicate a message, a missed call, a notification, and the like.

The device discovery method in this application is applied to a communication system that includes a device and another device that discovers the device. In the following embodiments of this application, the device may be referred to as a first device, and the another device that can discover the device is referred to as a second device.

When the discovered first device is implemented as the electronic device 100 shown in FIG. 2A:

In some implementations, the mobile communication module 150 or the wireless communication module 160 may be configured to: send a trust credential of the first device to a part of or all other electronic devices in the communication system 10, and receive a trust credential of another electronic device, to support establishment of a binding relationship between the first device and the another electronic device. The memory 121 may be configured to store the binding relationship between the first device and the another electronic device. The stored binding relationship includes a device identifier and a trust credential of the another device.

In some implementations, the mobile communication module 150 or the wireless communication module 160 may be configured to send a trust credential and a privacy parameter of the first device to a part of or all other electronic devices in the communication system 10 (for example, the second device), to support establishment of a privacy binding relationship between the first device and another electronic device (for example, the second device). The memory 121 may be configured to store the privacy binding relationship between the first device and the another electronic device.

In some implementations, the processor 110 is configured to encrypt the device identifier by using the privacy parameter, and then the mobile communication module 150 or the wireless communication module 160 is further configured to broadcast the encrypted device identifier.

In some implementations, the display 194 or another input module may be configured to receive a privacy discovery strategy configured by a user, and the memory 121 may be configured to store the privacy discovery strategy configured by the user. The mobile communication module 150 or the wireless communication module 160 may be further configured to synchronize the privacy discovery strategy enabled by the first device to another device that complies with the strategy. The processor 110 is configured to encrypt the device identifier based on the enabled privacy discovery strategy and the privacy parameter. Then, the mobile communication module 150 or the wireless communication module 160 may be further configured to broadcast the encrypted device identifier.

The display 194 may be further configured to display a user interface that is displayed on the first device and that is provided in a subsequent embodiment.

The mobile communication module 150 or the wireless communication module 160 is further configured to establish a connection to and communicate with the second device that discovers the first device.

When the second device that discovers the first device is implemented as the electronic device 100 shown in FIG. 2A:

In some implementations, the mobile communication module 150 or the wireless communication module 160 may be configured to receive the trust credential and the privacy parameter of the first device, to support establishment of a privacy binding relationship between the second device and the first device. The memory 121 may be configured to store the privacy binding relationship between the second device and the first device.

In some implementations, the mobile communication module 150 or the wireless communication module 160 is further configured to receive the encrypted device identifier broadcast by the first device, and then the processor 110 is configured to perform decryption processing on the encrypted device identifier by using the privacy parameter, to obtain the device identifier of the first device.

In some implementations, the mobile communication module 150 or the wireless communication module 160 is further configured to receive the privacy discovery strategy sent by the first device, and the memory 121 is configured to store the privacy discovery strategy. The mobile communication module 150 or the wireless communication module 160 is further configured to receive the encrypted device identifier broadcast by the first device, and then the processor 110 is configured to perform decryption processing on the encrypted device identifier based on the privacy discovery strategy and the privacy parameter, to obtain the device identifier of the first device.

The mobile communication module 150 or the wireless communication module 160 is further configured to establish a connection to and communicate with the first device discovered by the second device.

The display 194 may be further configured to display a user interface that is displayed on the first device and that is provided in a subsequent embodiment.

A software system of the electronic device 100 may use a layered architecture, an eventdriven architecture, a microkernel architecture, a micro service architecture, or a cloud architecture. In embodiments of this application, a mobile operating system with a layered architecture is used as an example to illustrate a software structure of the electronic device 100.

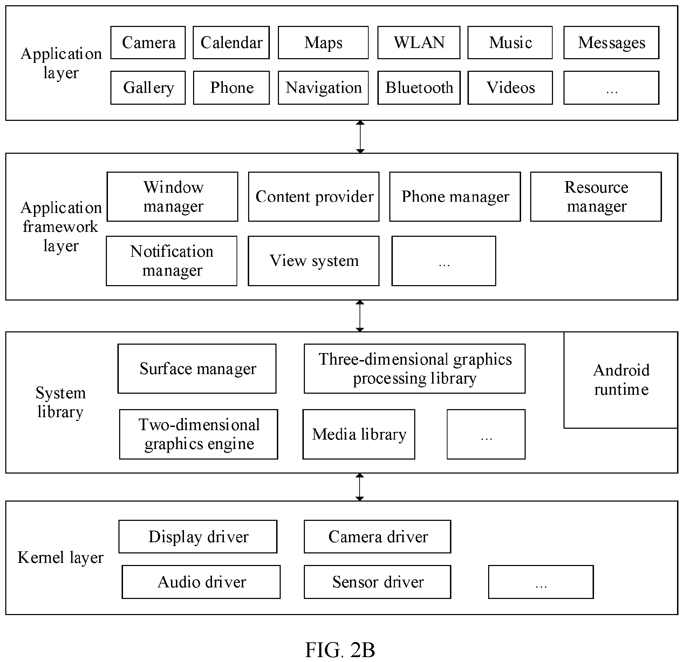

FIG. 2B is a block diagram of a software structure of the electronic device 100 according to embodiments of this application. The electronic device 100 may be any device in the communication system 10 shown in FIG. 1.

In a layered architecture, software is divided into several layers, and each layer has a clear role and task. The layers communicate with each other through a software interface. In some embodiments, the mobile operating system is divided into four layers: an application layer, a program framework layer/core service layer, an underlying library and runtime, and a kernel layer from top to bottom.

The application layer may include a series of application packages.

As shown in FIG. 2B, the application packages may include applications such as Camera, Gallery, Calendar, Phone, Maps, Navigation, WLAN, Bluetooth, Music, Videos, and Messages.

The program framework layer provides an application programming interface (application programming interface, API) and a programming framework for an application at the application layer. The program framework layer includes some predefined functions.

As shown in FIG. 2B, the program framework layer may include a window manager, a content provider, a view system, a phone manager, a resource manager, a notification manager, and the like.

The window manager is configured to manage a window program. The window manager may obtain a size of a display, determine whether there is a status bar, perform screen locking, take a screenshot, and the like.

The content provider is configured to: store and obtain data, and enable the data to be accessed by an application. The data may include a video, an image, an audio, calls that are made and answered, a browsing history and a bookmark, an address book, and the like.

The view system includes visual controls such as a control for displaying a text and a control for displaying an image. The view system may be configured to construct an application. A display interface may include one or more views. For example, a display interface including an SMS message notification icon may include a text display view and an image display view.

The phone manager is configured to provide a communication function of the electronic device, for example, management of a call status (including answering, declining, or the like).

The resource manager provides various resources such as a localized character string, an icon, an image, a layout file, and a video file for an application.

The notification manager enables an application to display notification information in the status bar, and may be configured to convey a notification message. The notification manager may automatically disappear after a short pause without requiring a user interaction. For example, the notification manager is configured to notify download completion, give a message notification, and the like. The notification manager may alternatively be a notification that appears in a top status bar of the system in a form of a graph or a scroll bar text, for example, a notification of an application running on a background, or may be a notification that appears on the screen in a form of a dialog window. For example, text information is displayed in the status bar, an announcement is given, the electronic device vibrates, or the indicator light blinks.

The runtime may be all code libraries, frameworks, and the like that are needed for running a program. For example, for the C language, the runtime includes a series of function libraries needed for running a C program. For the Java language, in addition to a kernel library, the runtime further includes a virtual machine required for running a Java program, and the like. The kernel library may include a function that needs to be invoked in the Java language.

The underlying library may include a plurality of functional modules, for example, a surface manager (surface manager), a media library (Media Library), a three-dimensional graphics processing library (for example, OpenGL ES), and a 2D graphics engine (for example, SGL).

The surface manager is configured to manage a display subsystem and provide fusion of 2D and 3D layers for a plurality of applications.

The media library supports playing and recording in a plurality of commonly used audio and video formats, static image files, and the like. The media library may support a plurality of audio and video encoding formats, for example, MPEG-4, H.264, MP3, AAC, AMR, JPG, and PNG.

The three-dimensional graphics processing library is configured to implement three-dimensional graphics drawing, image rendering, composition, layer processing, and the like.

The 2D graphics engine is a drawing engine for 2D drawing.

The kernel layer is a layer between hardware and software. The kernel layer includes at least a display driver, a camera driver, an audio driver, and a sensor driver.

The following describes an example of a working procedure of software and hardware of the electronic device with reference to an image shooting scenario.

When the touch sensor 180K receives a touch operation, a corresponding hardware interrupt is sent to the kernel layer. The kernel layer processes the touch operation into an original input event (including information such as touch coordinates and a timestamp of the touch operation). The original input event is stored at the kernel layer. The application framework layer obtains the original input event from the kernel layer, and identifies a control corresponding to the input event. An example in which the touch operation is a tap operation, and a control corresponding to the tap operation is a control of a camera application icon is used. The camera application invokes an interface of the application framework layer to enable the camera application, then enables the camera driver by invoking the kernel layer, and captures a static image or a video through the camera 193.

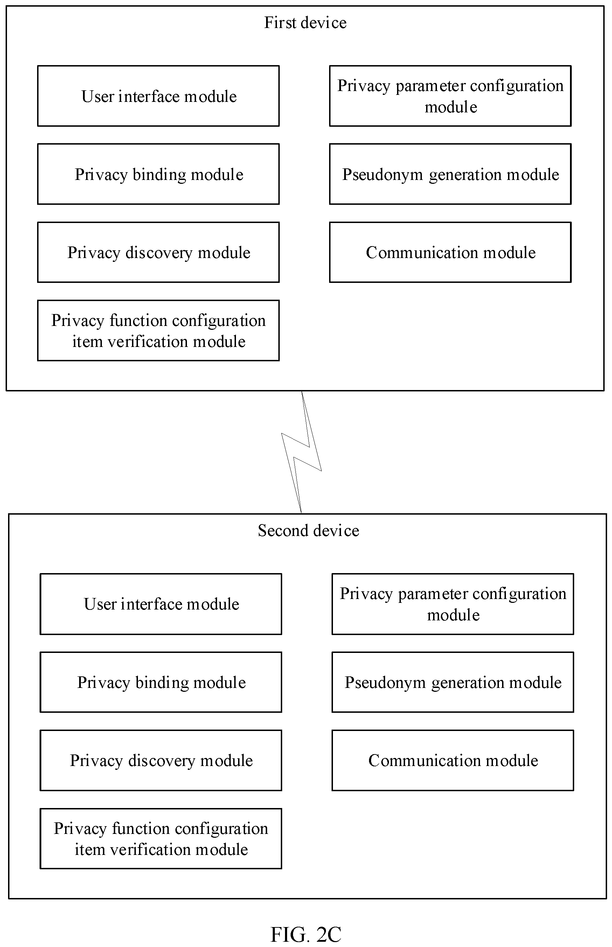

FIG. 2C is a block diagram of another software structure of a first device and a second device according to an embodiment of this application.

As shown in FIG. 2C, the first device may include a user interface module, a privacy binding module, a privacy discovery module, a privacy function configuration item verification module, a privacy parameter configuration module, a pseudonym generation module, and a communication module.

The user interface module is configured to provide an interface for interaction with a user to the first device, for example, a user interface for establishing a binding relationship between the first device and another device, a user interface for establishing a privacy binding relationship between the first device and another device, a user interface for triggering the first device to broadcast a pseudonymized device identifier, and a user interface for configuring a privacy discovery strategy for the user. In some implementations, the user interface module may be further divided into several submodules, which are respectively configured to provide different user interfaces.

The privacy binding module is configured to establish a privacy binding relationship between the first device and another electronic device. Specifically, the privacy binding module may complete sending a device identifier, a trust credential, a privacy parameter, and a privacy discovery strategy of the first device to the another device, and may further receive a device identifier sent by the another device. The privacy binding module is further configured to: schedule the privacy parameter configuration module to complete privacy parameter configuration in a process of establishing a privacy binding relationship, and schedule the privacy function configuration item verification module to complete configuration of the privacy discovery strategy.

The privacy parameter configuration module provides capabilities of configuring, storing, and querying the privacy parameter.

The privacy function configuration item verification module is configured to: record the privacy discovery strategy configured by the user, and provide capabilities of verifying and managing the privacy discovery strategy.

The privacy discovery module is configured to: schedule the privacy parameter configuration module to find the privacy parameter, schedule the privacy function configuration item verification module to find the privacy discovery strategy, and schedule the pseudonym generation module to encrypt the device identifier.

The pseudonym generation module is configured to encrypt the device identifier by using the privacy parameter, or is configured to encrypt the device identifier based on the privacy discovery strategy and the privacy parameter.

The communication module is responsible for broadcasting the encrypted device identifier, and establishing a connection to and communicating with another device that discovers the first device.

As shown in FIG. 2C, the second device may include a user interface module, a privacy binding module, a privacy discovery module, a privacy function configuration item verification module, a privacy parameter configuration module, a pseudonym generation module, and a communication module.

The user interface module is configured to provide an interface for interaction with the user to the second device, for example, a user interface for establishing a privacy binding relationship between the second device and the first device, or a user interface for triggering the second device to perform scanning and broadcasting. In some implementations, the user interface module may be further divided into several submodules, which are respectively configured to provide different user interfaces.

The privacy binding module is configured to establish a privacy binding relationship between the second device and the first device. Specifically, the privacy binding module may complete sending a device identifier and a trust credential of the second device to the second device, and may further receive the device identifier, the privacy parameter, and the privacy discovery strategy that are sent by the first device. The privacy binding module is further configured to: schedule the privacy parameter configuration module to complete privacy parameter configuration in a process of establishing a privacy binding relationship, and schedule the privacy function configuration item verification module to complete configuration of the privacy discovery strategy.

The privacy parameter configuration module provides capabilities of configuring, storing, and querying the privacy parameter.

The privacy function configuration item verification module is configured to: record the received privacy discovery strategy of the first device, and provide capabilities of verifying and managing the privacy discovery strategy.

The privacy discovery module is configured to: schedule the privacy parameter configuration module to find the privacy parameter of the first device, schedule the privacy function configuration item verification module to find the privacy discovery strategy of the first device, and schedule the pseudonym generation module to perform decryption processing on the received encrypted device identifier sent by the first device.

The pseudonym generation module is configured to decrypt the encrypted device identifier by using the privacy parameter, or is configured to decrypt the encrypted device based on the privacy discovery strategy and the privacy parameter.

The communication module is responsible for receiving the encrypted device identifier broadcast by the first device, and establishing a connection to and communicating with the first device discovered by the second device.

The modules of the first device and the modules of the second device shown in FIG. 2C are merely examples, and do not constitute a limitation on this application. During specific implementation, the first device or the second device may include more or fewer modules, or may combine or split some modules.

The following describes user interfaces provided in embodiments of this application.

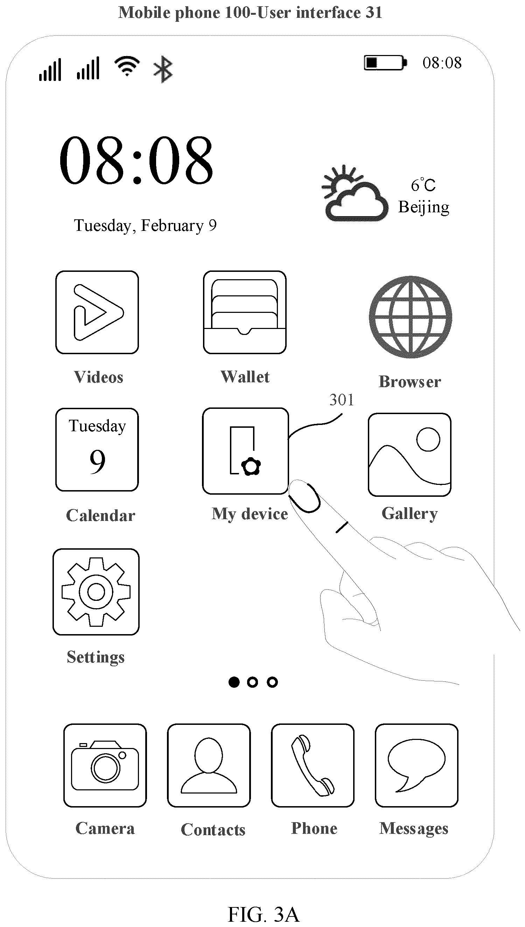

FIG. 3A to FIG. 3G show an example of a group of user interfaces related when the mobile phone 100 establishes a privacy binding relationship with the PC 102.

FIG. 3A shows an example of a user interface 31 that is on the mobile phone 100 and that is for displaying an installed application.

The user interface 31 displays a status bar, a calendar and time indicator, a weather indicator, a page indicator, a tray having a commonly used application icon, and another application icon.

The status bar may include one or more signal strength indicators of a mobile communication signal (which may also be referred to as a cellular signal), a Bluetooth indicator, one or more signal strength indicators of a Wi-Fi signal, a battery status indicator, a time indicator, and the like.

The calendar and time indicator indicates a calendar and current time. The weather indicator indicates weather.

The page indicator may indicate a specific page on which a user is browsing an application icon. In embodiments of this application, application icons may be distributed on a plurality of pages, and the user may slide left or right to browse the application icons on different pages.

The tray having the commonly used application icon may display a Phone icon, a Messages icon, a Camera icon, a Contacts icon, and the like.

The another application icon may include, for example, an icon of a video application, an icon of Calendar, an icon of a game application, an icon of a settings application, an icon of a gallery application, an icon of a browser, and an icon 301 of a device management application.

The device management application is an application installed on an electronic device and used to manage a binding relationship and a privacy binding relationship between the electronic device and another electronic device. A name of the application is not limited in embodiments. The device management application may be a system application provided by the mobile phone 100, or may be a third-party application.

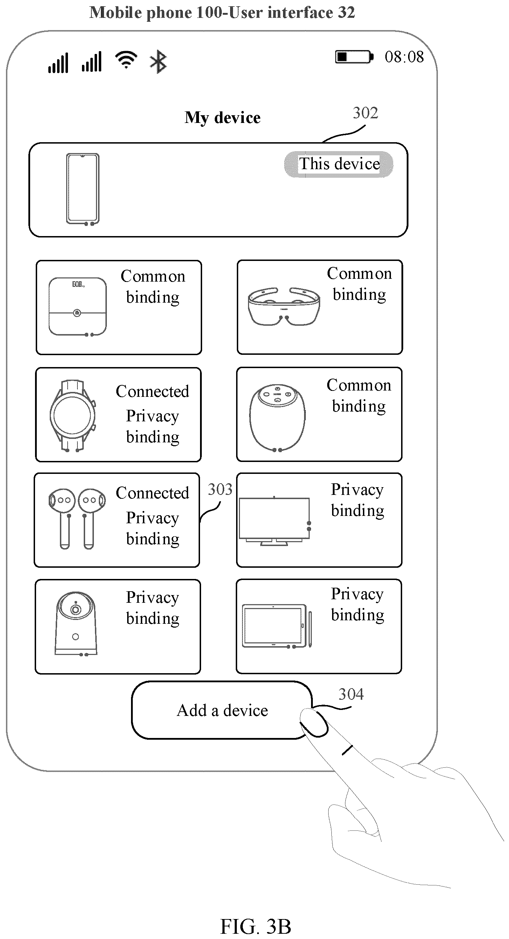

As shown in FIG. 3A, the mobile phone 100 may detect a user operation (for example, a tap operation or a touch operation) performed on the icon 301 of the device management application, and start the device management application in response to the user operation, to display a user interface 32 provided by the device management application shown in FIG. 3B.

Refer to FIG. 3B. The user interface 32 is used to display a binding relationship and a privacy binding relationship between the mobile phone 100 and another electronic device.

The user interface 32 displays: a tab 302 of this device, and tabs of one or more other devices. There is a binding relationship or a privacy binding relationship between the one or more other devices and the mobile phone 100. For example, the tabs of the one or more other devices include tabs respectively corresponding to the body fat scale 107, the VR glasses 104, the smart screen 110, the smart speaker 109, the camera 108, the tablet computer 105, the smartwatch 101, and the Bluetooth headset 106, for example, a tab 303 of the Bluetooth headset 106.

A tab of each device may be used to display an image and an identifier of a corresponding device, a relationship (for example, a binding relationship or a privacy binding relationship) between the device and the mobile phone 100, a connection relationship (for example, connected or disconnected) between the device and the mobile phone 100, and the like.

As shown in FIG. 3B, information displayed on the user interface 32 includes as follows: Devices that establish a common binding relationship rather than a privacy binding relationship with the mobile phone 100 include the body fat scale 107, the VR glasses 104, and the smart speaker 109, and devices that establish a privacy binding relationship with the mobile phone 100 include the smart screen 110, the camera 108, the tablet computer 105, the smartwatch 101, and the Bluetooth headset 106. Currently, the mobile phone 100 is connected to the smartwatch and the Bluetooth headset.

The tab of each device may be used to listen to a user operation (for example, a tap operation or a touch operation). The mobile phone 100 may display, in response to the user operation, detailed information of a device corresponding to the tab, for example, a device identifier, a device type, an identifier, a battery level, and working duration.

A control 304 used to discover a new device is further displayed on the user interface 32.

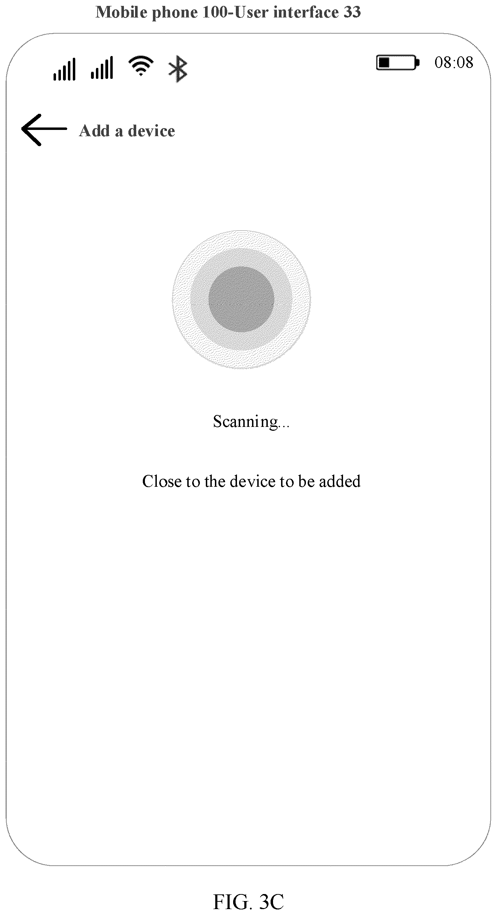

As shown in FIG. 3B, the control 304 may be used to receive a user operation (for example, a tap operation or a touch operation), and in response to the user operation, the mobile phone 100 may display a user interface 33 shown in FIG. 3C. The user interface 33 is used to prompt the user that the mobile phone 100 is currently discovering another nearby or remote device.

During specific implementation, the mobile phone 100 may broadcast a device identifier of the mobile phone 100 by using communication technologies such as Wi-Fi P2P, Wi-Fi softAP, Wi-Fi LAN, BT, NFC, IR, ZigBee, UWB, and a cellular network. After scanning the device identifier broadcast by the mobile phone 100, another device may reply with a broadcast packet carrying a device identifier of the another device. After receiving the broadcast packet, the mobile phone 100 may obtain the device identifier carried in the broadcast packet, to discover the corresponding device.

In some implementations, a device identifier (for example, a broadcast device identifier) used by each device during communication may be an identifier that can be sensed or identified by a bottom layer of each device. Generally, the device identifier used by each device during communication is not user-defined, but is a default value set for each device before delivery.

In some other implementations, in addition to the identifier that can be sensed by the bottom layer, the device identifier used by each device during communication may further include an identifier that can be sensed or easily identified by the user, for example, "HUAWEI MateBook X", "HUAWEI MediaPad T5", "Freebuds Pro", "Mobile phone of a user A", "Headset of the user A", "Bluetooth headset of a user B", and "Watch of the user B". The identifier that can be sensed or easily identified by the user may be user-defined, or may be set for the device by default.

In some other implementations, the mobile phone 100 may alternatively directly scan, by using communication technologies such as Wi-Fi P2P, Wi-Fi softAP, Wi-Fi LAN, BT, NFC, IR, ZigBee, UWB, and a cellular network, a device identifier broadcast by another device, to discover the another device.

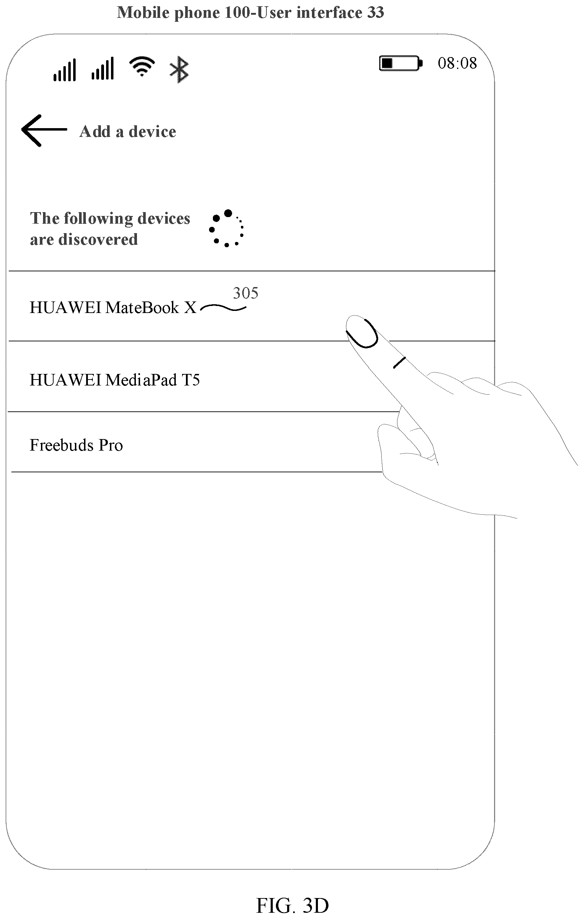

FIG. 3D shows content displayed on the user interface 33 after the mobile phone 100 discovers another device. As shown in FIG. 3D, the mobile phone 100 displays, on the user interface 33, device identifiers of one or more discovered devices, for example, a device identifier "HUAWEI MateBook X" 305 of the PC 102, a device identifier "HUAWEI MediaPad T5" of the tablet computer 105, and a device identifier "Freebuds Pro" of the Bluetooth headset 106.

In FIG. 3D and subsequent UI examples, a device identifier of each device displayed on a user interface is merely an example, and is not limited to device identifiers that can be sensed by the user, for example, "HUAWEI MateBook X", "HUAWEI MediaPad T5", and "Freebuds Pro", provided in UI embodiments of this application. In some other implementations, each device may further display, on the user interface, a device identifier used during bottom-layer communication.

As shown in FIG. 3D, the mobile phone 100 may receive a user operation (for example, a tap operation or a touch operation) performed on the device identifier "HUAWEI MateBook X" 305.

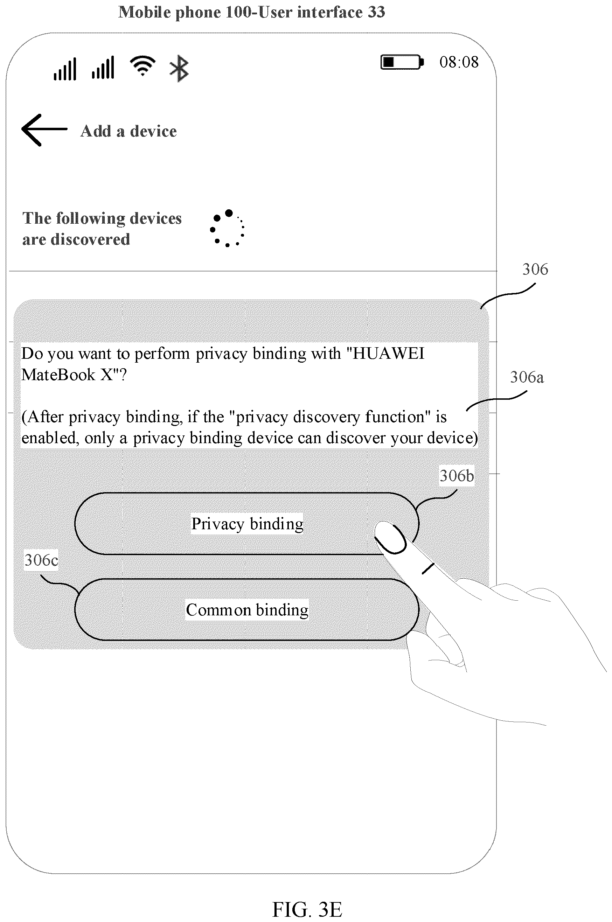

In response to the user operation, as shown in FIG. 3E, the mobile phone 100 may display a window 306 on the user interface 33. Prompt information 306a, a control 306b, and a control 306c are displayed in the window 306.

The prompt information 306a may be used to prompt the user whether to perform privacy binding on the mobile phone 100 and the PC 102 corresponding to the selected device identifier "HUAWEI MateBook X" 305, and may prompt the user of a privacy binding function.

The control 306b may be used to listen to a user operation, and the mobile phone 100 may send a privacy binding request to the PC 102 in response to the user operation. The control 306c may be used to listen to a user operation, and the mobile phone 100 may send a common binding request to the PC 102 in response to the user operation. The user may choose, based on an actual requirement of the user, to trigger privacy binding or common binding between the mobile phone 100 and the PC 102.

As shown in FIG. 3E, the mobile phone 100 may receive a user operation (for example, a tap operation or a touch operation) performed on the control 306b, and may send, in response to the user operation, a privacy binding request to the PC 102 corresponding to the device identifier "HUAWEI MateBook X" 305, where the privacy binding request may carry the device identifier of the mobile phone 100.

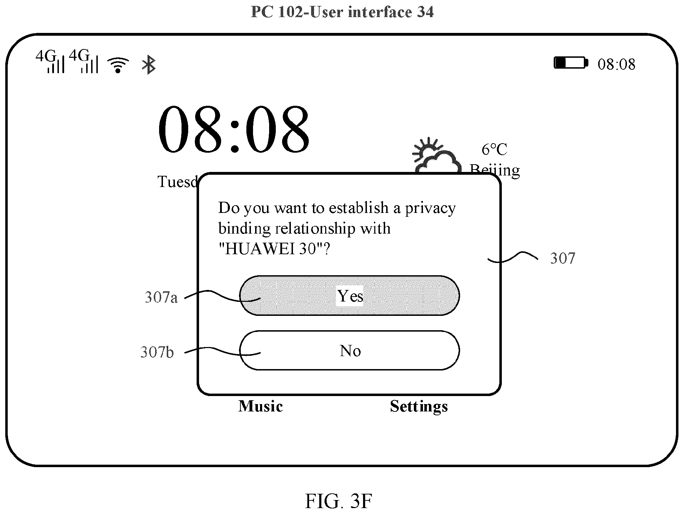

After receiving the privacy binding request sent by the mobile phone 100, the PC 102 may display a window 307 shown in FIG. 3F. Prompt information 307a, a control 307b, and a control 307c are displayed in the window 307. The prompt information 307a may be used to prompt the user whether to agree to establish a privacy binding relationship between the PC 102 and the mobile phone. In some implementations, the prompt information 307a may further prompt a privacy binding function.

The control 307b may be used to listen to a user operation, and the PC 102 may establish a privacy binding relationship with the mobile phone 100 in response to the user operation. For a specific process in which the PC 102 establishes the privacy binding relationship with the mobile phone 100, refer to detailed descriptions in subsequent method embodiments. Details are not described herein. The control 307c may be used to listen to a user operation, and the PC 102 may refuse to establish a privacy binding relationship with the mobile phone 100 in response to the user operation. The user may choose, based on an actual requirement of the user, whether to agree to perform privacy binding between the PC 102 and the mobile phone 100.

This is not limited to that the mobile phone 100 first inquires the user, and then establishes the privacy binding relationship with the PC 100 under triggering of the user shown in FIG. 3E and FIG. 3F. In some other implementations of this application, the mobile phone 100 may alternatively establish the privacy binding relationship with the PC 102 by default after receiving the user operation performed on the device identifier "HUAWEI MateBook X" 305 in FIG. 3D, without triggering of the user. In some other implementations, after receiving the user operation performed on the device identifier "HUAWEI MateBook X" 305 in FIG. 3D, the mobile phone 100 may first establish a common binding relationship with the PC 102, and then inquire the user whether to upgrade the common binding relationship to the privacy binding relationship.

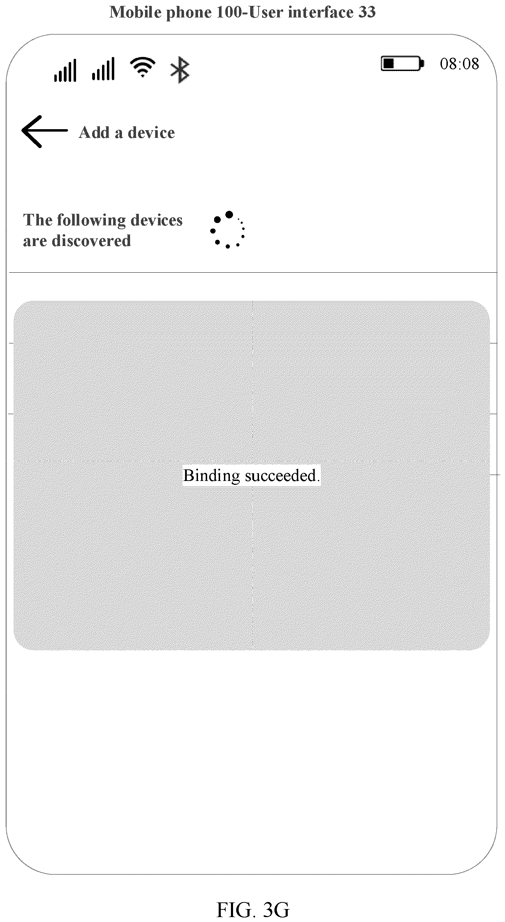

FIG. 3G shows an example of a user interface displayed after the mobile phone 100 successfully establishes the privacy binding relationship with the PC 102. As shown in FIG. 3G, the mobile phone 100 may display prompt information used to prompt the user that the binding succeeds.

In embodiments of this application, after establishing a privacy binding relationship with a new device, the mobile phone 100 may prompt the user based on a current enabling and configuration status of a "privacy discovery" function in the mobile phone 100.

"Privacy discovery" is a function provided by an electronic device, and supports encrypting a device identifier and broadcasting an encrypted device identifier after the electronic device establishes a privacy binding relationship with another device. After the electronic device establishes the privacy binding relationship with the another device, if the "privacy discovery" function is enabled, the device identifier may be encrypted when necessary, and the encrypted device identifier is broadcast.

"Privacy discovery" is merely a word used in embodiments of this application, a meaning represented by the word is recorded in embodiments, and a name of the word does not constitute any limitation on embodiments. For example, "privacy discovery" may also be referred to as another name like "partial discovery" or "trust discovery".

In some implementations, after the mobile phone 100 establishes the privacy binding relationship with the PC 102, if the "privacy discovery" function is not enabled on the mobile phone 100 currently, the user may be prompted to enable the "privacy discovery" function.

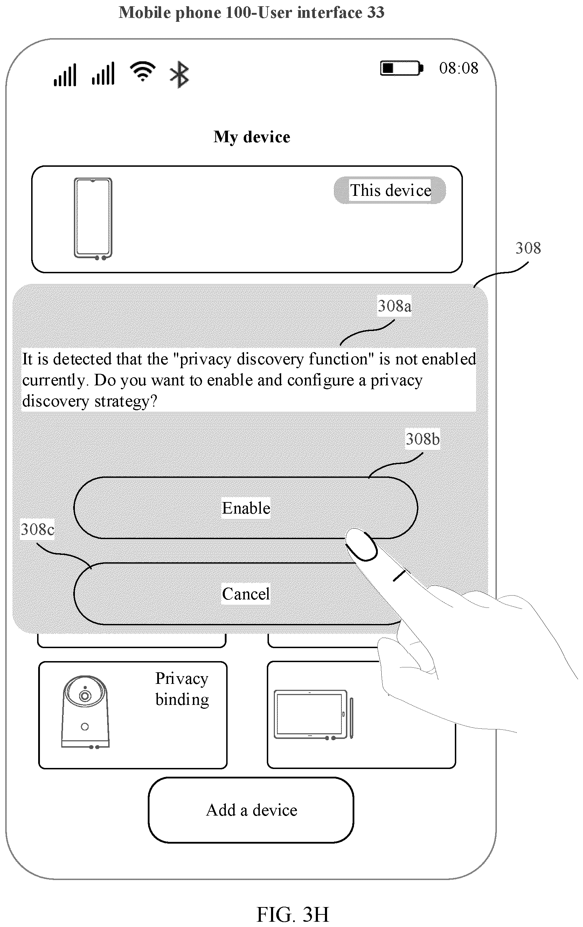

FIG. 3H to FIG. 3W show examples of user interfaces related when the mobile phone 100 enables the "privacy discovery" function and configures a privacy discovery strategy after the mobile phone 100 establishes the privacy binding relationship with the PC 102.

For example, refer to FIG. 3H. After the mobile phone 100 establishes the privacy binding relationship with the PC 102, if the "privacy discovery" function is not enabled on the mobile phone 100 currently, the mobile phone 100 may display a window 308.

Prompt information 308a, a control 308b, and a control 308c are displayed in the window 308. The prompt information 308a may be used to prompt the user that the "privacy discovery" function is not enabled on the mobile phone 100 currently, and inquire the user whether to enable the privacy discovery function.

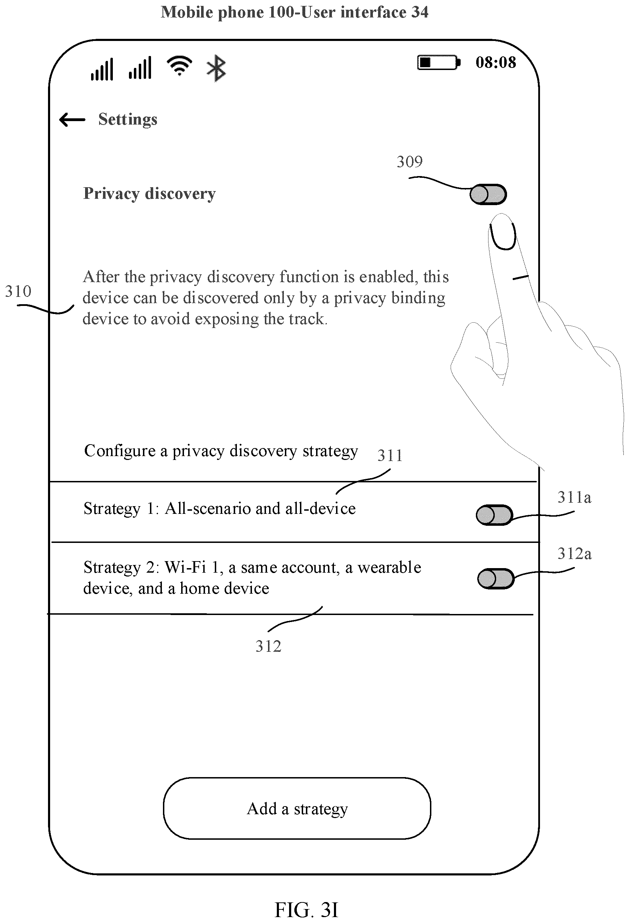

The control 308b may be used to listen to a user operation, and the mobile phone 100 may display, in response to the user operation, a user interface 34 that is for enabling the "privacy discovery" function and that is shown in FIG. 3I. The control 30c may be used to listen to a user operation, and the mobile phone 100 may stop displaying the window 308 in response to the user operation.

FIG. 3I shows an example of the user interface 34 for enabling the "privacy discovery" function. The user interface 34 may be provided by the settings (settings) application. The settings application is an application installed on the electronic device and used to set various functions of the electronic device. A name of the settings application is not limited in embodiments of this application.

As shown in FIG. 3I, a control 309 for enabling/disabling the "privacy discovery" function, prompt information 310, and one or more privacy discovery strategy entries are displayed on the user interface 34.

The control 309 is used to listen to a user operation, and the electronic device 100 may enable/disable the "privacy discovery" function in response to the user operation.

The prompt information 310 is used to prompt the user of a meaning of the "privacy discovery" function.

The one or more privacy discovery strategy entries correspond to one or more privacy discovery strategies stored in the mobile phone 100, and one entry corresponds to one privacy discovery strategy. The one or more privacy discovery strategies stored in the mobile phone 100 may be preset in the mobile phone 100, or may be autonomously set by the user based on a requirement.

The privacy discovery strategy indicates, in privacy binding devices of the mobile phone 100, a device that meets a specific condition and that can discover the mobile phone 100, or specific devices that can discover the mobile phone 100. The privacy discovery strategy may include but is not limited to any one or more of the following: an account type, an account, a network type, a network identifier, a location, a device type, a device identifier, a group, or the like. For specific content of the privacy discovery strategy, refer to detailed descriptions of subsequent method embodiments. Details are not described herein.

As shown in FIG. 3I, the mobile phone 100 stores two privacy discovery strategies: a strategy 1 and a strategy 2. The strategy 1 corresponds to an entry 311, and the strategy 2 corresponds to an entry 312. The entry 311 includes a control 311a, the entry 312 includes a control 312a, and the control 311a and the control 312a each are used to enable a corresponding privacy discovery strategy. A display form of the control 309 in FIG. 3I indicates that the "privacy discovery" function is not enabled on the mobile phone currently, and the strategy 1 and the strategy 2 are not applied either.

As shown in FIG. 3I, the electronic device 100 may enable the "privacy discovery" function in response to the user operation received on the control 309.

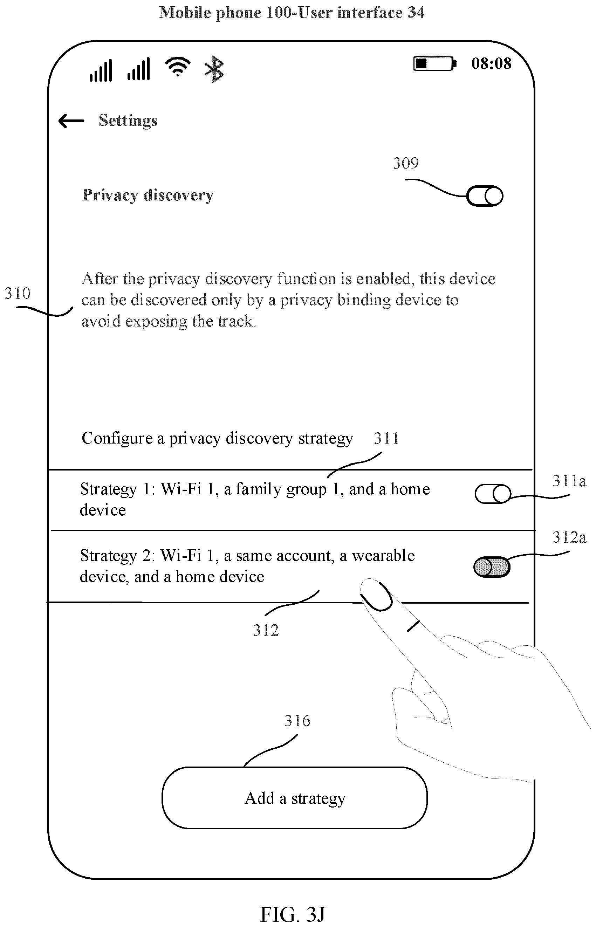

Refer to FIG. 3J. After the "privacy discovery" function is enabled, the mobile phone 100 may adjust the display form of the control 309, to prompt the user that the "privacy discovery" function is currently enabled.

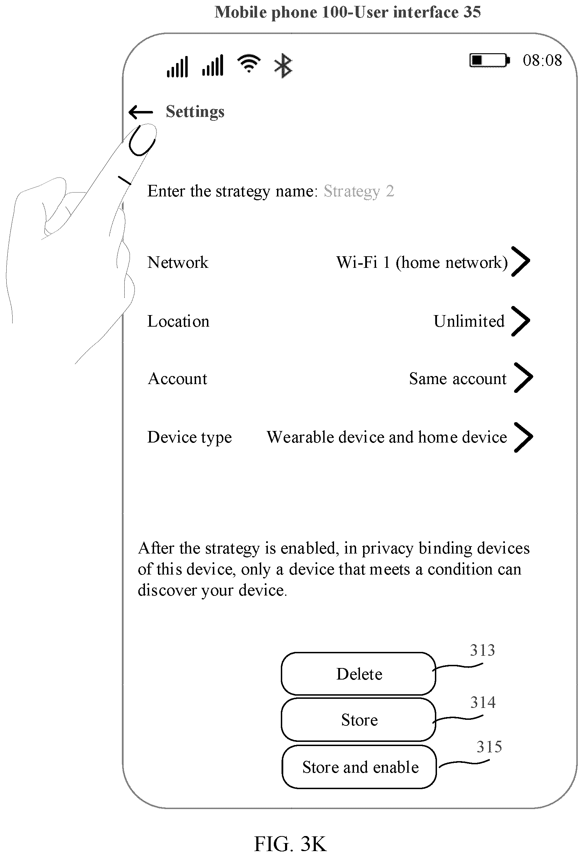

The mobile phone 100 may detect a user operation performed on an entry of the privacy discovery strategy, and display an editing interface of the privacy discovery strategy in response to the user operation. For example, the mobile phone 100 may receive a user operation on the entry 312 on the user interface 34 shown in FIG. 3J, and display a user interface 35 for editing the strategy 2 shown in FIG. 3K.

As shown in FIG. 3K, the user interface 35 may include one or more configuration items. The one or more configuration items may be preset by the mobile phone 100, or may be user-defined. For example, the user interface 35 includes a strategy name configuration item, a network configuration item, a location configuration item, an account configuration item, a device type configuration item, and the like. The user can enter required content to these configuration items or select required content in these configuration items, to set content of the strategy 2.

The strategy 2 set in FIG. 3K indicates Wi-Fi 1, an unlimited location, a same account, a wearable device, and a home device. This indicates that, after the strategy 2 is applied to the mobile phone 100, in the privacy binding devices of the mobile phone 100, only a wearable device and a home device that are connected to Wi-Fi 1 and that log in to a same system account as the mobile phone 100 can discover the mobile phone 100. For a specific implementation of applying the privacy discovery strategy to the mobile phone 100, refer to detailed descriptions of subsequent method embodiments. Details are not described herein.

The user interface 35 further includes a control 313 for deleting the strategy 2, a control 314 for storing the strategy 2, and a control 315 for storing and enabling the strategy 2.

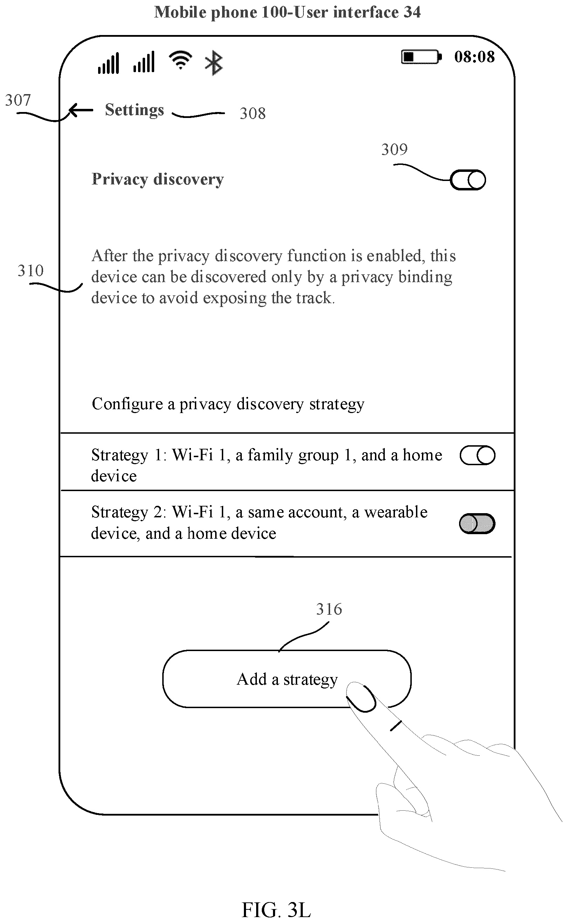

The mobile phone 100 may detect a user operation performed on a back control on the user interface 35 shown in FIG. 3K, and return to a previous user interface provided by the settings application, that is, the user interface 34 shown in FIG. 3L.

Refer to FIG. 3L. A control 316 for adding more strategies may be further displayed on the user interface 34.

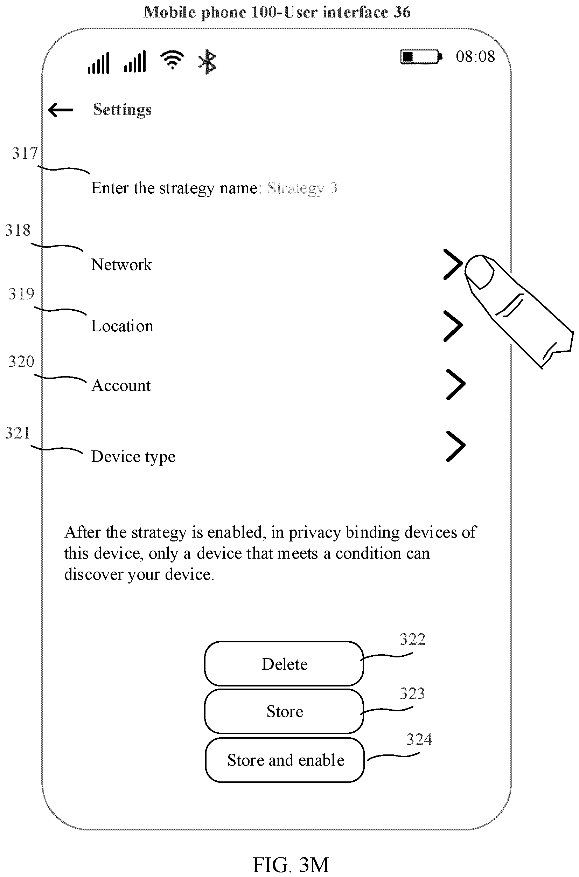

The mobile phone 100 may detect a user operation performed on the control 316, and display, in response to the user operation, a user interface 36 that is for adding a new privacy discovery strategy and that is shown in FIG. 3M.

The user interface 36 shown in FIG. 3M is similar to the user interface 35 shown in FIG. 3K, and a strategy name configuration item 317, a network configuration item 318, a location configuration item 319, an account configuration item 320, a device type configuration item 321, a control 322 for deleting the current strategy, a control 323 for storing the current strategy, and a control 324 for storing and enabling the current strategy are display on the user interface 36. In some implementations, prompt information may be further displayed on the user interface 36, and the prompt information may be used to display a function that can be implemented after the currently configured privacy discovery strategy is enabled.

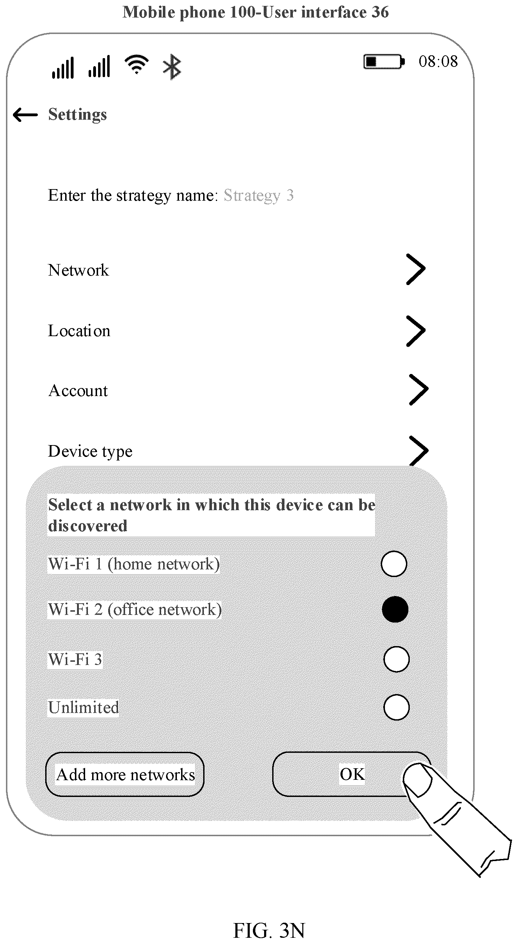

FIG. 3N shows an example of a user interface 36 displayed after the mobile phone 100 receives a user operation performed on the network configuration item 318. As shown in FIG. 3N, the mobile phone 100 may display one or more network options. One network option corresponds to one network. The network may be a network currently found by the mobile phone 100, or may be a network historically connected by the mobile phone 100, or an account manually entered by the user. This is not limited herein. The user may select one or more of the one or more network options, and then tap an OK control, to configure a corresponding network as a network in a current privacy discovery strategy (for example, a privacy discovery strategy named "strategy 3").

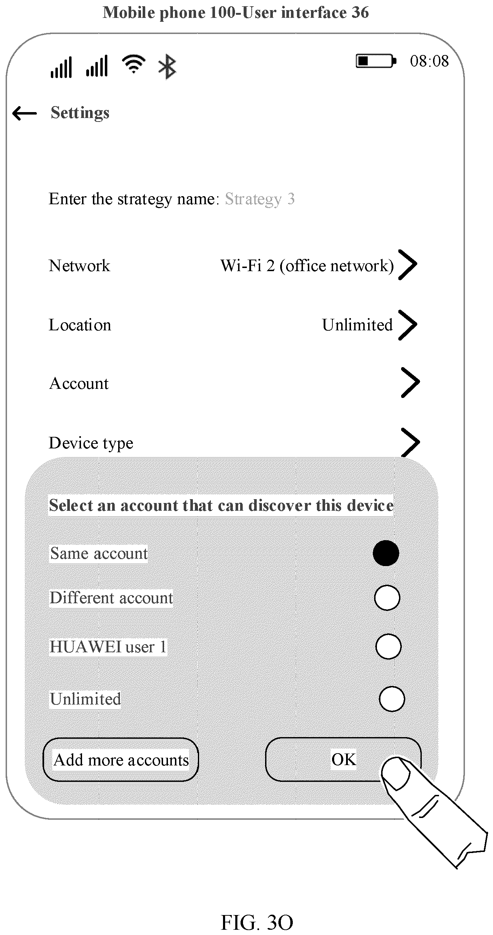

FIG. 3O shows an example of a user interface 36 displayed after the mobile phone 100 receives a user operation performed on the account configuration item 320. As shown in FIG. 3O, the mobile phone 100 may display one or more account options. One account option corresponds to one account type or account. The account may be a currently logged-in account of the mobile phone 100, or may be an account manually entered by the user. This is not limited herein. The user may select one or more of the one or more account options, and then tap an OK control, to configure a corresponding account as an account in the current privacy discovery strategy (for example, the privacy discovery strategy named "strategy 3").

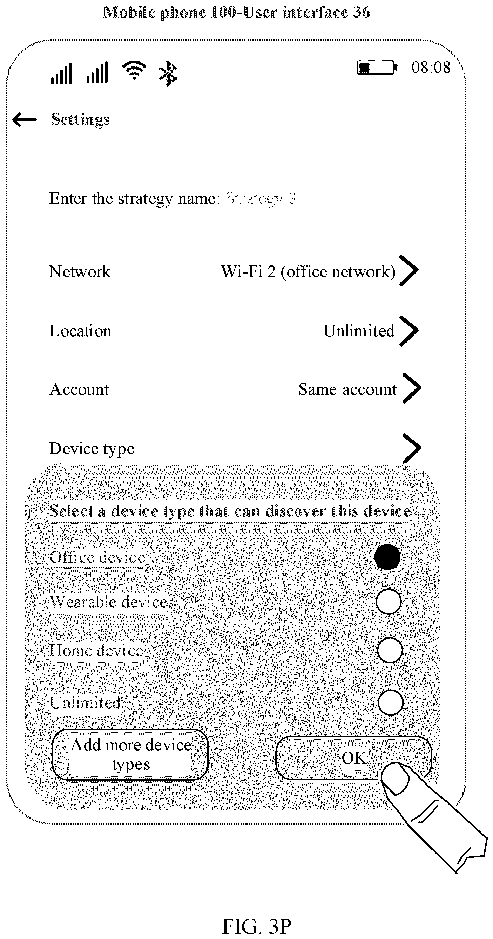

FIG. 3P shows an example of a user interface 36 displayed after the mobile phone 100 receives a user operation performed on the device type configuration item 321. As shown in FIG. 3P, the mobile phone 100 may display one or more device type options. One device type option corresponds to one device type. The device type may be set for the mobile phone 100 by default, or may be manually entered by the user. This is not limited herein. The user may select one or more of the one or more device type options, and then tap an OK control, to configure a corresponding device type as a device type in the current privacy discovery strategy (for example, the privacy discovery strategy named "strategy 3").

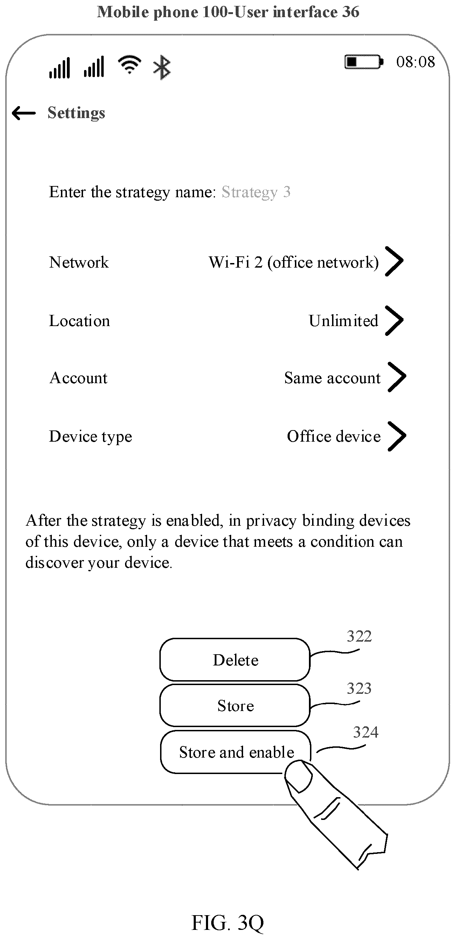

After each configuration item on the user interface 36 is configured, the currently configured privacy discovery strategy may be deleted, stored, or stored and enabled based on an actual requirement. Refer to FIG. 3Q. The mobile phone 100 may receive a user operation performed on the control 324, and store and enable the currently configured privacy discovery strategy (namely, the privacy discovery strategy named "strategy 3") in response to the user operation. The strategy 3 indicates Wi-Fi 2, an unlimited location, a same account, and an office device. This indicates that, after the strategy 3 is applied to the mobile phone 100, in the privacy binding devices of the mobile phone 100, only an office device that is connected to Wi-Fi 2 and that logs in to a same system account as the mobile phone 100 can discover the mobile phone 100.

The configuration items on the user interfaces 36 shown in FIG. 3M to FIG. 3Q are not limited. In some other implementations of this application, when a new privacy discovery strategy is added, the mobile phone 100 may further provide configuration manners in more forms.

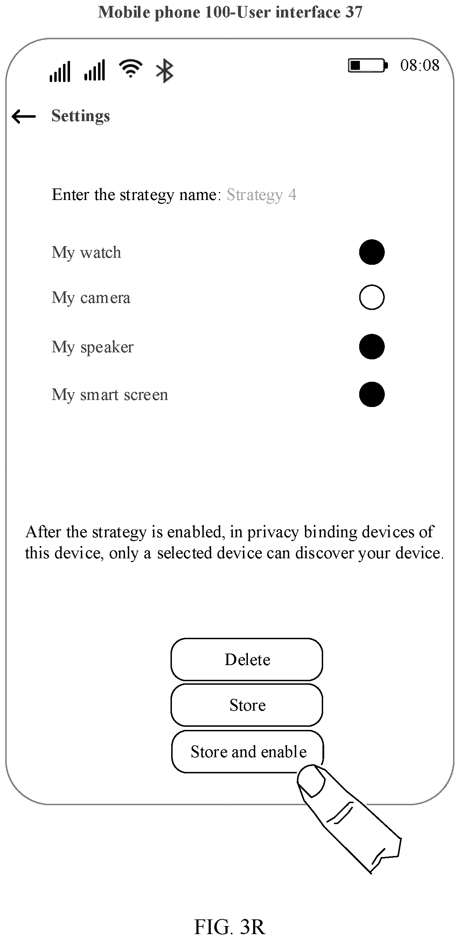

For example, FIG. 3R shows an example of a plurality of device options. One device option corresponds to one device, and the device may be a privacy binding device of the mobile phone 100. The user may directly select one or more device options on a user interface 37 shown in FIG. 3R, and set a corresponding device as a device in the current privacy discovery strategy.

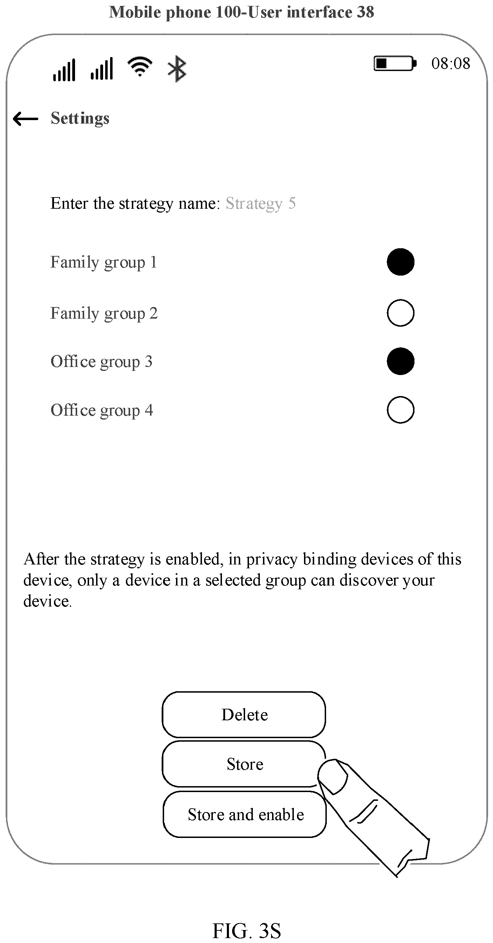

For another example, FIG. 3S shows an example of a plurality of group options, and one group option corresponds to one group. One group may include a plurality of devices, or may include a plurality of devices that log in to one or more accounts. The user may directly select one or more group options on a user interface 38 shown in FIG. 3S, and set a device in a corresponding group as a device in the current privacy discovery strategy.

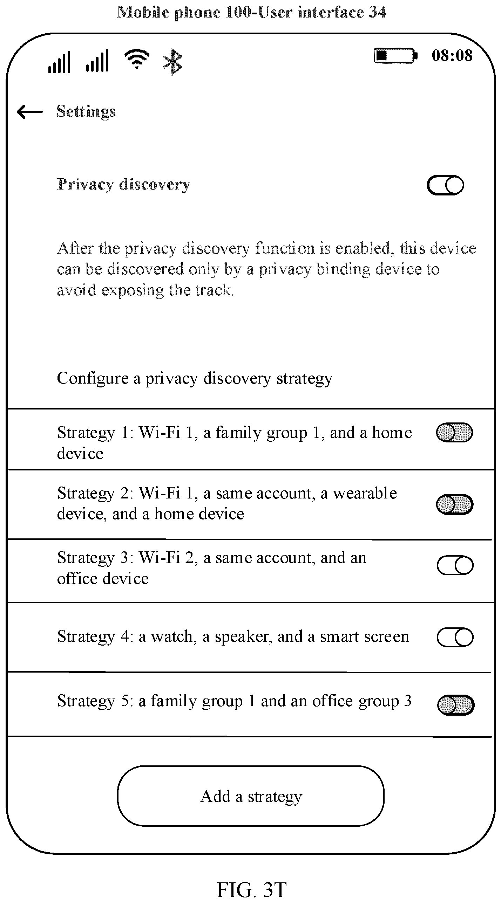

FIG. 3T shows an example of a user interface 34 displayed after the user adds some privacy discovery strategies and enables a part of the privacy discovery strategies. As shown in FIG. 3T, the mobile phone 100 stores five privacy discovery strategies (a strategy 1 to a strategy 5), and enables the strategy 3 and the strategy 4 in the five privacy discovery strategies.

Different privacy discovery strategies are set, and different privacy discovery strategies are enabled. In this way, the mobile phone 100 may choose to be exposed in different device ranges, so that different devices can discover the mobile phone 100.

In some implementations, the mobile phone 100 may further provide an entry for the user to set an enabling condition of a privacy discovery strategy, for example, time, a location, or a network. In this way, the mobile phone 100 may enable the privacy discovery strategy in a specific condition, and may enable different privacy discovery strategies in different conditions, so that the mobile phone 100 can be exposed in different device ranges in different locations, different locations, and different networks, to meet personalized requirements of the user.

In some implementations, after the mobile phone 100 establishes the privacy binding relationship with the PC 102, if the "privacy discovery" function is enabled on the mobile phone 100 currently, the user may be further prompted based on privacy discovery strategies stored in the mobile phone 100.

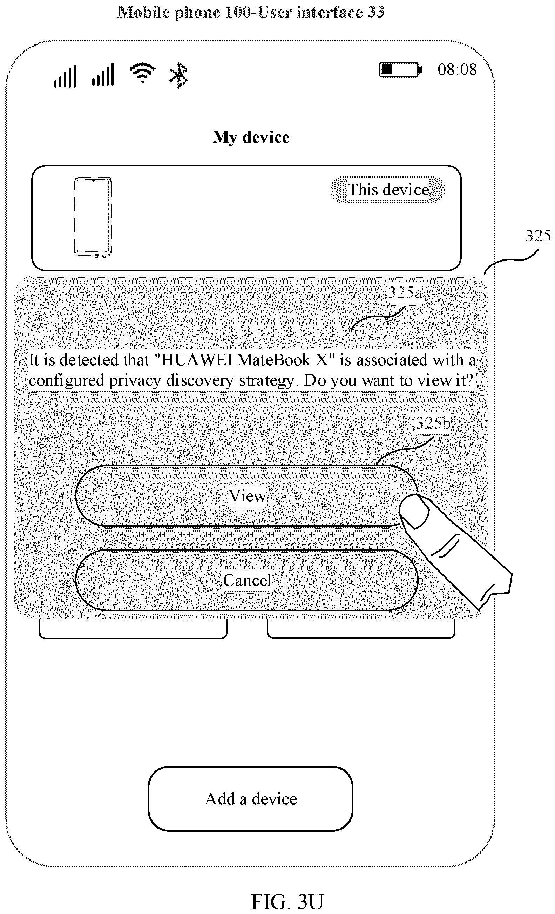

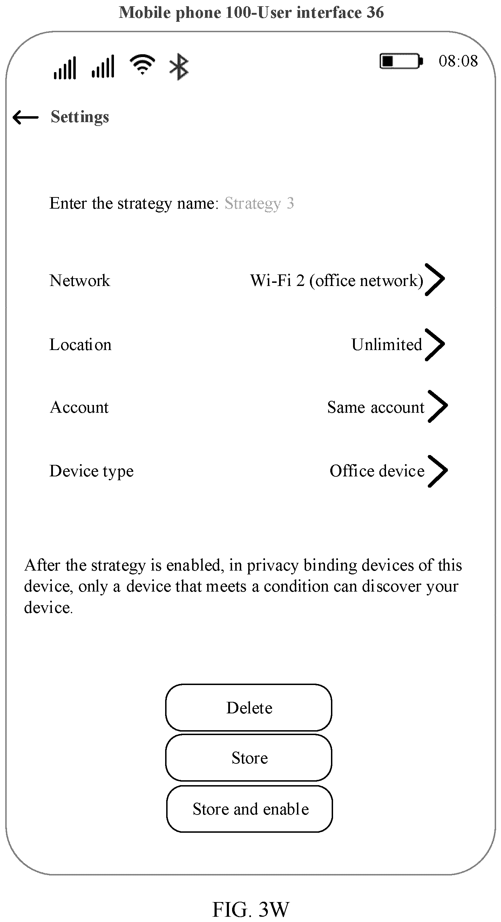

If the privacy discovery strategies stored in the mobile phone 100 include a privacy discovery strategy associated with the PC 102, a user interface 33 shown in FIG. 3U may be displayed. As shown in FIG. 3U, a window 325 is displayed on the user interface 33, and prompt information 325a used to prompt that the privacy discovery strategy associated with the PC 102 currently exists may be displayed in the window. A control 325b for viewing the privacy discovery strategy associated with the PC 102 may also be displayed in the window. If the PC 102 is associated with the strategy 3, the mobile phone 100 may display, in response to a user operation performed on the control 325b, a detail displaying and editing interface of the strategy 3 shown in FIG. 3W.

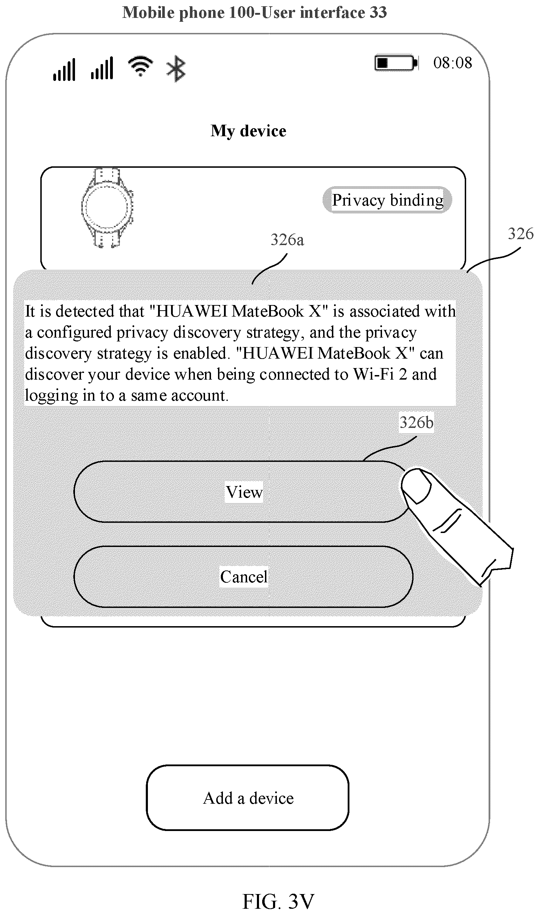

If the privacy discovery strategies stored in the mobile phone 100 include a privacy discovery strategy that is associated with the PC 102 and that is enabled, a user interface 33 shown in FIG. 3V may be displayed. As shown in FIG. 3V, a window 326 is displayed on the user interface 33, and prompt information 326a used to prompt that the privacy discovery strategy associated with the PC 102 currently exists may be displayed in the window. A control 326b for viewing the privacy discovery strategy associated with the PC 102 may also be displayed in the window. If the PC 102 is associated with the strategy 3 and the strategy 3 is currently enabled, the mobile phone 100 may display, in response to a user operation performed on the control 326b, a detail displaying and editing interface of the strategy 3 shown in FIG. 3W.

In some implementations, the mobile phone 100 may first establish a common binding relationship with another device, and then subsequently upgrade the common binding relationship to a privacy binding relationship.

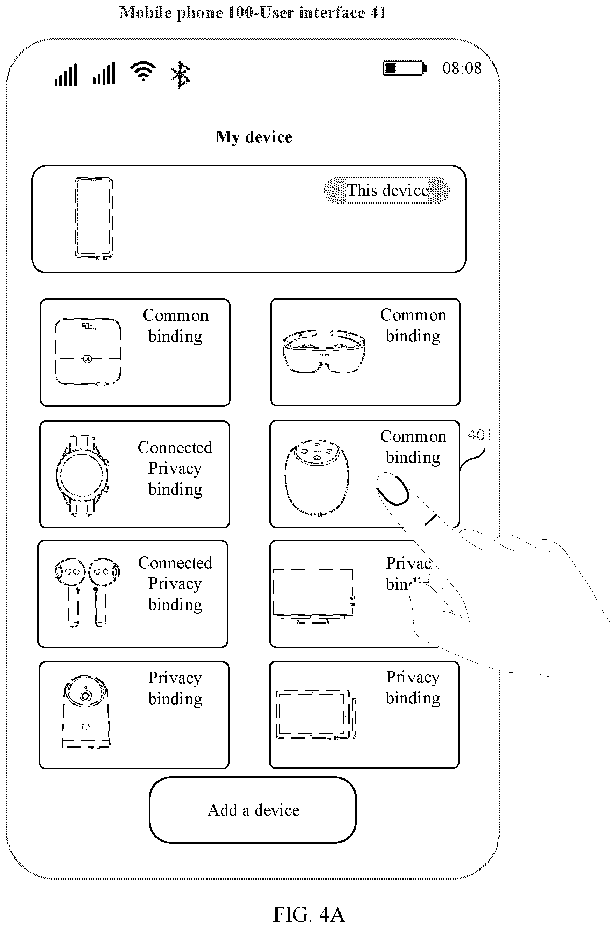

FIG. 4A to FIG. 4D show an example of a group of user interfaces related when the mobile phone 100 upgrades a common binding relationship with the smart speaker 109 to a privacy binding relationship.

For a user interface 41 shown in FIG. 4A, refer to the user interface 32 shown in FIG. 3B. Details are not described herein again.

Refer to FIG. 4A. The user interface 41 may include a tab 401 of the smart speaker 109. The tab 401 indicates that the mobile phone 100 and the smart speaker 109 are in a common binding relationship.

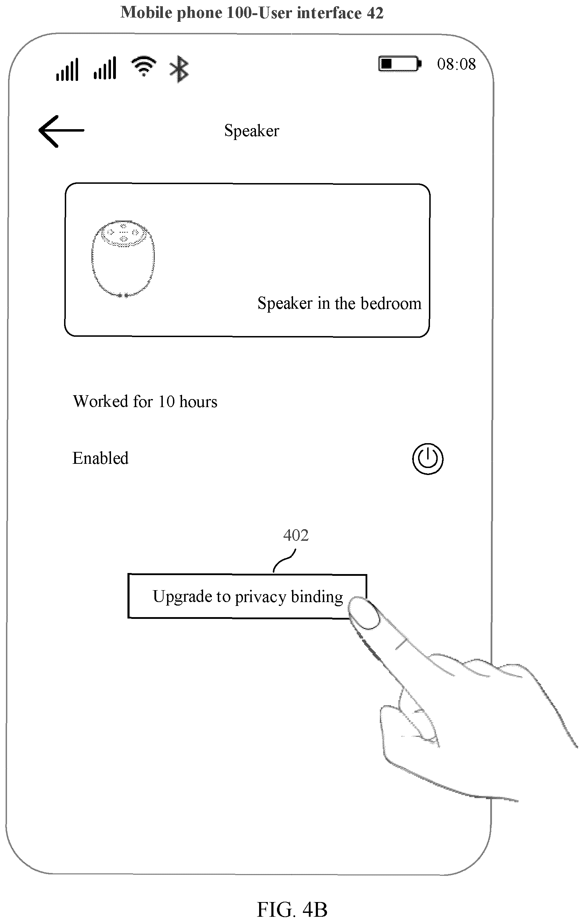

The mobile phone 100 may receive a user operation performed on the tab 401, and display, in response to the user operation, a user interface 42 that is for displaying detailed information of the smart speaker 109 and that is shown in FIG. 4B. A control 402 is displayed on the user interface 42. The mobile phone 100 may receive a user operation performed on the control 402, and send a privacy binding request to the smart speaker 109 in response to the user operation, to establish a privacy binding relationship with the smart speaker 109.

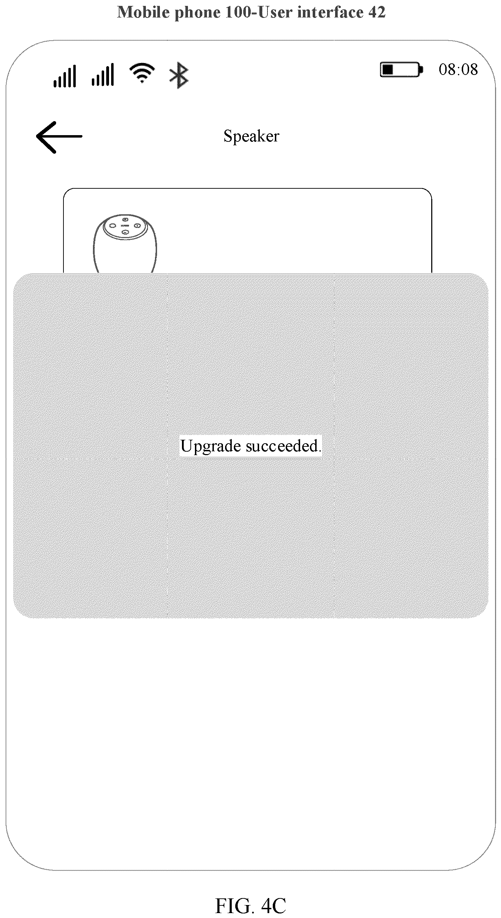

If the smart speaker 109 agrees to establish the privacy binding relationship with the mobile phone 100, after successfully establishing the privacy binding relationship with the smart speaker 109, the mobile phone 100 may display prompt information shown in FIG. 4C, to prompt a user that the common binding relationship between the mobile phone 100 and the smart speaker 109 has been upgraded to the privacy binding relationship.

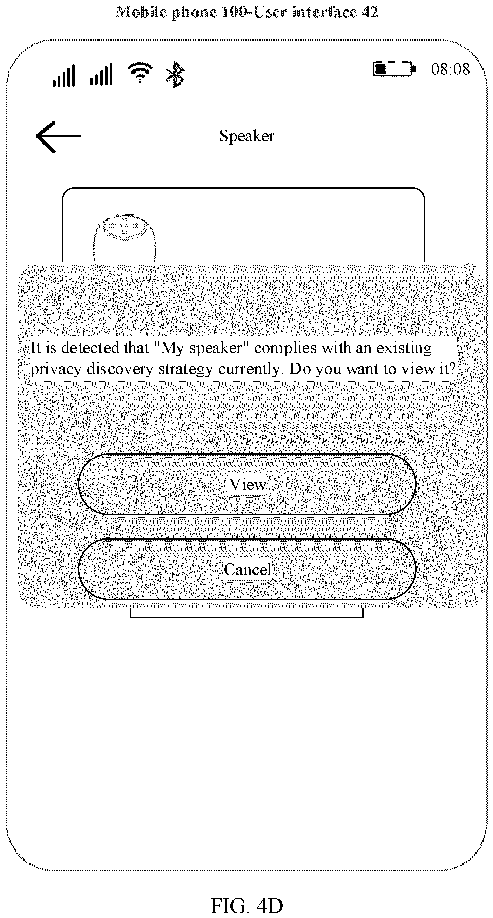

After the relationship between the mobile phone 100 and the smart speaker 109 is upgraded to the privacy binding relationship, the user may be prompted with reference to a current enabling and configuration status of a "privacy discovery" function in the mobile phone 100. For details, refer to the foregoing prompt manner used after the mobile phone 100 establishes the privacy binding relationship with the PC 102. For example, refer to FIG. 4D. If the privacy discovery strategy stored in the mobile phone 100 includes a privacy discovery strategy associated with the smart speaker 109, prompt information shown in FIG. 4D may be displayed.

The foregoing description that the mobile phone 100 provides an entry after establishing a privacy binding relationship with another device, so that the user can enable the "privacy discovery" function and configure the privacy discovery strategy is not limited. In some other implementations of this application, the mobile phone 100 may alternatively enable the "privacy discovery" function and configure the privacy discovery strategy through an entry provided by a device management application.

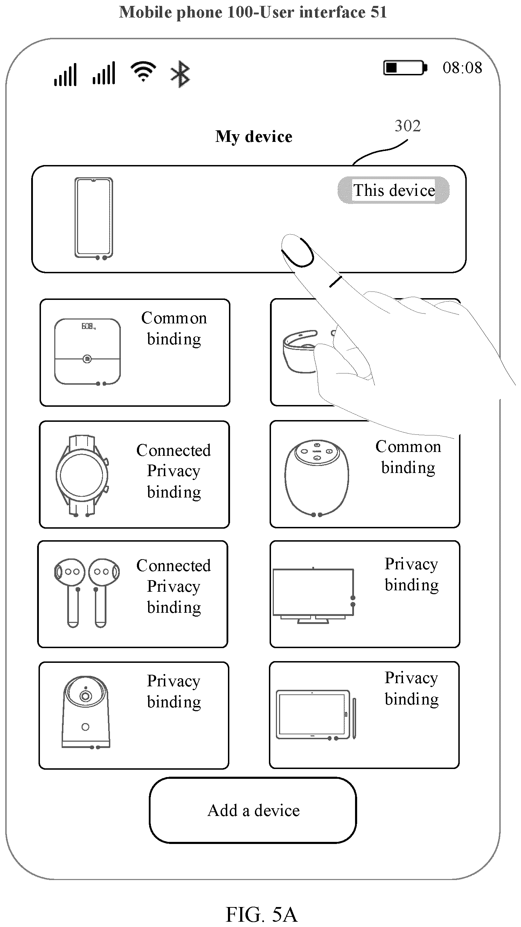

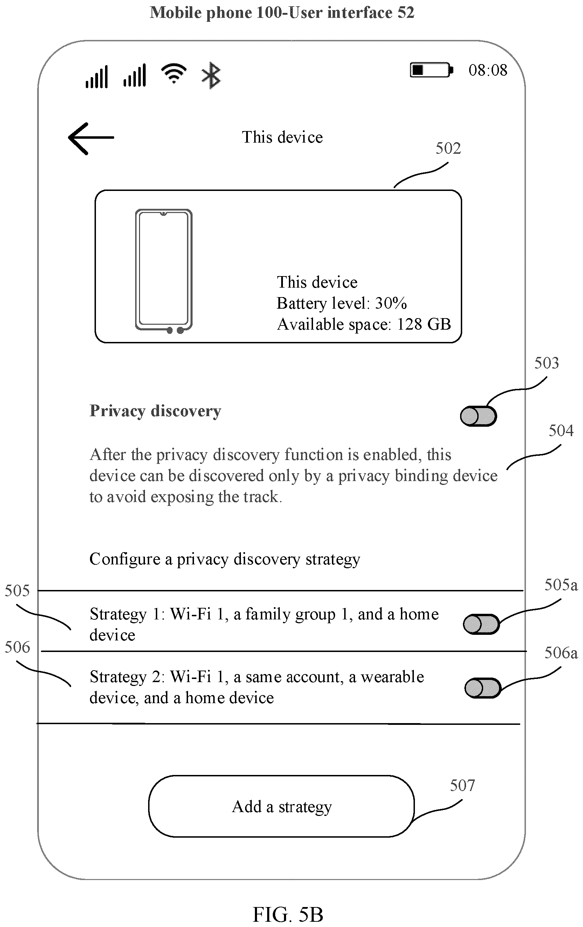

FIG. 5A and FIG. 5B show an example of another manner provided by the mobile phone 100 for enabling a "privacy discovery" function and configuring a privacy discovery strategy.

For a user interface 51 shown in FIG. 5B, refer to the user interface 32 shown in FIG. 3B. Details are not described herein again.

As shown in FIG. 5B, the mobile phone 100 may receive a user operation performed on a tab 302 of this device, and display, in response to the user operation, a user interface 52 shown in FIG. 5B. The user interface 52 displays detailed information 502 of this device, a control 503 for enabling/disabling the "privacy discovery" function, prompt information 504, one or more privacy discovery strategy entries 505 and 506, and a control 507 for adding a privacy discovery strategy.

The detailed information 502 of this device may include information such as a battery level and available storage space of the mobile phone 100. For meanings and functions of the control 503 for enabling/disabling the "privacy discovery" function, the prompt information 504, the one or more privacy discovery strategy entries 505 and 506, and the control 507 for adding a privacy discovery strategy, refer to meanings and functions of corresponding content on the user interface 34 shown in FIG. 3I. Details are not described herein again. This is equivalent to that the mobile phone 100 may enable the "privacy discovery" function and configure the privacy discovery strategy by using the user interface 52 shown in FIG. 5B.

According to the foregoing UI embodiments, a binding relationship between the mobile phone 100 and another device is consistent with the example binding relationship in the communication system 10 shown in FIG. 1. Specifically, devices that establish a common binding relationship rather than a privacy binding relationship with the mobile phone 100 include the body fat scale 107 and the VR glasses 104, and devices that establish a privacy binding relationship with the mobile phone 100 include the smart screen 110, the smart speaker 109, the camera 108, the PC 102, the tablet computer 105, the smartwatch 101, and the Bluetooth headset 106. There is no binding relationship between the mobile phone 100 and the mobile phone 103.

In some implementations of this application, the mobile phone 100 may further manage, by using a device management application, a "privacy discovery" function and a privacy discovery strategy of another device bound to the mobile phone 100.

For example, the another device may be a device that does not have a display or another input component, for example, a headset, a smart speaker, or a body fat scale.

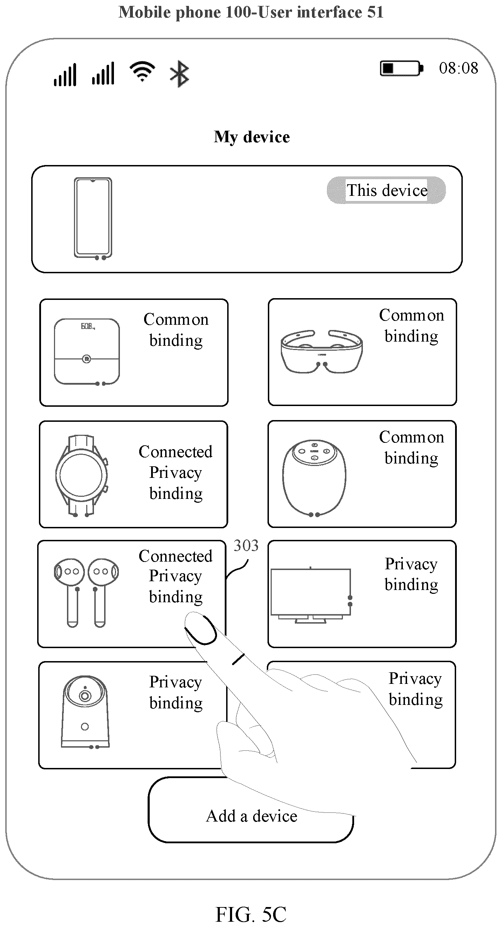

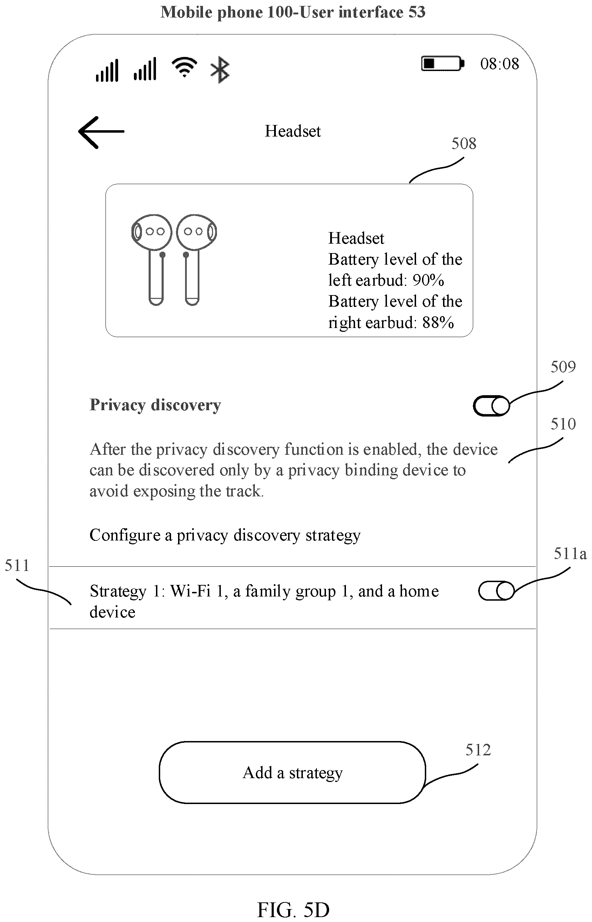

Refer to FIG. 5C. The mobile phone 100 may receive, on the user interface 51, a user operation performed on a tab 303 of the Bluetooth headset 106, and display, in response to the user operation, a user interface 53 shown in FIG. 5D. The user interface 53 displays detailed information 508 of the Bluetooth headset, a control 509 for enabling/disabling a "privacy discovery" function of the Bluetooth headset 106, prompt information 510, one or more privacy discovery strategy entries 511, and a control 512 for adding a privacy discovery strategy to the Bluetooth headset 106.

The mobile phone 100 may receive a user operation performed on the control 509, and enable/disable the "privacy discovery" function of the Bluetooth headset 106 in response to the user operation.

The mobile phone 100 may receive a user operation performed on a control in the privacy discovery strategy entry 511, to enable or disable a corresponding privacy discovery strategy in the Bluetooth headset 106.

The mobile phone 100 may receive a user operation performed on the control 512, to provide a user interface for adding a new privacy discovery strategy to the Bluetooth headset 106.

The "privacy discovery" function enabled/disabled for the Bluetooth headset 106 on the mobile phone 100, configured privacy discovery strategies, and enabled/disabled states of the privacy discovery strategies may be stored in the mobile phone 100, or may be sent by the mobile phone 100 to the Bluetooth headset 106. This is not limited herein.

After enabling the "privacy discovery" function, an electronic device may send a pseudonymized device identifier based on a privacy parameter and the enabled privacy discovery strategy, to control an exposure range of the electronic device.

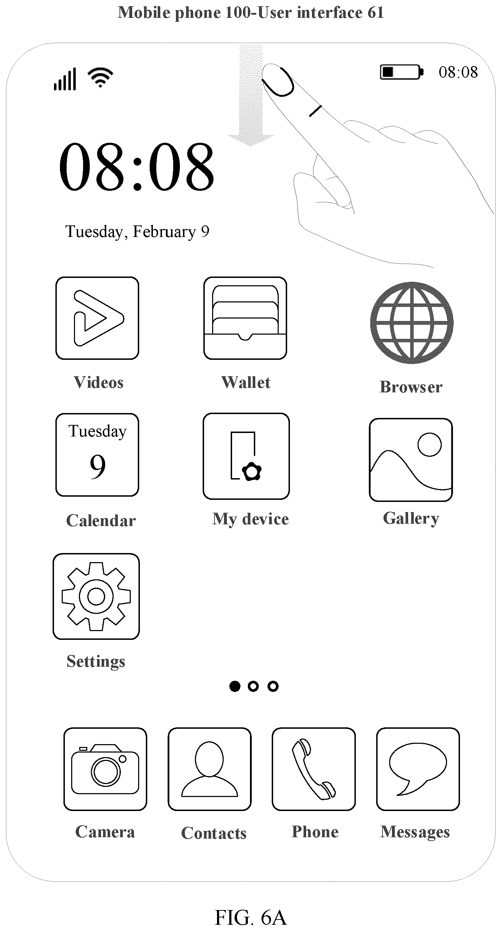

FIG. 6A to FIG. 6E show an example of a group of user interfaces related when the mobile phone 100 broadcasts a pseudonymized device identifier after enabling a "privacy discovery" function.

For a user interface 61 shown in FIG. 6A, refer to the user interface 31 shown in FIG. 3A. Details are not described herein again.

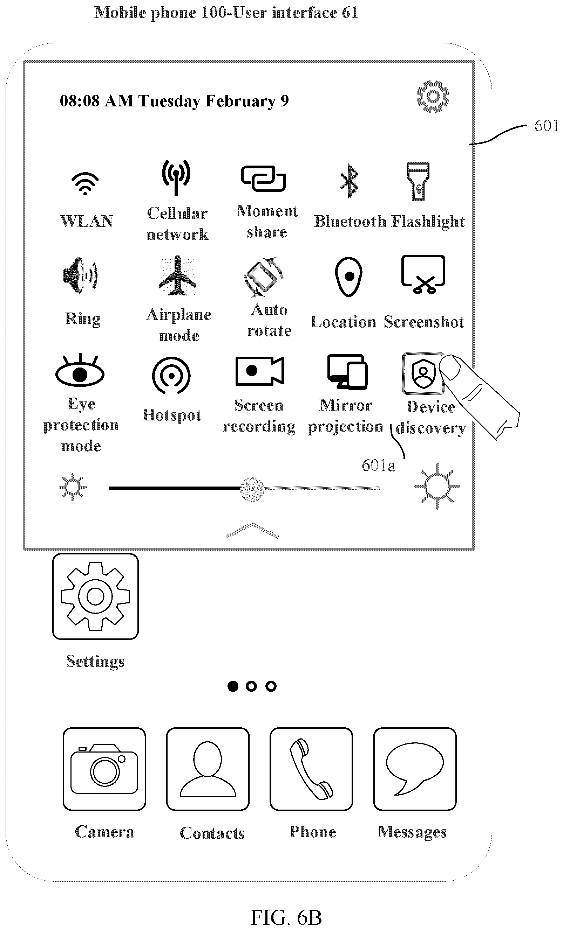

As shown in FIG. 6A, the mobile phone 100 may detect a gesture of swiping down from the top of the display, and display, in response to the operation, a drop-down notification bar 601 shown in FIG. 6B. A control 601a is displayed in the notification bar 601. The mobile phone 100 may detect a user operation performed on the control 601a, and broadcast a pseudonymized device identifier based on a privacy parameter and an enabled privacy discovery strategy in response to the user operation. For a specific implementation of broadcasting the pseudonymized device identifier by the mobile phone 100, refer to detailed descriptions in subsequent method embodiments.

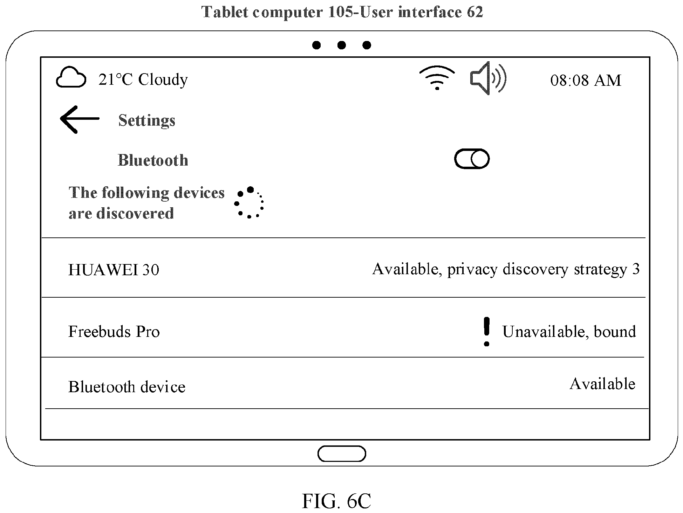

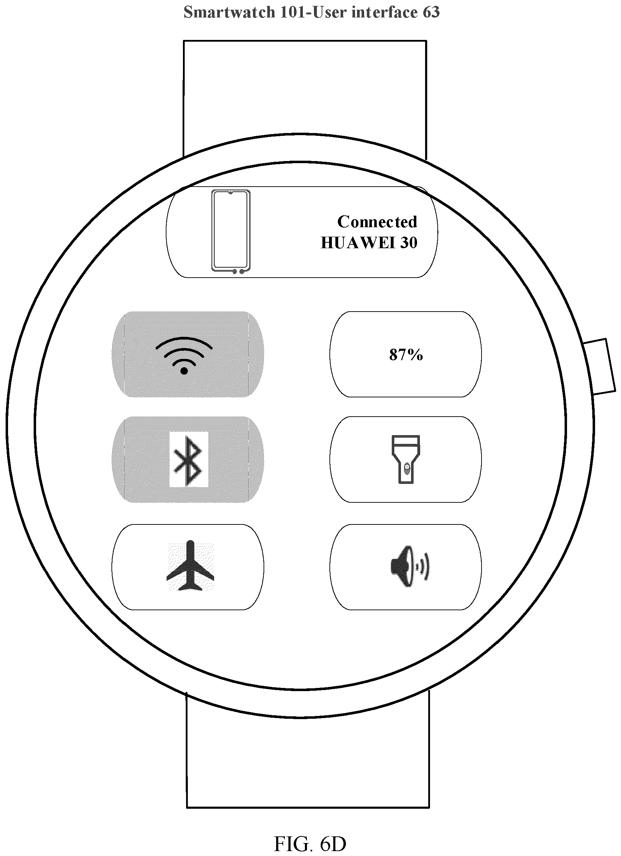

FIG. 6C and FIG. 6D show examples of user interfaces displayed by three devices that receive a message broadcast by the mobile phone 100. The three devices include the tablet computer 105 and the smartwatch 101 that have established a privacy binding relationship with the mobile phone 100, and the mobile phone 103 that has no binding relationship with the mobile phone 100.

FIG. 6C shows an example of a user interface 62 displayed by the tablet computer 105. The user interface 62 is a search interface displayed after Bluetooth is enabled on the tablet computer 105. As shown in FIG. 6C, device identifiers of devices found by the tablet computer 105 by using Bluetooth are displayed on the user interface 62, including a device identifier "HUAWEI 30" of the mobile phone 100, a device identifier "Freebuds Pro" of the Bluetooth headset 106, a device identifier of another Bluetooth device, and the like.

FIG. 6D shows an example of a user interface 63 displayed by the smartwatch 101. Prompt information indicating that the smartwatch 101 is connected to the mobile phone 100 is displayed on the user interface 63.

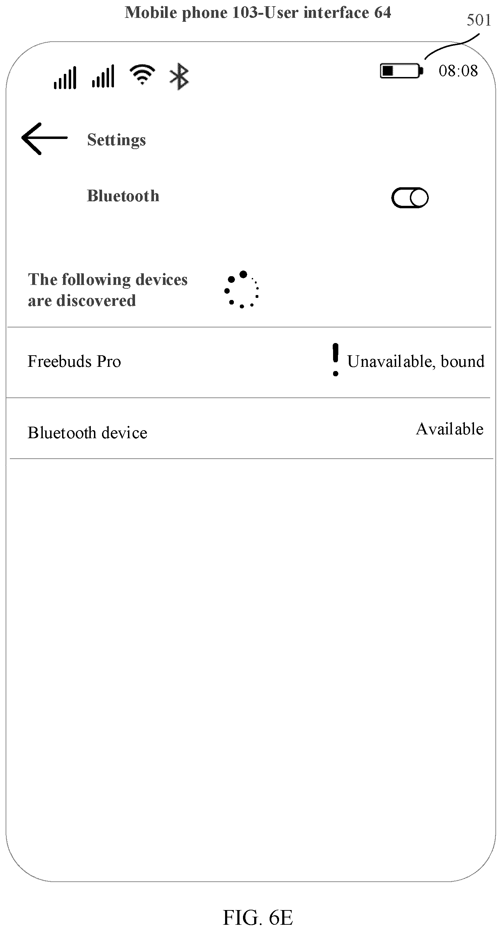

FIG. 6E shows an example of a user interface 64 displayed by the mobile phone 103. The user interface 64 is a search interface displayed after Bluetooth is enabled on the mobile phone 103. As shown in FIG. 6D, device identifiers of devices found by the mobile phone 103 by using Bluetooth are displayed on the user interface 64, including a device identifier "Freebuds Pro" of the Bluetooth headset 106 and a device identifier of another Bluetooth device, but excluding a device identifier "HUAWEI 30" of the mobile phone 100.

It can be learned by comparing FIG. 6C, FIG. 6D, and FIG. 6E that, privacy binding devices the tablet computer 105 and the smartwatch 101 of the mobile phone 100 can find and identify the device identifier sent by the mobile phone 100, and the mobile phone 103 that does not establish a binding relationship with the mobile phone 100 can find the device identifier sent by the mobile phone 100 but cannot identify the device identifier of the mobile phone 100, and therefore cannot display the device identifier of the mobile phone 100 on the user interface.

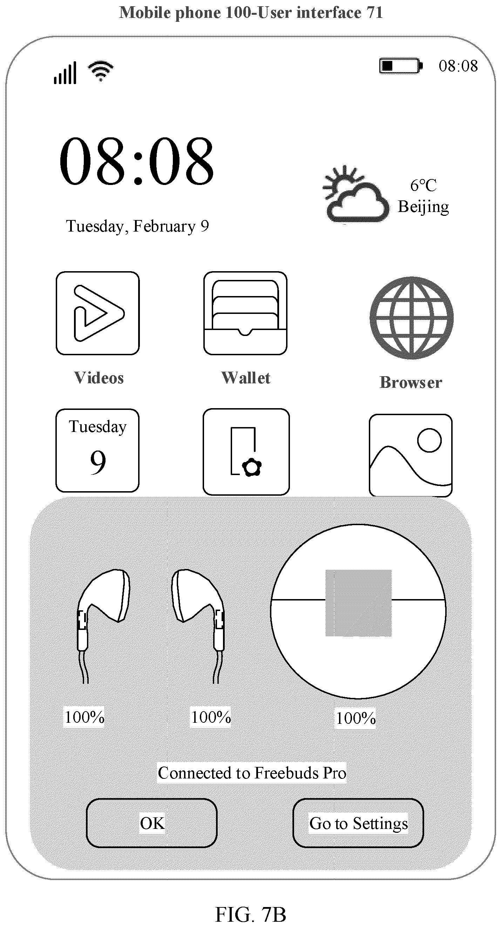

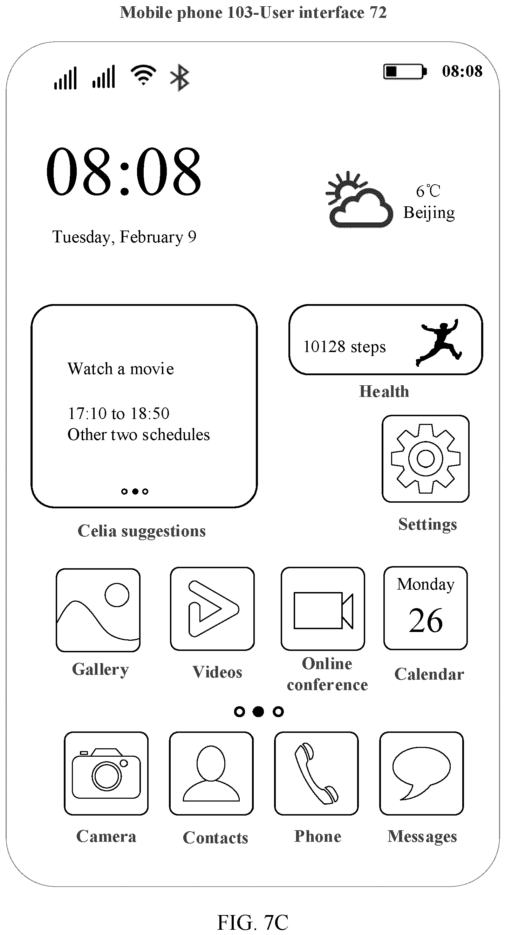

FIG. 7B and FIG. 7C show an example of a group of user interfaces related when the Bluetooth headset 106 broadcasts a pseudonymized device identifier after enabling a "privacy discovery" function.

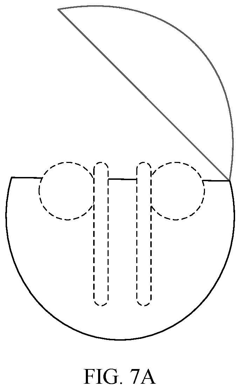

FIG. 7A shows an example of a scenario in which the Bluetooth headset 106 is placed in a headset case and the headset case is opened. In the scenario shown in FIG. 7A, the Bluetooth headset 106 may broadcast a pseudonymized device identifier based on a privacy parameter and an enabled privacy discovery strategy. For a specific implementation of broadcasting a device parameter of the Bluetooth headset 106, refer to detailed descriptions in subsequent method embodiments.

FIG. 7B shows an example of a user interface 71 displayed by the mobile phone 100 after a message broadcast by the Bluetooth headset 106 is received. The mobile phone 100 is a privacy binding device of the Bluetooth headset 106. Therefore, as shown in FIG. 7B, after receiving the message broadcast by the Bluetooth headset 106, the mobile phone 100 may identify a device identifier of the Bluetooth headset 106 carried in the message, to discover the Bluetooth headset 106 and display related information (such as a battery level and a name) of the Bluetooth headset 106.

FIG. 7C shows an example of a user interface 72 displayed by the mobile phone 103 after the mobile phone 103 receives the message broadcast by the Bluetooth headset 106. There is no binding relationship between the mobile phone 103 and the Bluetooth headset 106. Therefore, as shown in FIG. 7C, after receiving the message broadcast by the Bluetooth headset 106, the mobile phone 103 cannot identify the device identifier of the Bluetooth headset 106 carried in the message and cannot discover the Bluetooth headset 106, and therefore cannot display the related information (such as the battery level and the name) of the Bluetooth headset 106 on the user interface 72.

According to the scenario and the user interfaces shown in FIG. 7A to FIG. 7C, when a user opens a headset case to use a headset, only a privacy binding device of the headset can display a pop-up window to prompt the user, and another device cannot display a pop-up window to prompt the user. In this way, interference caused by the pop-up window to another user can be reduced, and the another user may also be prevented from learning of existence of the headset.

In some implementations, some or all privacy binding devices are selected from privacy binding devices of the mobile phone 100 based on a privacy discovery strategy as devices that can discover the mobile phone 100, and another non-binding device may be enabled to discover the mobile phone 100 based on an actual requirement of a user. In this way, an exposure range of the mobile phone 100 is expanded.

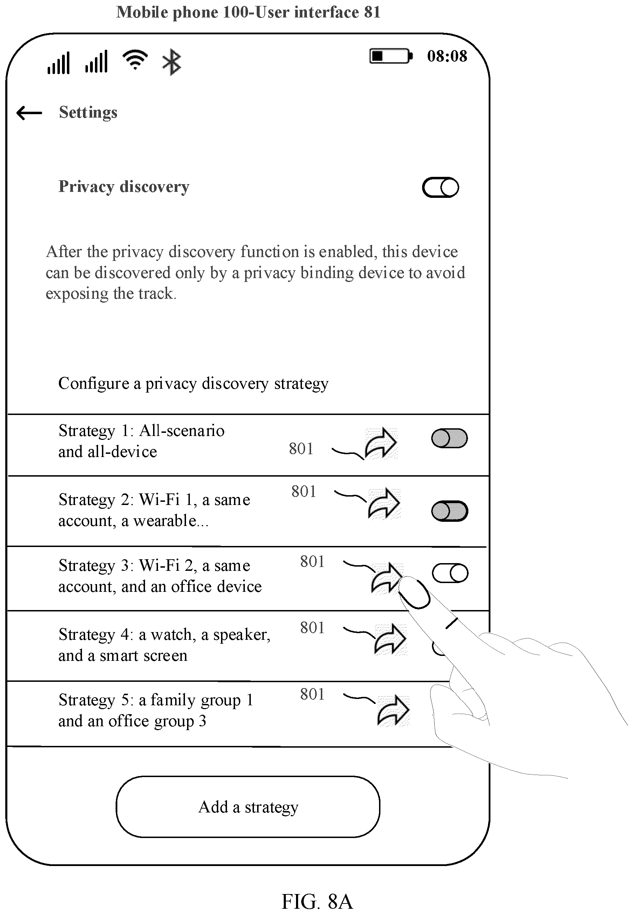

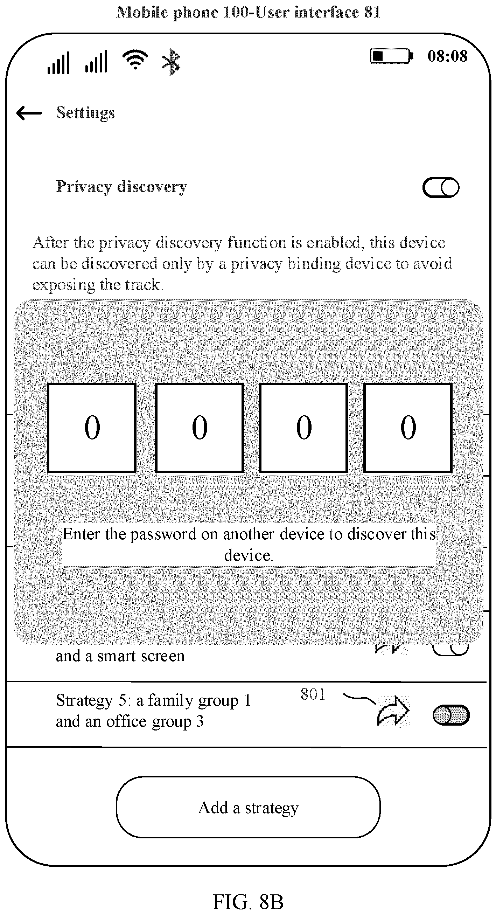

For example, refer to FIG. 8A. On a user interface 34 provided by the mobile phone 100, each privacy discovery strategy may correspond to a sharing control 801. The mobile phone 100 may receive a user operation performed on the sharing control 801, and display, in response to the user operation, a password and prompt information shown in FIG. 8B. The password indicates a key derived based on a privacy parameter of the mobile phone 100 and a corresponding privacy discovery strategy. Then, if the user enters the password on another device, the another device may learn of the key derived based on the privacy parameter of the mobile phone 100 and the corresponding privacy discovery strategy, and may identify, based on the key, a device identifier of the mobile phone 100 from a pseudonymized device identifier broadcast by the mobile phone 100, to discover the mobile phone 100.

In some other implementations, the password may alternatively not be displayed to the user in the foregoing password transmission process. For example, after detecting a user operation performed on the sharing control 801, the mobile phone 100 may display a device identifier of another nearby electronic device discovered by the mobile phone 100. Then, the user selects device identifiers of one or more devices, and the mobile phone 100 may send the password to the corresponding device identifiers. In this way, the password can be transferred without the need for the user to enter the password on another device.

The another device that learns of the key derived by the mobile phone 100 based on the privacy parameter of the mobile phone 100 and the corresponding privacy discovery strategy may be an electronic device that does not establish a binding relationship with the mobile phone 100. In this way, the electronic device that does not establish a binding relationship with the mobile phone 100 may also discover the mobile phone 100 in a manner of obtaining the password when the mobile phone 100 enables the corresponding privacy discovery strategy. This expands a discovery range of the mobile phone 100, and meets an actual requirement of the user.

The following describes interaction among the mobile phone 100, another device (for example, the Bluetooth headset 106 or the smart speaker 109), and a further device when the further device wants to connect to the another device after the mobile phone 100 establishes a privacy binding relationship with the another device.

First, whether a device that is privacy-bound to the mobile phone 100 can still be connected to another device is described.

In some implementations of this application, when displaying a device identifier of a discovered another device after discovering the another device, the electronic device may further display more information, for example, information indicating whether the device corresponding to the device identifier is in an available state, and an enabled privacy discovery strategy notified to the corresponding device.

Whether the device is in an available state may depend on a device type, or may be set by the user. For example, some devices with high privacy may be set to be bound and connected to only one device. After the device with high privacy is bound or connected to, even if the device is still found by another device, the device cannot establish a connection to the another device, and therefore is in an unavailable state. The device with high privacy may include, for example, a headset or a sound box. For another example, some devices may be set to be bound and connected to a plurality of devices. Even if the some devices are bound or connected to, after being found by another device, the devices may further establish a connection to the another device. The mobile phone 100 may set, for a privacy binding device (for example, the Bluetooth headset 106) of the mobile phone 100, a device, a group, or the like that can be connected. When discovering the privacy binding device of the mobile phone 100, the set device or group may consider that the privacy binding device is in an available state.

Refer to FIG. 6C. On the user interface 62 displayed by the tablet computer 105, the device identifier "HUAWEI 30" of the mobile phone 100 correspondingly displays whether the mobile phone 100 is in an available state, and the mobile phone 100 currently broadcasts the pseudonymized device identifier by using a privacy discovery strategy 3. The privacy discovery strategy 3 may be a strategy that is enabled and notified to the tablet computer 105 after the mobile phone 100 is privacy-bound to the tablet computer 105. In addition, the device identifier "Freebuds Pro" of the Bluetooth headset 106 correspondingly displays an exclamation mark, indicating that the headset is in an unavailable state, and a device identifier of another Bluetooth device correspondingly displays the Bluetooth device being in an available state.

Refer to FIG. 6E. On the user interface 64 displayed by the mobile phone 103, the device identifier "Freebuds Pro" of the Bluetooth headset 106 correspondingly displays the headset being in an unavailable state, and a device identifier of another Bluetooth device correspondingly displays the Bluetooth device being in an available state.

When the Bluetooth headset 106 is in an unavailable state, even if the tablet computer 105 or the mobile phone 103 sends a connection request to the Bluetooth headset, the Bluetooth headset 106 or the mobile phone 100 connected to the Bluetooth headset 106 rejects the connection request.

A case in which when the device identifier is displayed, the available state of the device is displayed at the same time is not limited. In some other implementations, after finding another device that is unavailable, the electronic device may directly not display a device identifier of the another device, that is, does not notify the user of the discovered device that is unavailable.

Second, a case in which a privacy binding device of the mobile phone 100 preempts a device that is privacy-bound and connected to the mobile phone 100 is described.

In some implementations, after the mobile phone 100 establishes a privacy binding relationship with another device (for example, the Bluetooth headset 106), if a further device (for example, the tablet computer 105) wants to connect to the another device after discovering the another device, and the tablet computer 105 is a privacy binding device of the mobile phone 100 or is a privacy binding device that complies with a privacy discovery strategy currently enabled on the mobile phone 100, the tablet computer 105 may be allowed to preempt the Bluetooth headset 106.

For example, after the mobile phone 100 establishes a connection to the Bluetooth headset 106, the tablet computer 105 discovers the Bluetooth headset 106 and displays the user interface 62 shown in FIG. 6C. After receiving a user operation performed on the device identifier "Freebuds Pro" of the Bluetooth headset 106 on the user interface 62, the tablet computer 105 may send a connection request to the Bluetooth headset 106. The Bluetooth headset 106 may initiate verification to the currently connected mobile phone 100. After the mobile phone 100 verifies that the tablet computer 105 is a privacy binding device of the mobile phone 100 or a privacy binding device that complies with a privacy discovery strategy currently enabled on the mobile phone 100, the Bluetooth headset 106 may establish a connection to the tablet computer 105, so that the tablet computer 105 can preempt the Bluetooth headset 106.

Then, a case in which another device wants to connect to a device that is privacy-bound and connected to the mobile phone 100 is described.

In some implementations, after the mobile phone 100 establishes a privacy binding relationship with another device (for example, the Bluetooth headset 106), if a further device (for example, the mobile phone 103) wants to connect to the another device after discovering the another device, the mobile phone 100 may prompt the user that the mobile phone 103 wants to connect to the Bluetooth headset 106 currently, and then determine, based on a selection of the user, whether to connect the Bluetooth headset 106 to the mobile phone 103.

For example, after the mobile phone 100 establishes a connection to the Bluetooth headset 106, the mobile phone 103 discovers the Bluetooth headset 106 and displays the user interface 62 shown in FIG. 6C. After receiving a user operation performed on the device identifier "Freebuds Pro" of the Bluetooth headset 106 on the user interface 62, the mobile phone 103 may send a connection request to the Bluetooth headset 106. The Bluetooth headset 106 may initiate a query to the currently connected mobile phone 100, to query whether the mobile phone 100 agrees to switch to connect the Bluetooth headset 106 to the mobile phone 103. If the mobile phone 100 receives an operation of indicating, by the user, to agree to the switching, the Bluetooth headset 106 may establish a connection to the mobile phone 103, so that the mobile phone 103 can preempt the Bluetooth headset 106. The operation of indicating, by the user, to agree to the switching may have a plurality of forms, for example, may include an operation performed on a control on a user interface displayed by the mobile phone 100, an operation of moving the mobile phone 100 close to the mobile phone 103 by the user, or a user operation of shaking the mobile phone 100. This is not limited in embodiments of this application.

In some other implementations, the Bluetooth headset 106 may initiate a query to the mobile phone 100 after the mobile phone 103 initiates a plurality of connection requests, and directly reject previous several connection requests. A quantity of direct rejection times may be preset, or may be set by the user.

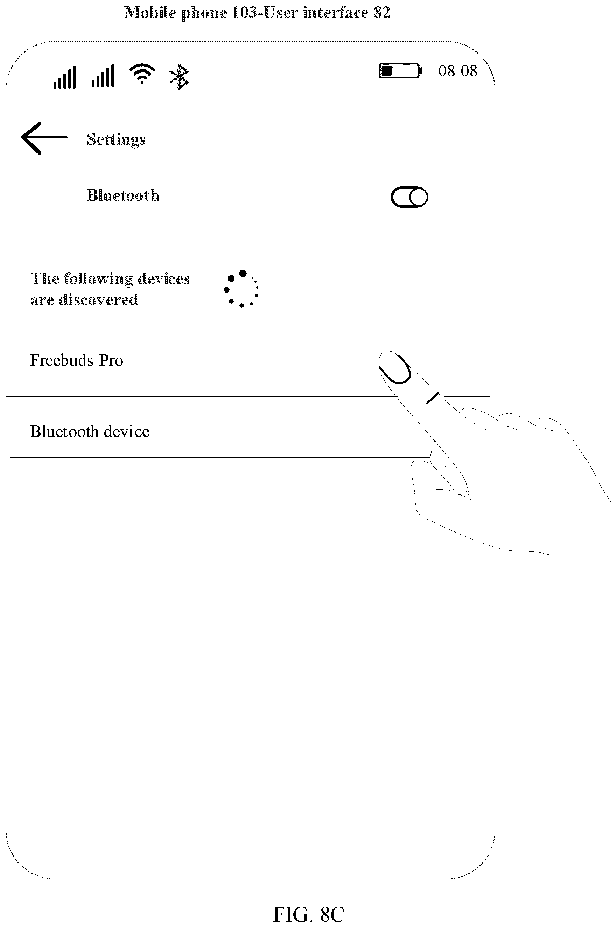

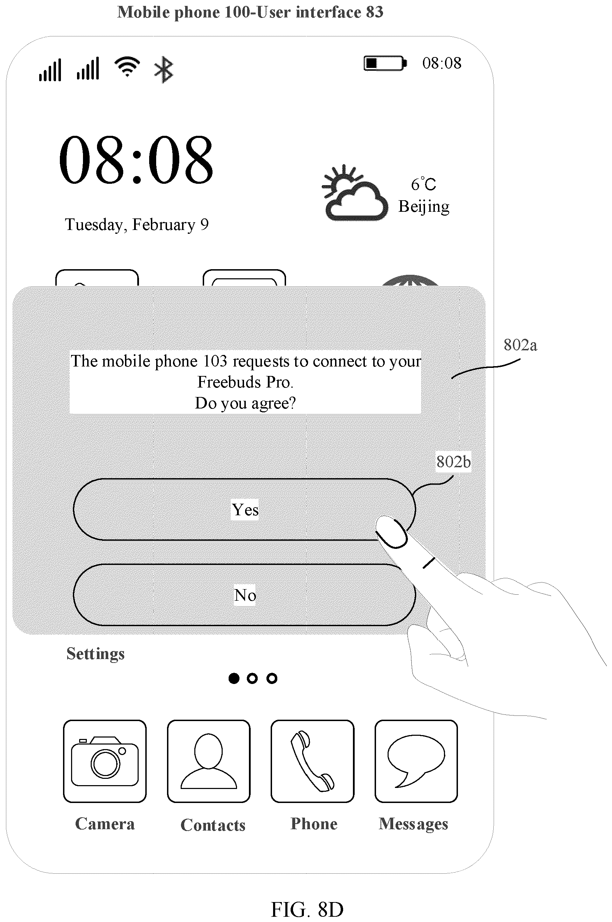

Refer to FIG. 8C and FIG. 8D. FIG. 8C shows an example of device identifiers of devices discovered by the mobile phone 103, including the device identifier "Freebuds Pro" of the Bluetooth headset 106. As shown in FIG. 8C, the mobile phone 103 may detect a user operation performed on the device identifier "Freebuds Pro" of the Bluetooth headset 106, and initiate a connection request to the Bluetooth headset 106. FIG. 8D shows an example of prompt information 802a and a control 802b that are displayed by the mobile phone 100 connected to the Bluetooth headset 106 after the Bluetooth headset 106 receives a connection request sent by the mobile phone 103. The prompt information 802a is used to prompt the user whether to switch to connect the Bluetooth headset 106 to the mobile phone 103. The control 802b is used to receive a user operation, and the mobile phone 100 may trigger, in response to the user operation, the Bluetooth headset 106 to establish a connection to the mobile phone 103.

Then, a case in which after the mobile phone 100 discovers another device, the mobile phone 100 wants to switch a device that is privacy-bound and connected to the mobile phone 100 to the another device discovered by the mobile phone 100 is described.

In some implementations, after the mobile phone 100 establishes a privacy binding relationship with another device (for example, the Bluetooth headset 106), if the mobile phone 100 finds a further device (for example, the PC 102) nearby, the mobile phone 100 may notify the user of the further device discovered by the mobile phone 100, and may switch to connect the Bluetooth headset 106 to the further device under triggering of the user or actively.

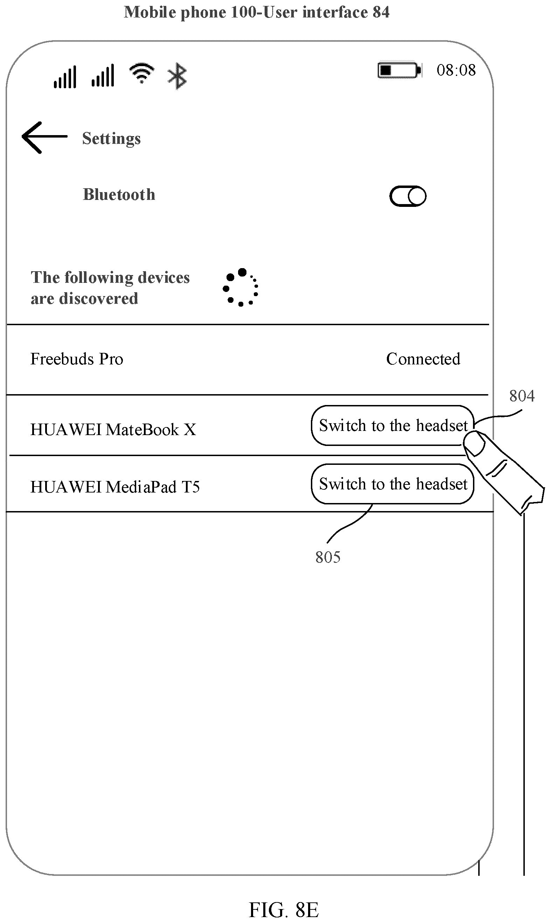

FIG. 8E shows an example of a user interface 84 displayed by the mobile phone 100 after discovering the PC 102 nearby. The device identifier "HUAWEI MateBook X" of the PC 102 and a corresponding control 804, and the device identifier "HUAWEI MediaPad T5" of the tablet computer 105 and a corresponding control 805 are displayed on the user interface 84. The control 804 may be used to receive a user operation, and the mobile phone 100 may trigger, in response to the user operation, the Bluetooth headset 106 to connect to the PC 102. The control 805 may also be used to receive a user operation, and the mobile phone 100 may trigger, in response to the user operation, the Bluetooth headset 106 to connect to the tablet computer 105.

The further device mentioned in the foregoing several implementations may be a privacy binding device (for example, the PC 102) of the mobile phone 100, or may be a common binding device of the mobile phone 100, or may be a further device (for example, the mobile phone 103) that has no binding relationship with the mobile phone 100. This is not limited herein.

Statuses of interaction among the mobile phone 100, the privacy binding device of the mobile phone 100, and the further device that are described in the foregoing several implementations may be extended to statuses of interaction among a first device, a privacy binding device of the first device, and another device. Details are not described herein again.

Based on the communication system shown in FIG. 1, the electronic device shown in FIG. 2A to FIG. 2C, and the user interfaces described in the foregoing UI embodiments, the following describes in detail a device discovery method provided in an embodiment of this application.

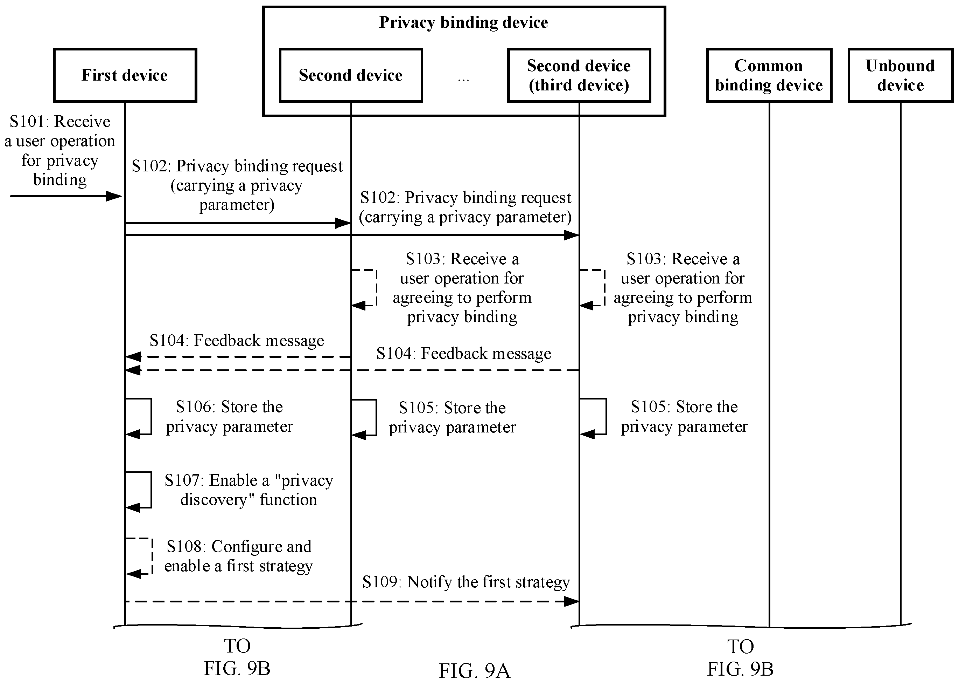

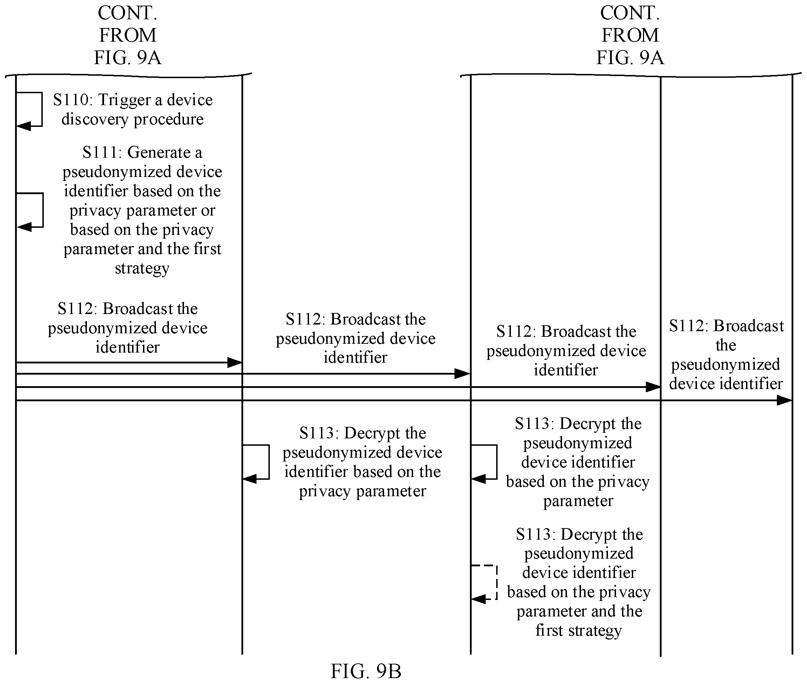

FIG. 9A and FIG. 9B are a schematic flowchart of the device discovery method. As shown in FIG. 9A and FIG. 9B, the method may include the following steps.

Phase 1: Establish a privacy binding relationship.

S101: A first device receives a user operation for performing privacy binding with a second device.

Device types of the first device and the second device are not limited in embodiments of this application. For example, both the first device and the second device may be any electronic device mentioned in the foregoing embodiments. For example, the first device may be the mobile phone 100, and the second device may be the PC 102. There may be one or more second devices.

An implementation form of the user operation for performing privacy binding with the second device is not limited in embodiments of this application. The operation may be a user operation performed on a user interface displayed by the first device, or may be a user operation performed on a physical button of the first device, or may be a voice instruction, a mid-air floating gesture, an operation of moving the first device close to the second device, or the like.

For example, refer to FIG. 3D and FIG. 3E. The user operation for performing privacy binding with the second device may be, for example, a user operation performed on the displayed control 306b after the mobile phone 100 displays a plurality of discovered device identifiers and receives a user operation performed on the device identifier "HUAWEI MateBook X" 305. Herein, the first device is the mobile phone 100, and the second device is the PC 102 whose device identifier is "HUAWEI MateBook X". In the foregoing process, a user interface on which the mobile phone 100 displays device identifiers of one or more discovered devices is, for example, the user interface 33 shown in FIG. 3D, and may be referred to as a second user interface. A user interface displayed after the first device receives a user operation performed on a device identifier is, for example, the user interface 33 shown in FIG. 3E, and may be referred to as a third user interface. On the third user interface, a control for receiving the user operation for performing privacy binding with the second device is, for example, the control 306b shown in FIG. 3E, and may be referred to as a first control. A user operation performed on the control for receiving the user operation for performing privacy binding with the second device is, for example, a user operation performed on the control 306b shown in FIG. 3E, and may be referred to as a first operation.

This is not limited to that the user further needs to enter a user operation on the control 306b after selecting the device identifier of the PC 102 shown in FIG. 3D and FIG. 3E. In some other implementations of this application, the mobile phone 100 may send a privacy binding request to the PC 102 after receiving the user operation performed on the device identifier "HUAWEI MateBook X" 305. In other words, the user operation for performing privacy binding with the second device may be the user operation performed on the device identifier "HUAWEI MateBook X" 305 that is received after the mobile phone 100 displays a plurality of discovered device identifiers.

For another example, the user operation for performing privacy binding with the second device may be a user operation for upgrading a common binding relationship to a privacy binding relationship. For example, after receiving the user operation performed on the device identifier "HUAWEI MateBook X" 305 in FIG. 3D, the mobile phone 100 may first establish a common binding relationship with the PC 102. Then, the user operation for performing privacy binding with the second device may be a user operation received by the mobile phone 100 on the control 402 on the user interface 42 shown in FIG. 4B.

S102: The first device sends a privacy binding request to the second device, where the privacy binding request carries a privacy parameter.

In this embodiment of this application, the first device may first establish a communication connection to the second device, and then send the privacy binding request to the second device through the communication connection. There may be a plurality of technologies used by the first device to establish a connection, namely, the communication connection, to the second device. For example, the technologies may include but are not limited to WLAN, Wi-Fi, BT, NFC, IR, ZigBee, UWB, and a cellular network. These communication technologies may be used by the first device to send the privacy binding request to the second device, and used for communication between the first device and the second device in subsequent steps in the device discovery method shown in FIG. 9A and FIG. 9B.

The privacy binding request is used by the first device to request to establish a privacy binding relationship with the second device.

An implementation form of the privacy parameter of the first device may be a key. According to different encryption manners, the privacy parameter may be classified into two types: one is a symmetric key, and the other is a group of asymmetric keys including a public key and a private key.

In some implementations, the privacy parameter of the first device is generated by the first device. For example, the first device may derive a symmetric key or a group of asymmetric keys based on existing information such as a pairing key (for example, a Bluetooth pairing key), a device identifier, an account, a personal identification number (personal identification number, PIN), and a trust credential, and send the symmetric key to the second device, or send a public key in the asymmetric key to the second device. There may be a plurality of algorithms for deriving the privacy parameter, for example, key derivation functions such as HKDF, Argon2, and Scrypt PBKDF2. This is not limited herein.

In some other implementations, the first device may randomly generate the privacy parameter.

In some other implementations, the privacy parameter of the first device may alternatively be prestored in the first device. For example, the first device may prestore a symmetric key or a group of asymmetric keys, and send the prestored symmetric key to the second device, or send a public key in the prestored asymmetric key to the second device.

In some implementations, the first device may send a same privacy parameter to all devices that perform privacy binding with the first device. In some other implementations, different privacy parameters may be sent for devices of different accounts, devices of different types, or different devices based on different accounts, device types, devices, or the like.

In some implementations, the privacy binding request may further carry a device identifier of the first device, to indicate that the privacy binding request is sent by the first device. The device identifier of the first device indicates the first device. The device identifier may be implemented in a plurality of forms. This is not limited in embodiments of this application.

The device identifier in this embodiment of this application may include a device identifier that can be sensed by a bottom layer. For example, the device identifier may be an Internet protocol address (Internet protocol address, IP), media access control (media access control, MAC), a serial number, an international mobile equipment identity (international mobile equipment identity, IMEI), a mobile phone number to which a physical SIM card or an eSIM in an electronic device belongs, a currently logged-in system account (for example, a Huawei account) of the electronic device, an identifier of a group in which the electronic device joins, or the like. In some implementations, the device identifier may further include a user-defined device identifier that can be sensed or easily identified, for example, "HUAWEI MateBook X", "HUAWEI MediaPad T5", "Freebuds Pro", "Mobile phone of a user A", "Headset of the user A", "Bluetooth headset of a user B", and "Watch of the user B".

Optionally, in S103, the second device receives a user operation for agreeing to perform privacy binding with the first device.

An implementation form of the user operation for agreeing to perform privacy binding with the first device is not limited in embodiments of this application. The user operation may be a user operation performed on a user interface displayed by the second device, or may be a user operation performed on a physical button of the second device, or may be a voice instruction, a mid-air floating gesture, an operation of moving the second device close to the second device, or the like.

For example, refer to FIG. 3F. The user operation for agreeing to perform privacy binding with the first device may be, for example, a user operation performed on the control 307a on the user interface 34 displayed by the PC 102.

Optionally, in S104, the second device sends a feedback message to the first device, where the feedback message indicates that the second device agrees to perform privacy binding with the first device.

S103 and S104 are optional steps. In some implementations, after receiving the privacy binding request sent by the first device, the second device may agree with the privacy binding request by default, and a user does not need to trigger to agree with the privacy binding request. In some implementations, the second device may alternatively agree with the privacy binding request by default, and does not need to send, to the first device, the feedback message indicating that the second device agrees to perform privacy binding.

S105: The second device stores the privacy parameter of the first device.

After agreeing to establish the privacy binding relationship with the first device, the second device may store the privacy parameter of the first device.

In some implementations, the second device may store the device identifier and the privacy parameter of the first device in an associated manner. In some other implementations, the second device may alternatively store only the privacy parameter of the first device.

S106: The first device stores the privacy parameter.

If S104 is performed, the first device may store the privacy parameter after receiving the feedback message. If the second device agrees, by default, with the privacy binding request sent by the first device, the first device may store the privacy parameter after sending the privacy binding request.

If the privacy parameter is a symmetric key, the first device stores the symmetric key. If the privacy parameter is an asymmetric key, the first device may store a private key in the asymmetric key.

If the first device sends the same privacy parameter to all devices in S102, the first device may store the privacy parameter. If the first device sends different privacy parameters to devices of different accounts, devices of different types, or different devices in S102, the first device may store accounts, types, or device identifiers and corresponding privacy parameters in an associated manner.

After S105 and S106 are performed, the first device establishes the privacy binding relationship with the second device, and the second device becomes a privacy binding device of the first device.

This is not limited to that the first device sends the privacy binding request that carries the privacy parameter described in the foregoing steps S102 to S106. In some other implementations, the first device may alternatively first send, to the second device, a privacy binding request that carries no privacy parameter, and after the second device agrees with the request, the first device sends the privacy parameter to the second device.

In some implementations, in a phase in which the first device establishes the privacy binding relationship with the second device, the first device may establish a common binding relationship with the second device at the same time, that is, the first device and the second device exchange trust credentials of each other. For example, the first device may carry the trust credential of the first device in the privacy binding request, and the second device may carry the trust credential of the second device in the feedback message. The trust credential may be information that proves an identity of the electronic device, such as a digital certificate, a public key, or a symmetric key.

In some implementations, the first device may alternatively establish a common binding relationship with the second device before the first device establishes the privacy binding relationship with the second device. For example, the first device may first establish the common binding relationship with the second device, and then a process of establishing the privacy binding relationship described in the phase 1 is performed.

In some implementations, in the phase in which the first device establishes the privacy binding relationship with the second device, the second device may alternatively send a privacy parameter of the second device to the second device, to complete privacy parameter exchange between the two devices. In some other implementations, the privacy parameter of the first device may be used when the first device sends the device identifier and the second device sends a device identifier, which is equivalent to that the first device and the second device share the privacy parameter.

In some implementations of this application, the first device may alternatively be a device that does not have a display or another input component, for example, a Bluetooth headset, a smart speaker, or a body fat scale. In this case, the first device may establish a privacy binding relationship with the second device by using a management device of the first device. For example, a mobile phone may be used to manage the Bluetooth headset, and the user may trigger, via a user interface provided by the mobile phone, the Bluetooth headset to establish the privacy binding relationship with the second device.

The first device may establish privacy binding management with one second device, or may establish privacy binding relationships with a plurality of second devices. FIG. 9A and FIG. 9B show two second devices as an example.

Phase 2: Configure a privacy discovery strategy.

S107: The first device enables a "privacy discovery" function.

In some implementations, the first device may enable the "privacy discovery" function by default.

In some implementations, the first device may enable the "privacy discovery" function in response to a received user operation. In this embodiment of this application, the "privacy discovery" function may also be referred to as a first function. The user operation for enabling the "privacy discovery" function may be referred to as a second operation.

There are a plurality of scenarios in which the first device enables the "privacy discovery" function in response to the user operation. The following lists several possible cases.
1. After establishing the privacy binding relationship with the second device, the first device prompts the user to enable the "privacy discovery" function, and enables the "privacy discovery" function after receiving a user operation.

For example, refer to FIG. 3H. After the mobile phone 100 establishes the privacy binding relationship with the PC 102, if the "privacy discovery" function is not enabled on the mobile phone 100 currently, the mobile phone 100 may display the window 308, and display the prompt information 308a in the window 308 to prompt the user to enable the "privacy discovery" function. Then, the mobile phone 100 may enter, in response to the user operation that is shown in FIG. 3H and that is performed on the control 308b, the user interface 34 that is shown in FIG. 3I and that is provided by the settings (settings) application, and enable the "privacy discovery" function after detecting the user operation that is performed on the control 309.

For another example, refer to FIG. 5A and FIG. 5B. The mobile phone 100 may receive, on the user interface 52 shown in FIG. 5B provided by the device management application, a user operation performed on the control 503, and enable the "privacy discovery" function in response to the user operation.

2. The first device may respond to a user operation based on an actual requirement of the user when the user needs, to enable the "privacy discovery" function.

For example, the user may tap an icon of the settings (settings) application on a home screen of the mobile phone 100 to enter the user interface 34 shown in FIG. 3I, and enable the "privacy discovery" function after detecting a user operation performed on the control 309.

For another example, the mobile phone 100 may provide, in a pull-down notification bar or a pull-up notification bar, a control for enabling/disabling the "privacy discovery" function, so that the user enables/disables the "privacy discovery" function.

For another example, the mobile phone 100 may further enable the "privacy discovery" function in response to a received voice instruction, and the like.

In the cases 1 and 2, the user interface 34 shown in FIG. 3I may also be referred to as a fourth user interface, and the control 309 for enabling/disabling the "privacy discovery" function in FIG. 3I may also be referred to as a second control.

3. Under a specific condition, the first device directly enables the "privacy discovery" function, or prompts the user to enable the "privacy discovery" function, and then enables the "privacy discovery" function in response to a user operation.

The specific condition may be preset, and there may be one or more specific conditions. For example, the specific condition may include, for example, at specific time (for example, a working day), or the first device enters a specific area (for example, an office area), or the first device finds that there are more than a specific quantity of other devices nearby.

4. When triggering a device discovery procedure, the first device prompts the user to enable the "privacy discovery" function, and then enables the "privacy discovery" function in response to a user operation.

For a specific implementation of triggering the device discovery procedure by the first device, refer to related descriptions of subsequent S110.

In the foregoing implementations, the first device may prompt the user in a plurality of manners. Not limited to being prompted by using an interface element displayed on the display, the user may also be prompted by using a voice, vibration, or another output form. This is not limited herein.

For a first device that does not have a display or another input component, for example, a Bluetooth headset, a smart speaker, or a body fat scale, the first device may enable the "privacy discovery" function by using a management device of the first device. For example, refer to FIG. 5C and FIG. 5D. The mobile phone 100 may provide the user interface 53 for displaying detailed information of the Bluetooth headset 106, and trigger the Bluetooth headset 106 to enable the "privacy discovery" strategy after detecting a user operation performed on the control 509 on the user interface 53.

Optionally, in S108, the first device configures and enables a first strategy.

First, a definition of the privacy discovery strategy is described.

The privacy discovery strategy indicates which devices in privacy binding devices of the first device can discover the first device. This is equivalent to that the privacy discovery strategy indicates a condition that another device that can discover the first device needs to meet. After the privacy discovery strategy is enabled, only a device that complies with the privacy discovery strategy can discover the first device.

The privacy discovery strategy may include but is not limited to any one or more of the following: an account type, an account, a network type, a network identifier, a location, a device type, a device identifier, or a group. This is equivalent to that the privacy discovery strategy indicates any one or more of the following: an account type, an account, a network type, a network, a location, a device type, a device, or a group.

The account may be a logged-in system account (for example, a Huawei account or another account) of the device. The account type may be whether to log in to a same account as the first device, and may include a same account, a different account, an associated account, a family account, or the like. A plurality of electronic devices may log in to a same account, a family account, or associated accounts, for example, log in to a same system account (for example, a Huawei account), then separately communicate, by using a cellular network technology or a wide area network technology, with a server (for example, a server provided by Huawei) that maintains the system account, and then communicate with each other through the server. The family account is an account shared by family members. The associated accounts are a plurality of accounts that are bound.

The network type may be classified into a home network, an office network, a trusted network, an untrusted network, a Wi-Fi network, a cellular network, and the like. The network identifier may identify a network accessed by the device.

The location may indicate one or more geographical locations.

The device type may include an office device, a home device, a wearable device, and the like.

The group may include one or more accounts, and a device that logs in to the account belongs to the group. Alternatively, the group may include one or more device identifiers, and a device corresponding to the device identifier belongs to the group.

This is equivalent to that the privacy discovery strategy may restrict, from a plurality of factors such as a location, a network, a device type, a logged-in account, and a group to which the first device belongs, a device range in which the first device can be discovered, to fully meet a requirement of the user.

That the electronic device complies with the privacy discovery strategy means that each attribute of the electronic device complies with each item in the privacy discovery strategy currently. For example, it is assumed that the first strategy includes any one or more of the following: a first account type, a first account, a first network type, a first network identifier, a first location, a first device type, a first device identifier, and a first group. In this case, another device that complies with the first strategy and can discover the electronic device meets any one or more of the following conditions: A currently logged-in account belongs to the first account type, the currently logged-in account is the first account, a currently accessed network belongs to the first network type, a network corresponding to the first network identifier is currently accessed, a current location is the first location, a device type is the first device type, a device identifier is the first device identifier, and the electronic device belongs to the first group.

For an electronic device, a logged-in account of the electronic device may change with an operation of the user, an accessed network may change with an operation of the user or a location of the electronic device, a location of the electronic device may also change, a group to which the electronic device belongs may change with an actual requirement of the user, and a device type and a device identifier usually do not change. Therefore, for a same privacy discovery strategy, a same electronic device may comply with the privacy discovery strategy in one scenario, but does not comply with the privacy discovery strategy in another scenario. For example, if a network accessed by the electronic device changes, the electronic device may no longer comply with the privacy discovery strategy.

Second, how the first device configures the privacy discovery strategy is described.

Configuring the privacy discovery strategy means to store the privacy discovery strategy in the first device.

In some implementations, the first device may preconfigure some privacy discovery strategies. For example, the first device may preconfigure some privacy discovery strategies before delivery, for example, may preconfigure the strategy 1 and the strategy 2 mentioned in the foregoing UI embodiments.

In some implementations, the first device may configure the privacy discovery strategy in response to a received user operation. The configuring herein may be adding a privacy discovery strategy, or may be adjusting or changing an original privacy discovery strategy. The user may input a user operation to the first device at any moment to configure the privacy discovery strategy, and does not necessarily need to configure the privacy discovery strategy only after the "privacy discovery" function is enabled. This is not limited herein.

For example, refer to FIG. 3J to FIG. 3S. The mobile phone 100 may receive, on the user interface 34 provided by the settings application, a user operation performed on the control 316 for adding more strategies, and display the user interface 36 for adding a new privacy discovery strategy, to configure the privacy discovery strategy. The user interface 34 may be a user interface displayed by the mobile phone 100 in response to a user operation performed on the control 308b shown in FIG. 3H, or may be a user interface displayed after the user taps the icon of the settings (settings) application on the home screen of the mobile phone 100.

For another example, refer to FIG. 3U to FIG. 3W. The mobile phone 100 may display the detail displaying and editing interface of the strategy 3 shown in FIG. 3W in response to a user operation performed on the control 325b in FIG. 3U, or in response to a user operation performed on the control 326b in FIG. 3V, so that the user can configure the privacy discovery strategy on the interface.

For another example, refer to FIG. 5B. The mobile phone 100 may provide the user interface 52 for displaying detailed information of the mobile phone 100, and display, after detecting a user operation performed on the control 507 on the user interface 52, the user interface 36 for adding a new privacy discovery strategy, to configure the privacy discovery strategy for the mobile phone 100.

It can be learned that the first device may configure one or more privacy discovery strategies.

Then, how the first device enables the privacy discovery strategy is described.

The first device may enable the privacy discovery strategy after enabling the "privacy discovery function".

In some implementations, the first device may enable one or more privacy discovery strategies by default. For example, the first device may pre-enable some privacy discovery strategies before delivery, for example, may pre-enable the strategy 1 mentioned in the foregoing UI embodiments.

In some implementations, the first device may enable one or more privacy discovery strategies in response to a received user operation.

For example, refer to FIG. 3I to FIG. 3T. The mobile phone 100 may receive a user operation on a control (for example, the control 311a or the control 312a) that is for enabling the privacy discovery strategy and that is in an entry corresponding to the privacy discovery strategy, and enable the corresponding privacy discovery strategy in response to the user operation.

For another example, the mobile phone 100 may alternatively receive, on a user interface for editing or adding a privacy discovery strategy, a user operation performed on a control (for example, the control 315 in FIG. 3K, the control 324 in FIG. 3M, or the control 324 in FIG. 3Q) for storing and enabling a corresponding strategy, to enable the corresponding privacy discovery strategy.

For another example, refer to FIG. 5B. The mobile phone 100 may receive, on the user interface 52 provided by the device management application, a user operation performed on an enabling control (for example, a control 505a or a control 506a) corresponding to an entry of the privacy discovery strategy, and enable the corresponding privacy discovery function in response to the user operation.

For a device that does not have a display or another input component, for example, a Bluetooth headset, a smart speaker, or a body fat scale, the first device may configure and enable the privacy discovery strategy by using a management device of the first device. For example, refer to FIG. 4D. The mobile phone 100 may receive a user operation performed on a View control on the user interface 42, to configure or enable a corresponding privacy discovery strategy. For another example, refer to FIG. 5D. The mobile phone 100 may display the user interface 53 for displaying detailed information of the Bluetooth headset 106 managed by the mobile phone 100. The mobile phone 100 may receive a user operation performed on the control 512, to configure a new privacy discovery strategy. The mobile phone 100 may further receive a user operation performed on a control 511a in the entry 511 corresponding to a privacy discovery strategy, to enable the corresponding privacy discovery strategy.

In some implementations, the privacy discovery strategy configured by the first device corresponds to an enabling condition. The first device may detect whether a current condition meets the enabling condition, and automatically enable the privacy discovery strategy when the enabling condition is met.

The enabling condition may include but is not limited to any one or more of the following: time, a location of the first device, and a network accessed by the first device. The time may indicate one or more time periods. These time periods may be a plurality of repeated time periods, or may be a separate non-repeated time period. There may be one or more locations. There may be one or more networks. For example, it is assumed that an enabling condition of the strategy 1 is rest time and an enabling condition of the strategy 3 is working time. In this case, the first device enables the strategy 1 during the rest time and enables the strategy 3 during the working time.

There are a plurality of manners of setting the enabling condition of the privacy discovery strategy. For example, the enabling condition may be set by the first device by default, or may be set by the user via a user interface provided by the first device. This is not limited herein.

Different privacy discovery strategies in the first device may respectively correspond to different enabling conditions. In this way, the first device may enable different privacy discovery strategies under different conditions, so that the first device is exposed in different device ranges, to meet personalized requirements of the user. For example, in a home space, the user expects that the first device can be discovered by a privacy binding device of a home type, to provide a better service for the user. However, after entering an office space, the user expects that only a privacy binding device of an office type can discover the first device, to prevent another unrelated device from learning of existence of the first device. In this way, the user can enable different privacy discovery strategies in the home space and the office space, to meet different privacy requirements of the user in the home space and the office space.

In this embodiment of this application, the privacy discovery strategy enabled by the first device is referred to as a first strategy. An enabling condition of the first strategy may be referred to as a first enabling condition. There may be one or more first strategies. For example, refer to FIG. 3T. The mobile phone 100 enables the strategy 3 and the strategy 4. Refer to FIG. 5D. The Bluetooth headset 106 enables the strategy 1.

Optionally, in S109, the first device notifies a third device of the first strategy, where the third device is a part of privacy binding devices that are in the privacy binding devices of the first device and that comply with the first strategy.

If the first strategy includes an attribute of the electronic device that may change, for example, an account type, an account, a network type, a network identifier, a location, or a group, the third device is a privacy binding device associated with the first strategy, or a privacy binding device whose latest device attribute obtained by the first device complies with the first strategy, or a privacy binding device whose device attribute historically obtained by the first device complies with the first strategy.

If a privacy binding device complies with a privacy discovery strategy in some scenarios, the privacy binding device is associated with the privacy discovery strategy. Specifically, based on the definition of the privacy discovery strategy in S108, it can be learned that some attributes of the electronic device may change with a user operation or an external environment, for example, a logged-in account of the privacy binding device, a connected network, a location, or a group in which the privacy binding device is located. Therefore, in some cases, these attributes of the privacy binding device may comply with the privacy discovery strategy configured by the first device, in other words, the privacy binding device is associated with the privacy discovery strategy.

For example, the strategy 3 is configured in the mobile phone 100, and the strategy 3 indicates Wi-Fi 2, an unlimited location, a same account, and an office device. In this case, the PC 102, as an office device, complies with the strategy 3 when accessing Wi-Fi 2 and logging in to the same account as the first device. Therefore, the strategy 3 is associated with the PC 102.

If the first strategy includes only unchanged attributes of the electronic device, for example, a device type and a device identifier, the third device is a privacy binding device whose unchanged attributes comply with the first strategy, namely, a privacy binding device that currently complies with the first strategy.

In this embodiment of this application, there may be one or more third devices. FIG. 9A and FIG. 9B show one third device as an example.

When connecting to the first device, each privacy binding device of the first device may synchronize a device attribute (for example, an account type, an account, a network type, a network identifier, a location, a device type, a device identifier, or a group) of the privacy binding device to the first device. When the foregoing device attribute changes, the privacy binding device may also update the device attribute synchronized to the first device. In this way, the first device may determine the third device based on the device attribute of each privacy binding device.

The first device may notify the third device of the first strategy specifically in the following two execution manners.

Manner 1: The first device first sends the configured privacy discovery strategy to each privacy binding device, and then notifies the third device of the enabled privacy discovery strategy.

First, when the first device is connected to the privacy binding device, the first device may send the configured privacy discovery strategy to each privacy binding device based on a connection between the first device and each privacy binding device.

The first device may send all privacy discovery strategies configured by the first device to each privacy binding device.

Alternatively, for a privacy binding device, the first device may select, from privacy discovery strategies configured by the first device, a privacy discovery strategy associated with the privacy binding device, and send the privacy discovery strategy to the privacy binding device. In this way, the privacy discovery strategy can be sent in a targeted manner, to reduce interaction between the first device and the privacy binding device, and save communication resources.

In some implementations, the first device is in a connected state when just establishing the privacy binding relationship. In this case, the first device may configure a privacy discovery strategy and send the configured privacy discovery strategy to the privacy binding device. For example, refer to FIG. 3G to FIG. 3T. The mobile phone 100 is in a connected state after establishing a privacy binding relationship with the PC 102. In this case, the mobile phone 100 may configure a privacy discovery strategy, and send the configured privacy discovery strategy (for example, the strategy 1 to the strategy 5) to the PC 102.

In some other implementations, if the first device does not establish a connection to the privacy binding device of the first device, after configuring a privacy discovery strategy, the first device may send the configured privacy discovery strategy to the privacy binding device when connecting to the privacy binding device of the first device next time.

In some other implementations, if the first device does not establish a connection to the privacy binding device of the first device, the first device may prohibit the user from configuring a privacy discovery strategy, to avoid that the configured privacy discovery strategy cannot be sent to the privacy binding device (for example, the second device) in time.

In some implementations, when sending the configured privacy discovery strategy to each privacy binding device, the first device may further send an identifier of the privacy discovery strategy to each privacy binding device together.

Second, when the first device is connected to the privacy binding device, the first device may notify the third device of the enabled first strategy based on a connection between the first device and the third device.

Herein, the first device may notify the third device of the enabled first strategy in the following two manners: 1. The first device directly sends the enabled first strategy to the third device. 2. The first device sends an identifier of the enabled first strategy to the third device.

In some implementations, the first device is in a connected state when just establishing the privacy binding relationship. In this case, the first device may configure and enable a privacy discovery strategy and notify the third device of the enabled privacy discovery strategy. For example, refer to FIG. 3G to FIG. 3T. The mobile phone 100 is in a connected state after establishing a privacy binding relationship with the PC 102. In this case, the mobile phone 100 may configure a privacy discovery strategy, and notify the PC 102 of the enabled privacy discovery strategy (for example, the strategy 3 and the strategy 4).

In some other implementations, if the first device does not establish a connection to the privacy binding device, after enabling a privacy discovery strategy, the first device may notify the third device of the enabled privacy discovery strategy when connecting to the privacy binding device next time.

In some other implementations, if the first device does not establish a connection to the privacy binding device, the first device may prohibit the user from enabling a privacy discovery strategy, to avoid that the third device cannot be notified, in time, of the privacy discovery strategy enabled by the first device.

Manner 2: The first device does not need to first send the configured privacy discovery strategy to each privacy binding device, but directly notifies the third device of the enabled privacy discovery strategy.

For a specific implementation of notifying, by the first device, the third device of the enabled privacy discovery strategy in Manner 2, refer to descriptions of related steps in Manner 1.

When the third device is notified of the first strategy in Manner 2, the first strategy may be sent to the third device only when the first strategy is enabled for the first time, and when the first strategy is enabled again subsequently, only the identifier of the first strategy may be sent to the third device. In this way, resources consumed by communication can be reduced.

Phase 3: Device discovery process.

S110: The first device triggers the device discovery procedure.

The first device may periodically trigger the device discovery procedure. For example, the first device may trigger the device discovery procedure every 10 minutes or half an hour. The periodicity is not limited in embodiments of this application.

Alternatively, the first device may continuously trigger the device discovery procedure.

Alternatively, the first device may trigger the device discovery procedure in response to a received user operation. For example, refer to FIG. 6A and FIG. 6B. When serving as the first device, the mobile phone 100 may detect an operation of swiping down from the top of the display, display the drop-down notification bar 601, then detect a user operation performed on the control 601a, and trigger the device discovery procedure in response to the user operation. For another example, refer to FIG. 7A. When serving as the first device, the Bluetooth headset 106 may detect an operation of opening a headset case by the user, and trigger a subsequent device discovery procedure in response to the user operation.

Alternatively, an application installed on the first device triggers the device discovery procedure. For example, a foreground application or a background application running on the first device may trigger the device discovery procedure when necessary. An occasion for triggering the device discovery procedure by the application may be set by the user, or may be preset by a developer of the application. This is not limited herein.

Alternatively, the first device triggers the device discovery procedure when the first device is in a specific event or at a specific location or accesses a specific network.

A first device that does not have a display or an input component may trigger the device discovery procedure by using a management device of the first device. For example, the first device may trigger the device discovery procedure by using a management device. For example, if the first device is the Bluetooth headset 106, the management device mobile phone 100 of the first device may provide a management interface of the Bluetooth headset, and the user may trigger the device discovery procedure of the Bluetooth headset 106 via the management interface.

The device discovery procedure is subsequent steps S111 and S112.

S111: The first device generates a pseudonymized device identifier based on the privacy parameter, or the first device generates a pseudonymized device identifier based on the privacy parameter and the first strategy.

In this embodiment of this application, the device identifier of the first device may also be referred to as a first identifier. For a definition of the device identifier, refer to related descriptions in S102.

If the first device enables the "privacy discovery" function but does not enable the privacy discovery strategy, the first device may encrypt the device identifier based on the privacy parameter, to obtain the device identifier encrypted by using the privacy parameter, namely, the pseudonymized device identifier.

If the first device enables the "privacy discovery" function and enables the privacy discovery strategy, the first device may encrypt the device identifier based on the privacy parameter and the enabled first strategy, to obtain the device identifier decrypted by using the privacy parameter and the first strategy, namely, the pseudonymized device identifier. Specifically, the first device may first derive a key based on the privacy parameter and the enabled first strategy, and then encrypt the device identifier by using the key, to obtain the pseudonymized device identifier. There may be a plurality of algorithms used by the first device to derive the key based on the privacy parameter and the enabled first strategy. This is not limited herein.

In some implementations, if there are a plurality of first strategies, the first device may separately encrypt the device identifier by using the privacy parameter and each first strategy, to obtain a plurality of pseudonymized device identifiers.

The privacy parameter used by the first device to generate the pseudonymized device identifier may be a symmetric key stored in the first device, or may be a private key in an asymmetric key stored in the first device.

When the privacy parameter is a symmetric key, an encryption algorithm used by the first device to generate the pseudonymized device identifier may be a symmetric encryption algorithm, for example, may include but is not limited to a data encryption standard (data encryption standard, DES), a digital signature algorithm (digital signature algorithm, DSA), an advanced encryption standard (advanced encryption standard, AES), an AES based on a cipher block chaining (cipher block chaining, CBC) mode, and the like.

When the privacy parameter is an asymmetric key, an encryption algorithm used by the first device to generate the pseudonymized device identifier may be an asymmetric encryption algorithm, for example, may include but is not limited to an RSA encryption algorithm, elliptic curves cryptography (elliptic curves cryptography, ECC), and the like.

In some implementations, S111 may be performed after the first device generates the privacy parameter, or may be performed after the first device generates the privacy parameter and enables the first strategy. In some implementations, S 111 may be performed after S110. In some implementations, S111 may be performed each time the first device triggers the device discovery procedure, or may be performed only after the device discovery procedure is triggered for the first time. In addition, after the device discovery procedure is triggered again subsequently, a previously determined pseudonymized device identifier is directly used, and the pseudonymized device identifier does not need to be generated again.

S112: The first device broadcasts the pseudonymized device identifier.

The first device may broadcast the pseudonymized device identifier by using a communication technology like WLAN, Wi-Fi, BT, NFC, IR, ZigBee, UWB, or a cellular network. This is equivalent to that the first device may broadcast the pseudonymized device identifier to a nearby device, or may broadcast the pseudonymized device identifier to a remote device and a cloud device.

In this embodiment of this application, the first device no longer directly broadcasts the device identifier of the first device as in the conventional technology, but broadcasts only the pseudonymized device identifier.

After the first device broadcasts the pseudonymized device identifier, all other devices within a communication range of the first device may receive the pseudonymized device identifier sent by the first device. The other devices may spontaneously and periodically scan the broadcast in a space, or may scan the broadcast in the space after receiving a user operation.

The other devices within the communication range of the first device may include a privacy binding device of the first device (for example, the second device), or may include a common binding device of the first device, or may include a device that is not bound to the first device. There may be one or more common binding devices within the communication range of the first device. There may be one or more unbound devices within the communication range of the first device.

S113: The privacy binding device of the first device or the third device decrypts the pseudonymized device identifier, to obtain the device identifier of the first device.

The following explains specific implementations of S114 by case based on whether the first device enables the privacy discovery strategy, and different manners of generating the pseudonymized device identifier by the first device and identifying the device identifier of the first device by another device.
1. The first device enables the "privacy discovery" function but does not enable the privacy discovery strategy.

In the first case, the first device obtains the pseudonymized device identifier based on the privacy parameter.

Correspondingly, in each device that receives the pseudonymized device identifier broadcast by the first device, the privacy binding device of the first device (for example, the second device) may decrypt the pseudonymized device identifier by using the stored privacy parameter, to obtain the device identifier of the first device, and then discover the first device.

Other devices that receive the pseudonymized device identifier broadcast by the first device, for example, the common binding device of the first device and the device that is not bound to the first device, cannot decrypt the pseudonymized device identifier and cannot discover the first device because the devices cannot learn of the privacy parameter of the first device. Herein, other than the privacy binding device of the first device, another device that receives the pseudonymized device identifier broadcast by the first device may be referred to as a fifth device. The fifth device may include a non-privacy binding device of the first device (for example, a device other than one or more second devices).

In some implementations, if the privacy binding device of the first device further establishes a privacy binding relationship with another device other than the first device, in other words, the privacy binding device of the first device not only stores the privacy parameter of the first device, but also stores a privacy parameter of the another device, the privacy binding device of the first device may traverse the plurality of stored privacy parameters until the pseudonymized device identifier sent by the first device can be decrypted.

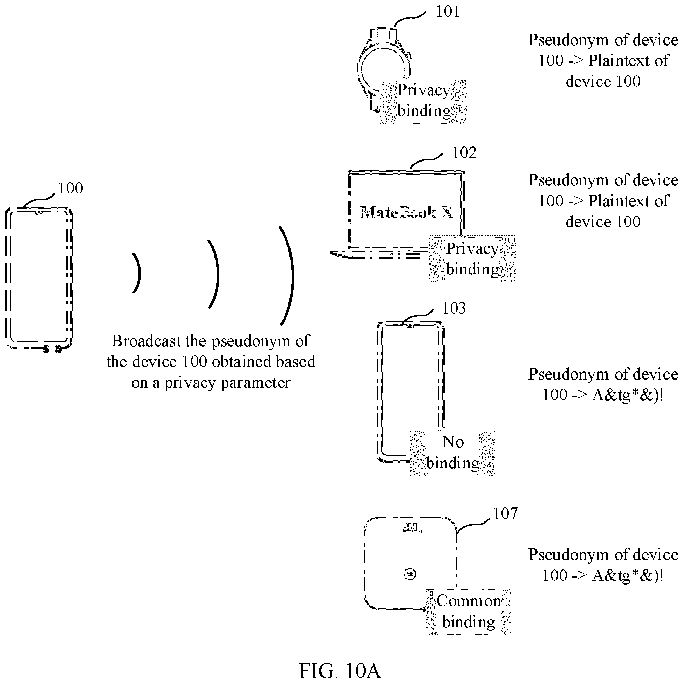

For example, FIG. 10A shows an example of a device discovery scenario in which the first device enables the "privacy discovery" function but does not enable the privacy discovery strategy. FIG. 10A shows only an example of some devices in the communication system 10. The first device is the mobile phone 100. In the figure, the smartwatch 101 and the PC 102 are privacy binding devices of the mobile phone 100, the body fat scale 107 is a common binding device of the mobile phone 100, and the mobile phone 103 is a device that has no binding relationship with the mobile phone 100. As shown in FIG. 10A, after the mobile phone 100 broadcasts the pseudonymized device identifier obtained based on the privacy parameter, the watch 101, the PC 102, the mobile phone 103, and the body fat scale 107 within the communication range of the mobile phone 100 can all receive the pseudonymized device identifier broadcast by the mobile phone 100. Only the privacy binding devices of the mobile phone 100 (including the watch 101 and the PC 102) can obtain the device identifier of the mobile phone 100 through decryption, and other devices can obtain only garbled characters based on the pseudonymized device identifier, and cannot obtain the device identifier of the mobile phone 100.

When the device discovery solution provided in this embodiment of this application is implemented in the first case, only the privacy binding device of the first device can discover the first device, and the first device may be hidden for the non-privacy binding device.

2. The first device enables the "privacy discovery" function and enables the first strategy.

In the second case, the first device obtains the pseudonymized device identifier based on the privacy parameter and the first strategy.

Correspondingly, in each device that receives the pseudonymized device identifier broadcast by the first device, only the third device that learns of the first strategy in S109 can learn of specific content of the first strategy, and can decrypt the pseudonymized device identifier by using the stored privacy parameter of the first device and the first strategy, to obtain the device identifier of the first device, and then discover the first device. Specifically, the third device may first derive a key based on the privacy parameter and the first strategy, and then decrypt the received pseudonymized device identifier by using the key, to obtain the device identifier of the first device.

In other devices that receive the pseudonymized device identifier broadcast by the first device, another privacy binding device that fails to learn of the first strategy can learn of the privacy parameter of the first device, but cannot learn of the first strategy enabled by the first device. Therefore, the another privacy binding device cannot decrypt the pseudonymized device identifier, and cannot discover the first device.

In other devices that receive the pseudonymized device identifier broadcast by the first device, the common binding device of the first device and the device that is not bound to the first device cannot decrypt the pseudonymized device identifier and cannot discover the first device because the devices cannot learn of the privacy parameter of the first device.

Herein, other than a device that complies with the first strategy in the privacy binding device of the first device, another device that receives the pseudonymized device identifier broadcast by the first device may be referred to as an eighth device. The eighth device may include a non-privacy binding device of the first device (for example, a device other than one or more second devices), or may include a device that does not comply with the first strategy (for example, a device other than one or more third devices).

It can be learned from the definition of the third device that learns of the first strategy in S109 that, when the device discovery solution provided in this embodiment of this application is implemented in the second case, if the first strategy includes an attribute of the electronic device that may change, only a privacy binding device that may comply with the first strategy, a privacy binding device whose latest device attribute complies with the first strategy, or a privacy binding device whose historical device attribute complies with the first strategy can discover the first device. If the first strategy includes only an unchanged attribute of the electronic device, only a privacy binding device that complies with the first strategy can discover the first device.

The privacy parameter used to decrypt the pseudonymized device identifier may be a symmetric key, or may be a private key in an asymmetric key.

When the privacy parameter is a symmetric key, the decryption algorithm used to decrypt the pseudonymized device identifier may be an inverse algorithm of the symmetric encryption algorithm used by the first device in S111.

When the privacy parameter is an asymmetric key, the decryption algorithm used to decrypt the pseudonymized device identifier may be an inverse algorithm of the asymmetric encryption algorithm used by the first device in S111.

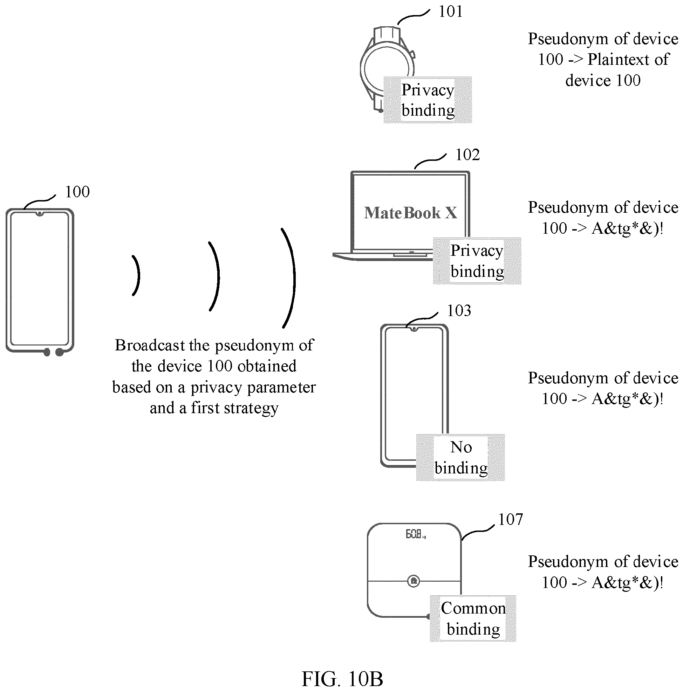

For example, FIG. 10B shows an example of a device discovery scenario in which the first device enables the "privacy discovery" function and enables the first strategy. Similar to FIG. 10A, FIG. 10B shows only an example of some devices in the communication system 10. The first strategy enabled by the mobile phone 100 may include the strategy 4 mentioned in the foregoing UI embodiments. The strategy 4 indicates that the watch, the speaker, and the smart screen can discover the mobile phone 100. After the mobile phone 100 broadcasts the pseudonymized device identifier obtained based on the privacy parameter and the strategy 4, the watch 101 in the privacy binding device of the mobile phone 100 can obtain the device identifier of the mobile phone 100 through decryption, and other devices can obtain only garbled characters based on the pseudonymized device identifier, and cannot obtain the device identifier of the mobile phone 100. In this embodiment of this application, a device that obtains the device identifier of the first device through decryption can perform a further operation based on the obtained device identifier of the first device.

In some implementations, the device that obtains the device identifier of the first device through decryption may display the obtained device identifier of the first device to the user.

For example, refer to FIG. 6C to FIG. 6E. When the mobile phone 100 is used as the first device, the user interface 62 shown in FIG. 6C displayed by the tablet computer 105 displays the device identifier "HUAWEI 30" of the mobile phone 100, and FIG. 6D displayed by the smartwatch 101 displays prompt information indicating that the smartwatch 101 is connected to the mobile phone 100.

For another example, refer to FIG. 7B and FIG. 7C. When the Bluetooth headset 106 is used as the first device, after obtaining the device identifier of the Bluetooth headset 106, the mobile phone 100 may display related information of the Bluetooth headset 106 on the user interface 71. Refer to FIG. 7C. After receiving the pseudonymized device identifier broadcast by the Bluetooth headset 106, the mobile phone 103 cannot identify the device identifier, and therefore cannot display a related identifier of the Bluetooth headset 106 on the user interface.

In this embodiment of this application, a device that can obtain the device identifier of the first device through decryption, for example, the second device or the third device, may display the device identifier of the first device on a first user interface. The first user interface may be, for example, a user interface for discovering another device, or may be a home screen, or the like. An example of the first user interface may be the user interface 62 shown in FIG. 6C, the user interface 63 shown in FIG. 6D, or the user interface 71 shown in FIG. 7B.

A device that cannot obtain the device identifier of the first device through decryption, for example, the fifth device or the eighth device, cannot display the device identifier of the first device when displaying the first user interface. The first user interface may be, for example, a user interface for discovering another device, or may be a home screen, or the like. An example of the first user interface may be the user interface 64 shown in FIG. 6E or the user interface 72 shown in FIG. 7C.

In some implementations, the device that obtains the device identifier of the first device through decryption may establish a communication connection to the first device, and perform further communication, for example, data exchange and device control, based on the communication connection.

A communication connection between the first device and another device may be initiated by the first device, or may be initiated by the another device that discovers the first device. This is not limited herein. The first device or the another device that discovers the first device may initiate a connection under triggering of the user, or may initiate a connection autonomously. For example, refer to FIG. 6C. After receiving a user operation performed on the device identifier "HUAWEI 30" of the mobile phone 100, the tablet computer 105 may initiate a connection request to the mobile phone 100. For another example, refer to FIG. 6E. After receiving a user operation performed on the device identifier "HUAWEI 30" of the mobile phone 100, the mobile phone 103 may initiate a connection request to the mobile phone 100.

In some implementations, before establishing the communication connection to the another device that discovers the first device, the first device may send the trust credential of the first device to the peer device, perform mutual verification on trust credentials with the peer device, and establish the communication connection on a premise that the first device stores the trust credential of the peer device. By mutually verifying trust credentials, a communication connection can be established between mutually trusted devices, to establish a secure connection channel.

After the first device establishes a connection to the device that discovers the first device (for example, the second device or the third device), if another device wants to connect to the device that discovers the first device, there may be the following interaction cases.

First, when the first device enables the "privacy discovery" function but does not enable the privacy discovery strategy, for a solution in which the privacy binding device of the first device (for example, the second device) discovers the first device, there are the following several cases:
1. After the first device is connected to the second device, another privacy binding device of the first device preempts the second device, and the another privacy binding device may be referred to as a fourth device.
   Specifically, after the first device establishes a communication connection to the second device, if the fourth device discovers the second device, the fourth device may send a connection request to the second device. Then, the second device sends a first verification request to the first device, where the first verification request indicates that the second device receives the connection request initiated by the fourth device. The first device sends a first message to the second device when it is verified that the fourth device stores the privacy parameter of the first device (that is, the fourth device is the privacy binding device of the first device), where the first message indicates that the second device agrees with the connection request. Then, the second device disconnects the communication connection to the first device, and establishes a communication connection to the fourth device.
2. After the first device is connected to the second device, a non-privacy binding device of the first device attempts to connect to the second device, and the attempt is rejected.

The non-privacy binding device of the first device may also be referred to as a fifth device.

Specifically, after the first device establishes a communication connection to the second device, if the fifth device discovers the second device, the fifth device may send a connection request to the second device. Then, the second device sends a second verification request to the first device, where the second verification request indicates that the second device receives the connection request initiated by the fifth device. The first device sends a second message to the second device when it is verified that the fifth device does not store the privacy parameter of the first device (that is, it is verified that the fifth device is a non-privacy binding device), where the second message indicates that the second device rejects the connection request. Then, the second device rejects the connection request initiated by the fifth device.

3. After the first device is connected to the second device, another device attempts to connect to the second device. After the user agrees, the another device may connect to the second device.

The another device may be a privacy binding device of the first device, or may be a non-privacy binding device (for example, a common binding device or an unbound device) of the first device. The another device may be referred to as a sixth device.

Specifically, after the first device establishes a communication connection to the second device, if the sixth device discovers the second device, the sixth device may send a connection request to the second device. Then, the second device sends a third verification request to the first device, where the third verification request indicates that the second device receives the connection request initiated by the sixth device. Then, the first device may prompt the user of the connection request. If the first device receives a user operation for agreeing with the connection request, the first device sends the first message to the second device, where the first message indicates that the second device agrees with the connection request. Then, the second device disconnects the communication connection to the first device, and establishes a communication connection to the fourth device.

4. After the first device is connected to the second device, the sixth device attempts to connect to the second device. After a plurality of attempts, the sixth device may connect to the second device.

Specifically, after the first device establishes a communication connection to the second device, if the sixth device discovers the second device, the sixth device may send a connection request to the second device. Then, the second device sends a fourth verification request to the first device, where the third verification request indicates that the second device receives the connection request initiated by the sixth device. If the first device receives the fourth verification request that is sent by the second device more than a preset quantity of times, the first device may send the first message to the second device, where the first message indicates that the second device agrees with the connection request. Then, the second device disconnects the communication connection to the first device, and establishes a communication connection to the fourth device.

5. After the first device is connected to the second device, the first device discovers the sixth device, and may actively switch to connect the second device to the sixth device.

Specifically, after the first device establishes a communication connection to the second device, if the first device discovers the sixth device, the first device may send a switching instruction to the second device, where the switching instruction instructs the second device to disconnect the communication connection to the first device and establish a communication connection to the sixth device.

Second, when the first device enables the "privacy discovery" function and enables the first strategy, for a solution in which the third device discovers the first device, there are the following several cases.
1. After the first device is connected to the third device, another privacy binding device that complies with the first strategy and that is of the first device preempts the third device, and the another privacy binding device that complies with the first strategy may be referred to as a seventh device.
   Specifically, after the first device establishes a communication connection to the third device, if the seventh device discovers the third device, the seventh device may send a connection request to the third device. Then, the third device sends a fifth verification request to the first device, where the fifth verification request indicates that the third device receives the connection request initiated by the seventh device. The first device sends a first message to the third device when it is verified that the seventh device stores the privacy parameter of the first device and the first strategy (that is, the seventh device complies with the first strategy and is the privacy binding device of the first device), where the first message indicates that the third device agrees with the connection request. Then, the third device disconnects the communication connection to the first device, and establishes a communication connection to the seventh device.
2. After the first device is connected to the third device, a device that does not comply with the first strategy and/or a non-privacy binding device attempt/attempts to connect to the third device, and the attempt is rejected.

The device that does not comply with the first strategy and/or the non-privacy binding device may also be referred to as an eighth device.

Specifically, after the first device establishes a communication connection to the third device, if the eighth device discovers the third device, the eighth device may send a connection request to the third device. Then, the third device sends a sixth verification request to the first device, where the sixth verification request indicates that the third device receives the connection request initiated by the eighth device. The first device sends a second message to the third device when it is verified that the eighth device does not store the privacy parameter of the first device and the first strategy (that is, it is verified that the eighth device does not comply with the first strategy and/or is a non-privacy binding device), where the second message indicates that the third device rejects the connection request. Then, the third device rejects the connection request initiated by the eighth device.

3. After the first device is connected to the third device, another device attempts to connect to the third device. After the user agrees, the another device may connect to the third device.

The another device may be a privacy binding device of the first device, or may be a non-privacy binding device (for example, a common binding device or an unbound device) of the first device, or may be a device that complies with the first strategy, or may be a device that does not comply with the first strategy. The another device may be referred to as a ninth device.

Specifically, after the first device establishes a communication connection to the third device, if the ninth device discovers the third device, the ninth device may send a connection request to the third device. Then, the third device sends a seventh verification request to the first device, where the seventh verification request indicates that the third device receives the connection request initiated by the ninth device. Then, the first device may prompt the user of the connection request. If the first device receives a user operation for agreeing with the connection request, the first device sends the first message to the third device, where the first message indicates that the third device agrees with the connection request. Then, the third device disconnects the communication connection to the first device, and establishes a communication connection to the seventh device.

4. After the first device is connected to the third device, the ninth device attempts to connect to the third device. After a plurality of attempts, the ninth device may connect to the third device.

Specifically, after the first device establishes a communication connection to the third device, if the ninth device discovers the third device, the ninth device may send a connection request to the third device. Then, the third device sends an eighth verification request to the first device, where the seventh verification request indicates that the third device receives the connection request initiated by the ninth device. If the first device receives the eighth verification request that is sent by the third device more than a preset quantity of times, the first device may send the first message to the third device, where the first message indicates that the third device agrees with the connection request. Then, the third device disconnects the communication connection to the first device, and establishes a communication connection to the seventh device.

5. After the first device is connected to the third device, the first device discovers the ninth device, and may actively switch to connect the third device to the ninth device.

Specifically, after the first device establishes a communication connection to the third device, if the first device discovers the ninth device, the first device may send a switching instruction to the third device, where the switching instruction instructs the third device to disconnect the communication connection to the first device and establish a communication connection to the ninth device.

The device discovery method shown in FIG. 9A and FIG. 9B is merely an example, and does not constitute a limitation on this application. FIG. 9A and FIG. 9B show only an example of a sequence of the steps. A sequence of the steps during specific implementation is not limited in embodiments of this application. For example, after the phase 2, each step in the phase 1 may be performed again, to bind a new privacy binding device to the first device. For another example, the phase 2 may alternatively be performed after S110 in the phase 3.

According to the device discovery method provided in the foregoing embodiments, a first device can pseudonymize a device identifier of the first device and then broadcast a pseudonymized device identifier, so that only a privacy binding device of the first device can discover the first device, to prevent a non-privacy binding device from discovering the first device. Therefore, a malicious device cannot collect a device identifier of a user from listened information, and listen and track a movement track of the user, thereby avoiding a privacy risk.

Further, the first device enables a privacy discovery strategy, and only a privacy binding device that complies with the privacy discovery strategy can discover the first device. In this way, the user can limit an exposure range of the first device to a specific range, to further protect privacy security of the device and the user.

According to the foregoing method, the user may further flexibly configure the privacy discovery strategy, to flexibly control a visible range of an electronic device in each device, and select an exposure range of the electronic device, thereby achieving an effect of enhancing privacy.

It should be understood that the steps in the foregoing method embodiments may be completed by using an integrated logic circuit of hardware in the processor or instructions in a form of software. The steps of the method disclosed with reference to embodiments of this application may be directly performed by a hardware processor, or may be performed through a combination of hardware in the processor and a software module.

This application further provides an electronic device. The electronic device may include a memory and a processor. The memory may be configured to store a computer program. The processor may be configured to invoke the computer program in the memory, so that the electronic device performs the method performed by the first device in any one of the foregoing embodiments.

This application further provides an electronic device. The electronic device may include a memory and a processor. The memory may be configured to store a computer program. The processor may be configured to invoke the computer program in the memory, so that the electronic device performs the method performed by a privacy binding device of the first device or some privacy binding devices of the first device in any one of the foregoing embodiments.

This application further provides a chip system. The chip system includes at least one processor, configured to implement functions related to the first device, a privacy binding device of the first device, or some privacy binding devices of the first device in any one of the foregoing embodiments.

In a possible design, the chip system further includes a memory, the memory is configured to store program instructions and data, and the memory is located inside or outside the processor.

The chip system may include a chip, or may include a chip and another discrete component.

Optionally, there may be one or more processors in the chip system. The processor may be implemented by using hardware, or may be implemented by using software. When the processor is implemented by using the hardware, the processor may be a logic circuit, an integrated circuit, or the like. When the processor is implemented by using the software, the processor may be a general-purpose processor, and is implemented by reading software code stored in the memory.

Optionally, there may also be one or more memories in the chip system. The memory may be integrated with the processor, or may be disposed separately from the processor. This is not limited in embodiments of this application. For example, the memory may be a non-transitory processor, for example, a read-only memory ROM. The memory and the processor may be integrated into a same chip, or may be separately disposed on different chips. A type of the memory and a manner of disposing the memory and the processor are not specifically limited in embodiments of this application.

For example, the chip system may be a field programmable gate array (field programmable gate array, FPGA), an application-specific integrated circuit (application-specific integrated circuit, ASIC), a system on chip (system on chip, SoC), a central processing unit (central processing unit, CPU), a network processor (network processor, NP), a digital signal processor (digital signal processor, DSP), a microcontroller unit (microcontroller unit, MCU), a programmable logic device (programmable logic device, PLD), or another integrated chip.

This application further provides a computer program product, and the computer program product includes a computer program (which may also be referred to as code or an instruction). When the computer program is run, a computer is enabled to perform the method performed by the first device, a privacy binding device of the first device, or some privacy binding devices of the first device in any one of the foregoing embodiments.

This application further provides a computer-readable storage medium. The computer-readable storage medium stores a computer program (which may also be referred to as code or an instruction). When the computer program is run, a computer is enabled to perform the method performed by the first device, a privacy binding device of the first device, or some privacy binding devices of the first device in any one of the foregoing embodiments.

The implementations of this application may be randomly combined to achieve different technical effects.

All or some of the foregoing embodiments may be implemented by using software, hardware, firmware, or any combination thereof. When software is used for implementation, all or some of the embodiments may be implemented in a form of a computer program product. The computer program product includes one or more computer instructions. When the computer program instructions are loaded and executed on a computer, the procedure or functions according to this application are all or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a DVD), a semiconductor medium (for example, a solid state disk (solid state disk, SSD)), or the like.

Persons of ordinary skill in the art may understand that all or some of the processes of the methods in embodiments may be implemented by a computer program instructing related hardware. The program may be stored in a computer-readable storage medium. When the program is run, the processes of the methods in embodiments may be performed. The foregoing storage medium includes any medium that can store program code, for example, a ROM, a random access memory RAM, a magnetic disk, or an optical disc.

In conclusion, the foregoing descriptions are merely embodiments of the technical solutions of this application, but are not intended to limit the protection scope of this application. Any modification, equivalent replacement, and improvement made according to the disclosure of this application shall fall within the protection scope of this application.

## Claims

1. A device discovery method, wherein the method is applied to a communication system, the communication system comprises a first device, a second device, and a fifth device, and the method comprises:
broadcasting, by the first device, only a first identifier encrypted by using a privacy parameter, wherein the first identifier is a device identifier of the first device;
receiving, by the second device, the encrypted first identifier broadcast by the first device, displaying a first user interface, and displaying the first identifier on the first user interface; and
receiving, by the fifth device, the encrypted first identifier broadcast by the first device, and displaying the first user interface, wherein the displayed first user interface does not comprise the first identifier.

2. The method according to claim 1, wherein
before the broadcasting, by the first device, a first identifier encrypted by using a privacy parameter, the method further comprises: sending, by the first device, the privacy parameter to one or more devices, wherein the one or more devices comprise the second device but do not comprise the fifth device; and
before the displaying, by the second device, the first identifier on the first user interface, the method further comprises: decrypting, by the second device, the encrypted first identifier by using the privacy parameter, to obtain the first identifier.

3. A device discovery method, wherein the method is applied to a first device, and the method comprises:
encrypting, by the first device, a first identifier by using a privacy parameter, wherein the first identifier is a device identifier of the first device; and
broadcasting, by the first device, only the encrypted first identifier.

4. The method according to claim 3, wherein before the broadcasting, by the first device, the encrypted first identifier, the method further comprises:
sending, by the first device, the privacy parameter to one or more devices, wherein the one or more devices comprise a second device but do not comprise a fifth device.

5. The method according to any one of claims 1 to 4, wherein the privacy parameter is preset in the first device, or the privacy parameter is generated by the first device based on one or more of the first identifier, a logged-in account, a digital certificate, or a pairing key.

6. The method according to claim 2 or 4, wherein before the sending, by the first device, the privacy parameter to one or more devices, the method further comprises:
displaying, by the first device, a second user interface, wherein device identifiers of the one or more devices discovered by the first device are displayed on the second user interface, and the device identifiers of the one or more devices comprise a device identifier of the second device;
receiving, by the first device, a user operation performed on the device identifier of the second device, and displaying a third user interface, wherein prompt information and a first control are displayed on the third user interface, and the prompt information prompts a user to perform privacy binding on the first device and the second device; and
receiving, by the first device, a first operation performed on the first control.

7. The method according to any one of claims 1 to 6, wherein before the broadcasting, by the first device, the encrypted first identifier, the method further comprises:
detecting, by the first device, a second operation for enabling a first function; and
enabling, by the first device, the first function in response to the second operation, wherein the first function is used by the first device to broadcast the encrypted first identifier.

8. The method according to claim 7, wherein before the detecting, by the first device, a first operation for enabling a first function, the method further comprises:
displaying, by the first device, a fourth user interface, wherein a second control is displayed on the fourth user interface, wherein
the second operation comprises a user operation performed on the second control.

9. The method according to claim 7 or 8, wherein before the enabling, by the first device, the first function, the method further comprises:
broadcasting, by the first device, the first identifier.

10. The method according to any one of claims 1 to 8, wherein after the broadcasting, by the first device, the encrypted first identifier, the method further comprises:
establishing, by the first device, a communication connection to the second device;
receiving, by the first device, a first verification request sent by the second device, wherein the first verification request indicates that the second device receives a connection request initiated by a fourth device; and
when it is verified that the fourth device stores the privacy parameter of the first device, sending, by the first device, a first message to the second device, wherein the first message indicates that the second device agrees with the connection request.

11. The method according to any one of claims 1 to 8, wherein after the broadcasting, by the first device, the encrypted first identifier, the method further comprises:
establishing, by the first device, a communication connection to the second device;
receiving, by the first device, a second verification request sent by the second device, wherein the second verification request indicates that the second device receives a connection request initiated by the fifth device; and
when it is verified that the fifth device does not store the privacy parameter of the first device, sending, by the first device, a second message to the second device, wherein the second message indicates that the second device rejects the connection request.

12. The method according to any one of claims 1 to 8, wherein after the broadcasting, by the first device, the encrypted first identifier, the method further comprises:
establishing, by the first device, a communication connection to the second device;
receiving, by the first device, a third verification request sent by the second device, wherein the third verification request indicates that the second device receives a connection request initiated by a sixth device;
receiving, by the first device, a user operation for agreeing with the connection request; and
sending, by the first device, a first message to the second device, wherein the first message indicates that the second device agrees with the connection request.

13. The method according to any one of claims 1 to 8, wherein after the broadcasting, by the first device, the encrypted first identifier, the method further comprises:
establishing, by the first device, a communication connection to the second device;
receiving, by the first device, a fourth verification request that is sent by the second device more than a preset quantity of times, wherein the fourth verification request indicates that the second device receives a connection request initiated by a sixth device; and
sending, by the first device, a first message to the second device, wherein the first message indicates that the second device agrees with the connection request.

14. The method according to any one of claims 1 to 8, wherein after the broadcasting, by the first device, the encrypted first identifier, the method further comprises:
establishing, by the first device, a communication connection to the second device;
discovering, by the first device, a sixth device; and
sending, by the first device, a switching instruction to the second device, wherein the switching instruction instructs the second device to disconnect the communication connection to the first device and establish a communication connection to the sixth device.

15. A device discovery method, wherein the method is applied to a second device, and the method comprises:
receiving, by the second device, a first identifier that is broadcast by a first device and that is encrypted by using a privacy parameter, wherein the first identifier is a device identifier of the first device; and
displaying, by the second device, a first user interface, and displaying the first identifier on the first user interface.

16. The method according to claim 15, wherein
before the receiving, by the second device, a first identifier that is broadcast by a first device and that is encrypted by using a privacy parameter, the method further comprises: receiving, by the second device, the privacy parameter sent by the first device; and
before the displaying, by the second device, the first identifier on the first user interface, the method further comprises: decrypting, by the second device, the encrypted first identifier by using the privacy parameter, to obtain the first identifier.

17. The method according to claim 15 or 16, wherein after the displaying, by the second device, a first user interface, the method further comprises:
establishing, by the second device, a communication connection to the first device based on the first identifier.

18. A device discovery method, wherein the method is applied to a communication system, the communication system comprises a first device, a third device, and an eighth device, and the method comprises:
broadcasting, by the first device, only a first identifier encrypted by using a privacy parameter and a first strategy, wherein the first identifier is a device identifier of the first device;
receiving, by the third device, the encrypted first identifier broadcast by the first device, displaying a first user interface, and displaying the first identifier on the first user interface; and
receiving, by the eighth device, the encrypted first identifier broadcast by the first device, and displaying the first user interface, wherein the displayed first user interface does not comprise the first identifier.

19. The method according to claim 18, wherein before the broadcasting, by the first device, a first identifier encrypted by using a privacy parameter and a first strategy, the method further comprises:
sending, by the first device, the privacy parameter to only one or more second devices; and
sending, by the first device, the first strategy to only one or more devices, wherein the one or more devices comprise the third device but do not comprise the eighth device, wherein
the third device comprises a device that meets a condition indicated by the first strategy and that is in the one or more second devices, and the eighth device comprises a device other than the third device in the one or more second devices and a device other than the second device; and
before the displaying, by the third device, the first identifier on the first user interface, the method further comprises: decrypting, by the third device, the encrypted first identifier by using the privacy parameter and the first strategy, to obtain the first identifier.

20. A device discovery method, wherein the method is applied to a first device, and the method comprises:
encrypting, by the first device, a first identifier by using a privacy parameter and a first strategy, wherein the first identifier is a device identifier of the first device; and
broadcasting, by the first device, only the encrypted first identifier.

21. The method according to claim 20, wherein before the broadcasting, by the first device, the encrypted first identifier, the method further comprises:
sending, by the first device, the privacy parameter to only one or more second devices; and
sending, by the first device, the first strategy to only one or more devices, wherein the one or more devices comprise a third device but do not comprise an eighth device, wherein
the third device comprises a device that meets a condition indicated by the first strategy and that is in the one or more second devices, and the eighth device comprises a device other than the third device in the one or more second devices and a device other than the second device.

22. The method according to any one of claims 18 to 21, wherein the privacy parameter is preset in the first device, or the privacy parameter is generated by the first device based on one or more of the first identifier, a logged-in account, a digital certificate, or a pairing key.

23. The method according to any one of claims 18 to 22, wherein the first strategy indicates any one or more of the following: an account type, an account, a network type, a network, a location, a device type, a device, or a group.

24. The method according to any one of claims 18 to 23, wherein the first strategy is preset by the first device, or is set by a user.

25. The method according to any one of claims 18 to 24, wherein the first strategy corresponds to a first enabling condition, and the first enabling condition is met when the first device broadcasts the encrypted first identifier.

26. The method according to any one of claims 18 to 25, wherein the third device is specifically any one of the following:
a device that meets a condition indicated by the first strategy in a part of scenarios;
a device that historically meets a condition indicated by the first strategy;
a device that meets a condition indicated by the first strategy when the first device is connected most recently; or
a device that currently meets a condition indicated by the first strategy.

27. The method according to claim 19 or 21, wherein before the sending, by the first device, the privacy parameter to one or more devices, the method further comprises:
displaying, by the first device, a second user interface, wherein device identifiers of the one or more devices discovered by the first device are displayed on the second user interface, and the device identifiers of the one or more devices comprise a device identifier of the second device;
receiving, by the first device, a user operation performed on the device identifier of the second device, and displaying a third user interface, wherein prompt information and a first control are displayed on the third user interface, and the prompt information prompts a user to perform privacy binding on the first device and the second device; and
receiving, by the first device, a first operation performed on the first control.

28. The method according to any one of claims 18 to 27, wherein before the broadcasting, by the first device, the encrypted first identifier, the method further comprises:
detecting, by the first device, a second operation for enabling a first function; and
enabling, by the first device, the first function in response to the second operation, wherein the first function is used by the first device to broadcast the encrypted first identifier.

29. The method according to claim 28, wherein before the detecting, by the first device, a first operation for enabling a first function, the method further comprises:
displaying, by the first device, a fourth user interface, wherein a second control is displayed on the fourth user interface, wherein
the second operation comprises a user operation performed on the second control.

30. The method according to claim 28 or 29, wherein before the enabling, by the first device, the first function, the method further comprises:
broadcasting, by the first device, the first identifier.

31. The method according to any one of claims 18 to 30, wherein after the broadcasting, by the first device, the encrypted first identifier, the method further comprises:
establishing, by the first device, a communication connection to the third device;
receiving, by the first device, a fifth verification request sent by the third device, wherein the fifth verification request indicates that the second device receives a connection request initiated by a seventh device; and
when it is verified that the seventh device stores the privacy parameter of the first device and the first strategy, sending, by the first device, a first message to the third device, wherein the first message indicates that the third device agrees with the connection request.

32. The method according to any one of claims 18 to 30, wherein after the broadcasting, by the first device, the encrypted first identifier, the method further comprises:
establishing, by the first device, a communication connection to the third device;
receiving, by the first device, a sixth verification request sent by the third device, wherein the sixth verification request indicates that the third device receives a connection request initiated by the eighth device; and
when it is verified that the eighth device does not store the privacy parameter of the first device and the first strategy, sending, by the first device, a second message to the third device, wherein the second message indicates that the third device rejects the connection request.

33. The method according to any one of claims 18 to 30, wherein after the broadcasting, by the first device, the encrypted first identifier, the method further comprises:
establishing, by the first device, a communication connection to the third device;
receiving, by the first device, a seventh verification request sent by the third device, wherein the seventh verification request indicates that the second device receives a connection request initiated by a ninth device;
receiving, by the first device, a user operation for agreeing with the connection request; and
sending, by the first device, a first message to the third device, wherein the first message indicates that the third device agrees with the connection request.

34. The method according to any one of claims 18 to 30, wherein after the broadcasting, by the first device, the encrypted first identifier, the method further comprises:
establishing, by the first device, a communication connection to the second device;
receiving, by the first device, an eighth verification request that is sent by the second device more than a preset quantity of times, wherein the eighth verification request indicates that the second device receives a connection request initiated by a ninth device; and
sending, by the first device, a first message to the second device, wherein the first message indicates that the second device agrees with the connection request.

35. The method according to any one of claims 18 to 30, wherein after the broadcasting, by the first device, the encrypted first identifier, the method further comprises:
establishing, by the first device, a communication connection to the third device;
discovering, by the first device, a ninth device; and
sending, by the first device, a switching instruction to the third device, wherein the switching instruction instructs the third device to disconnect the communication connection to the first device and establish a communication connection to the ninth device.

36. A device discovery method, wherein the method is applied to a third device, and the method comprises:
receiving, by the third device, a first identifier that is broadcast by a first device and that is encrypted by using a privacy parameter and an enabled first strategy, wherein the first identifier is a device identifier of the first device; and
displaying, by the third device, a first user interface, and displaying the first identifier on the first user interface.

37. The method according to claim 36, wherein
before the receiving, by the third device, a first identifier that is broadcast by a first device and that is encrypted by using a privacy parameter and an enabled first strategy, the method further comprises: receiving, by the third device, the privacy parameter and the first strategy that are sent by the first device; and
before the displaying, by the third device, the first identifier on the first user interface, the method further comprises: decrypting, by the third device, the encrypted first identifier by using the privacy parameter and the first strategy, to obtain the first identifier.

38. The method according to claim 37, wherein after the displaying, by the third device, a first user interface, the method further comprises:
establishing, by the third device, a communication connection to the first device based on the first identifier.

39. An electronic device, comprising a memory and one or more processors, wherein the memory is coupled to the one or more processors, the memory is configured to store computer program code, the computer program code comprises computer instructions, and the one or more processors invoke the computer instructions to enable the electronic device to perform the method according to any one of claims 3 to 14, claims 15 to 17, claims 20 to 35, or claims 36 to 38.

40. A communication system, wherein the communication system comprises a first device and a second device, the first device is configured to perform the method according to any one of claims 3 to 14, and the second device is configured to perform the method according to any one of claims 15 to 17.

41. A communication system, wherein the communication system comprises a first device and a third device, the first device is configured to perform the method according to any one of claims 20 to 35, and the third device is configured to perform the method according to any one of claims 36 to 38.

42. A computer-readable storage medium, comprising instructions, wherein when the instructions are run on an electronic device, the electronic device is enabled to perform the method according to any one of claims 3 to 14, claims 15 to 17, claims 20 to 35, or claims 36 to 38.

43. A computer program product, wherein the computer program product comprises computer instructions, and when the computer instructions are run on an electronic device, the electronic device is enabled to perform the method according to any one of claims 3 to 14, claims 15 to 17, claims 20 to 35, or claims 36 to 38.
